# EUROPÄISCHE PATENTANMELDUNG

(11) **EP 4 807 217 A1**
(43) Veröffentlichungstag der Anmeldung: **16.09.2026**
(21) Anmeldenummer: 25162498.7
(22) Anmeldetag: 10.03.2025
(51) Int. Cl.: F16H 47/04, B60K 1/02

(54) **ANTRIEBSVORRICHTUNG, GETRIEBEGEHÄUSEANORDNUNG UND ARBEITSMASCHINE**

(71) Anmelder: Deere & Company, Moline, IL 61265 (US)
(72) Erfinder: MANN, MANUEL, 68163 Mannheim (DE)
(74) Vertreter: Stein, Stefan

(57) **Zusammenfassung**

Die Erfindung betrifft eine Antriebsvorrichtung (20) für eine Arbeitsmaschine (10) oder eine Getriebegehäuseanordnung (900). Die Antriebsvorrichtung (20) umfasst einen Antrieb (52) und einen Abtrieb (54) und einen ersten und zweiten Variator (70, 74) und eine erste Übersetzungseinheit (56), die als ein Planetenkoppelgetriebe (300) mit einer ersten und zweiten Eingangsseite (72, 78) und einer ersten und zweiten Ausgangsseite (82, 84) ausgebildet ist. Der erste Variator (70) ist mit dem Antrieb (52) verbindbar und der zweite Variator (74) ist mit der zweiten Eingangsseite (78) verbunden. Die Antriebsvorrichtung (20) umfasst eine zweite Übersetzungseinheit (58) mit einer dritten und vierten Eingangsseite (86, 88) und mindestens einer dritten Ausgangsseite (90). Die erste Ausgangsseite (82) ist mit der dritten Eingangsseite (86) und/oder die zweite Ausgangsseite (84) mit der vierten Eingangsseite (88) verbindbar. Die zweite Übersetzungseinheit (58) ist, insbesondere die dritte Ausgangsseite (90), mit dem Abtrieb (58) verbindbar. Die Erfindung betrifft weiter eine Arbeitsmaschine (10) und eine Getriebegehäuseanordnung (900).

## Beschreibung

Die Erfindung betrifft eine Antriebsvorrichtung gemäss dem Oberbegriff des unabhängigen Anspruchs 1, eine Getriebegehäuseanordnung gemäss dem Oberbegriff des unabhängigen Anspruchs 11 und eine Arbeitsmaschine gemäss dem Oberbegriff des unabhängigen Anspruchs 14.

Seit langem kommen in Arbeitsmaschinen, insbesondere landwirtschaftlichen Zugfahrzeugen Antriebsvorrichtungen zum Einsatz, um den Vortrieb der Arbeitsmaschine auch unter hoher Zuglast, beispielsweise verursacht durch ein daran angebautes Arbeitsgerät wie ein Bodenbearbeitungsgerät (z.B. Pflug) oder dergleichen, über eine bloße Veränderung der Antriebsmotordrehzahl hinaus unterbrechungsfrei verändern zu können. Die Antriebsvorrichtung kann dabei insbesondere ein unter Last schaltbarer Getriebe sein. Eine bekannte Maßnahme ist es, die Anzahl Gangstufen einer Antriebsvorrichtung zu erhöhen, indem diese eine Kombination von Getrieben umfasst. Die DE 10 2013 110 709 A1 offenbart eine solche Antriebsvorrichtung. Die dabei verwendeten Getriebe wiederum können aus der WO 2009/050078 A2 als Doppelkupplungsgetriebe bekannt sein. Aus der DE 10 2013 110 709 A1 ist weiter bekannt, dass sich mit einer solchen Antriebsvorrichtung die Anzahl der verfügbaren Übersetzungen erhöhen lässt. Nachteilig an den bekannten Antriebsvorrichtungen ist, dass der benötigte Einbauraum zu gross. Ebenso fehlt eine Modularität der Antriebsvorrichtung, welche eine Anpassung der Antriebsvorrichtung auf die jeweilige Arbeitsmaschine ermöglicht.

Ausgehend von diesem Stand der Technik ist es eine Aufgabe der vorliegenden Erfindung eine gegenüber dem Stand der Technik verbesserte Antriebsvorrichtung, Getriebegehäuseanordnung und Arbeitsmaschine vorzuschlagen. Im Speziellen kann es eine Aufgabe der vorliegenden Erfindung sein, eine Antriebsvorrichtung und/oder eine Getriebegehäuseanordnung und/oder eine Arbeitsmaschine vorzuschlagen, die konstruktiv einfacher und/oder kompakter und/oder modularer ausgestaltet sind.

Diese Aufgabe wird durch eine Antriebsvorrichtung mit den Merkmalen des Anspruchs 1 und einer Getriebegehäuseanordnung mit den Merkmalen des Anspruchs 11 und eine Arbeitsmaschine mit den Merkmalen des Anspruchs 14 gelöst. Die abhängigen Ansprüche beziehen sich auf besonders vorteilhafte Ausführungsformen der Erfindung.

Erfindungsgemäss wird eine Antriebsvorrichtung für eine Arbeitsmaschine oder eine Getriebegehäuseanordnung vorgeschlagen.

Die Antriebsvorrichtung umfasst einen Antrieb, insbesondere eine Antriebswelle, und einen Abtrieb, insbesondere eine Abtriebswelle, und einen ersten und zweiten Variator, und eine erste Übersetzungseinheit, die als ein Planetenkoppelgetriebe mit einer ersten und zweiten Eingangsseite und einer ersten und zweiten Ausgangsseite ausgebildet ist. Der erste Variator ist mit dem Antrieb verbindbar oder verbunden ist und der zweite Variator ist mit der zweiten Eingangsseite verbindbar oder verbunden. Die Antriebsvorrichtung umfasst weiter eine zweite Übersetzungseinheit mit einer dritten und vierten Eingangsseite und mindestens einer dritten Ausgangsseite. Die erste Ausgangsseite ist mit der dritten Eingangsseite und/oder die zweite Ausgangsseite mit der vierten Eingangsseite verbindbar oder verbunden. Die zweite Übersetzungseinheit, insbesondere die dritte Ausgangsseite, ist mit dem Abtrieb verbindbar oder verbunden.

Unter verbunden kann bevorzugt mechanisch verbunden und/oder mechanisch wirkverbunden verstanden werden. Im Speziellen kann unter verbunden zusätzlich oder alternativ antreibbar verbunden, also drehmoment- und/oder drehzahlübertragend verbunden, und/oder gekoppelt, also insbesondere mechanisch gekoppelt und/oder starr gekoppelt, und/oder drehfest gekoppelt verstanden werden. Unter verbindbar kann bevorzugt mechanisch verbindbar und/oder mechanisch wirkverbindbar verstanden werden. Im Speziellen kann unter verbindbar zusätzlich oder alternativ antreibbar verbindbar, also drehmoment- und/oder drehzahlübertragend verbindbar, und/oder koppelbar, also mechanisch koppelbar und/oder starr koppelbar, und/oder drehfest verbindbar verstanden werden. Unter verbunden kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Unter einem Schaltelement, insbesondere das erste und/oder zweite und/oder dritte und/oder vierte und/oder einem fünften und/oder sechsten und/oder siebten und/oder achten und/oder neunten und/oder zehnten Schaltelement, kann ein Verbindungsteil verstanden werden, mittels dem wenigstens ein eine Energie und/oder Kraft und/oder ein Drehmoment und/oder eine Drehzahl übertragendes Teil mit einem weiteren eine Energie und/oder Kraft und/oder ein Drehmoment und/oder eine Drehzahl übertragenden Teil oder mit einem orts- oder gehäusefesten Teil antriebswirksam verbindbar ist. Das jeweilige Schaltelement ist zwischen zumindest einen geöffneten und einen geschlossenen Zustand schaltbar, wobei das Schaltelement im geöffneten Zustand weder eine Energie und/oder Kraft und/oder ein Drehmoment und/oder eine Drehzahl zwischen zwei mit dem Schaltelement zusammenwirkenden Teilen übertragen kann, und wobei das Schaltelement im geschlossenen Zustand eine Energie und/oder Kraft und/oder ein Drehmoment und/oder eine Drehzahl zwischen den zwei mit dem Schaltelement zusammenwirkenden Teilen übertragen kann. Sofern eine Verbindung, insbesondere eine Wirkverbindung, zwischen zwei Elementen oder Komponenten der Antriebsvorrichtung besteht, werden Energie und/oder Kraft und/oder ein Drehmoment und/oder eine Drehzahl von einem Element oder einer Komponente auf das andere Element oder die andere Komponente übertragen. Ein Schaltelement, insbesondere das erste und/oder zweite und/oder dritte und/oder vierte und/oder fünfte und/oder sechste und/oder siebte und/oder achte und/oder neunte und/oder zehnte Schaltelement, können eine Kupplung, insbesondere eine Lamellenkupplung, und/oder eine Bremse und/oder eine Synchronisierung und/oder eine Klauenkupplung sein. Im Speziellen können das erste und/oder zweite und/oder dritte und/oder vierte und/oder fünfte und/oder sechste und/oder siebte und/oder achte und/oder neunte und/oder zehnte Schaltelement, als lastschaltbare Kupplungen, bevorzugt als Lamellenkupplungen (oder als trockene Einscheibenkupplungen), besonders bevorzugt als Reibkupplungen ausgebildet sein. Das das erste und/oder zweite und/oder dritte und/oder vierte und/oder fünfte und/oder sechste und/oder siebte und/oder achte und/oder neunte und/oder zehnte Schaltelement können aber auch als nicht-lastschaltbare Kupplungen ausgebildet sein.

Im Folgenden kann eine Eingangsseite, insbesondere die erste und/oder zweite und/oder dritte und/oder vierte und/oder eine fünfte und/oder sechste und/oder siebte und/oder achte und/oder neunte und/oder zehnte Eingangsseite, eine mechanische Schnittstelle sein, mit welcher eine Kraft und/oder ein Drehmoment und/oder eine Drehzahl in die Übersetzungseinheiten, bevorzugt in die erste und/oder zweite und/oder eine dritte und/oder eine vierte Übersetzungseinheit eingeleitet werden kann. Im Folgenden kann eine Ausgangsseite, insbesondere die erste und/oder zweite und/oder dritte und/oder eine vierte und/oder fünfte und/oder sechste und/oder siebte und/oder achte und/oder neunte und/oder zehnte Ausgangsseite und/oder der Abtrieb und/oder die Vorgelegewelle, eine mechanische Schnittstelle sein, mit welcher eine Kraft und/oder ein Drehmoment und/oder eine Drehzahl aus den Übersetzungseinheiten, bevorzugt aus der ersten und/oder zweiten Übersetzungseinheit und/oder einer dritten und/oder vierten Übersetzungseinheit, ausgeleitet werden kann.

Die Antriebsvorrichtung, insbesondere die erste Eingangsseite, kann ein erstes Antriebselement umfassen oder als ein erstes Antriebselement ausgebildet sein. Die Antriebsvorrichtung, insbesondere die zweite Eingangsseite kann ein zweites Antriebselement umfassen oder als ein zweites Antriebselement ausgebildet sein. Die erste und/oder zweite Eingangsseite, insbesondere das erste und/oder zweite Antriebselement, kann oder können beispielsweise als eine Welle, insbesondere eine erste und/oder zweite Eingangswelle, und/oder ein Zahnrad und/oder ein Schaltelement ausgebildet sein und/oder diese umfassen.

Die Antriebsvorrichtung, insbesondere die erste Ausgangsseite kann ein erstes Abtriebselement umfassen oder als ein erstes Abtriebselement ausgebildet sein. Die Antriebsvorrichtung, insbesondere die zweite Ausgangsseite kann ein zweites Abtriebselement umfassen oder als ein zweites Abtriebselement ausgebildet sein. Die Antriebsvorrichtung, bevorzugt die erste und/oder zweite Ausgangsseite, besonders bevorzugt das erste und/oder zweite Abtriebselement, kann oder können beispielsweise als eine Welle, insbesondere eine erste und/oder zweite Ausgangswelle, und/oder ein Zahnrad und/oder ein Schaltelement ausgebildet sein und/oder diese umfassen.

Die Antriebsvorrichtung, oder insbesondere die Arbeitsmaschine, kann einen Fahrantrieb, insbesondere einen Vorderachsantrieb und/oder einen Hinterachsantrieb umfassen. Der Abtrieb kann mit einem Fahrantrieb, insbesondere dem Vorderachsantrieb und/oder dem Hinterachsantrieb, verbunden sein. Der Fahrantrieb kann eine erste Fahrzeugachse oder Vorderachse und/oder eine zweite Fahrzeugachse oder Hinterachse und/oder ein erstes Differenzialgetriebe oder ein Vorderachsdifferenzial und/oder ein zweites Differenzialgetriebe oder ein Hinterachsdifferenzial und/oder das oder die Bodeneingriffsmittel umfassen. Der Vorderachsantrieb kann die erste Fahrzeugachse oder Vorderachse und/oder das erste Differenzialgetriebe oder das Vorderachsdifferenzial und/oder das oder die Bodeneingriffsmittel umfassen. Der Hinterachsantrieb kann die zweite Fahrzeugachse oder Hinterachse und/oder das zweite Differenzialgetriebe oder das Hinterachsdifferenzial und/oder das oder die Bodeneingriffsmittel umfassen. Das erste Differenzialgetriebe kann antriebsseitig mit dem Abtrieb und/oder einer Vorgelegewelle verbindbar oder verbunden sein. Ausserdem kann das erste Differenzialgetriebe abtriebsseitig mit der ersten Fahrzeugachse, insbesondere mit einer linken Welle und einer rechten Welle zum Antrieb von Bodeneingriffsmitteln verbindbar oder verbunden sein. Das zweite Differenzialgetriebe kann antriebsseitig mit dem Abtrieb und/oder der Vorgelegewelle verbindbar oder verbunden sein. Ausserdem kann das zweite Differenzialgetriebe abtriebsseitig mit der zweiten Fahrzeugachse, insbesondere mit einer linken Welle und einer rechten Welle zum Antrieb von Bodeneingriffsmitteln verbindbar oder verbunden sein. Im Speziellen kann ein Hinterachskegeltrieb mit dem Abtrieb, insbesondere der Abtriebswelle, verbunden sein, insbesondere drehfest verbunden. Ein Ritzel des Hinterachskegeltriebs kann als Teil des Abtriebs, insbesondere der Abtriebswelle, ausgebildet sein, bevorzugt in den Abtrieb, insbesondere die Abtriebswelle, integriert sein. Vorteilhafterweise können aufgrund der direkten Verbindung des Abtriebs, insbesondere der Abtriebswelle, mit dem Hinterachskegeltrieb teure und wartungsanfällige Verbindungselemente, beispielsweise eine Gelenkwelle, eingespart werden.

Die Antriebsvorrichtung und/oder die Arbeitsmaschine kann oder können eine Steuereinheit umfassen. Die Steuereinheit kann konfiguriert sein, eines oder mehrere Drehzahlsignale und/oder Drehmomentsignale von der Antriebsvorrichtung, insbesondere von einem oder mehreren Drehzahl- und/oder Drehmomentsensoren der Antriebsvorrichtung, und/oder einem Motor und/oder dem ersten und/oder zweiten Variator zu empfangen. Die Steuereinheit kann konfiguriert sein, eine Drehzahl und/oder ein Drehmoment mit dem Drehzahlsignal und/oder dem Drehmomentsignal zu ermitteln. Die Steuereinheit kann konfiguriert sein, die Drehzahl und/oder das Drehmoment der Antriebsvorrichtung, insbesondere des Motors und/oder des ersten und/oder zweiten Variators einzustellen und/oder zu verstellen, insbesondere eine vorgebbare Drehzahl und/oder ein vorgebbares Drehmoment einzustellen und/oder zu verstellen. Die Steuereinheit kann konfiguriert sein, die Drehzahl eines ersten Leistungsausgangs einzustellen und/oder zu verstellen.

Die Schaltelemente, insbesondere das erste und/oder zweite und/oder ein drittes und/oder vierte und/oder fünfte und/oder sechste und/oder siebte Schaltelement, können mit der Steuereinheit signalverbunden und/oder wirkend gekoppelt und/oder signalübertragend und/oder datenleitend verbunden sein. Im Speziellen kann jedes Schaltelement ein Ventil oder eine Ventilanordnung, insbesondere ein Steuerventil, oder einen Aktuator zum Ansteuern und/oder Einstellen und/oder Verstellen des jeweiligen zugeordneten Schaltelements umfassen. Das Ventil oder die Ventilanordnung oder der Aktuator können mit dem jeweiligen zugeordneten Schaltelement verbunden und/oder wirkend gekoppelt sein. Die Steuereinheit kann mit dem Ventil oder der Ventilanordnung oder dem Aktuator des jeweiligen zugeordneten Schaltelements signalverbunden und/oder wirkend gekoppelt und/oder signalübertragend und/oder datenleitend verbunden sein. Die Steuereinheit kann konfiguriert sein, das Schaltelement, insbesondere über das oder mit dem jeweiligen zugeordneten Ventil oder der Ventilanordnung oder dem Aktuator, anzusteuern und/oder einzustellen und/oder zu verstellen. Die Steuereinheit kann konfiguriert sein, das Schaltelement, insbesondere über das oder mit dem jeweiligen zugeordneten Ventil oder die Ventilanordnung oder den Aktuator, in die erste Position, also den geöffneten Zustand, oder die zweite Position, also den geschlossenen Zustand, einzustellen und/oder zu verstellen, insbesondere auch von der ersten in die zweite Position zu bewegen und umgekehrt.

Im Speziellen kann die Antriebsvorrichtung für die Arbeitsmaschine geeignet sein, insbesondere eine mit dem Motor und/oder hybrid und/oder elektrisch und/oder hydraulisch angetriebene Arbeitsmaschine sein. Ausserdem kann die Antriebsvorrichtung an und/oder in der Arbeitsmaschine angeordnet sein.

Die erste Übersetzungseinheit kann genau ein Planetenkoppelgetriebe umfassen. Die erste Übersetzungseinheit, insbesondere das Planetenkoppelgetriebe, kann mindestens oder genau ein erstes und zweites Planetengetriebe umfassen. Das erste und zweite Planetengetriebe können miteinander gekoppelt sein. Das erste und/oder zweite Planetengetriebe kann auch als ein Doppelplanetenträgergetriebe ausgebildet sein. Die erste Übersetzungseinheit kann aber auch als Ravigneaux-Satz und/oder als Lepelletier-Getriebe und/oder als sonstiges Planetenkoppelgetriebe ausgebildet sein. Die erste Übersetzungseinheit, insbesondere das Planetenkoppelgetriebe oder das erste und zweite Planetengetriebe, können derart gekoppelt sein, dass die erste Übersetzungseinheit die erste und zweite Eingangsseite und die erste und zweite Ausgangsseite aufweist.

Im Speziellen kann, insbesondere als erste Ausgangsseite, ein erster Planetenträger des ersten Planetengetriebes mit einem zweiten Hohlrad des zweiten Planetengetriebes verbunden sein. Im Speziellen können der erste Planetenträger des ersten Planetengetriebes und das zweite Hohlrad des zweiten Planetengetriebes mit der ersten Ausgangsseite, bevorzugt dem ersten Abtriebselement oder der ersten Ausgangswelle, verbindbar oder verbunden sein. Alternativ auch umgekehrt. Ein erstes Hohlrad des ersten Planetengetriebes kann mit einem zweiten Planetenträger des zweiten Planetengetriebes, insbesondere als erste Eingangsseite, verbunden sein. Im Speziellen können das erste Hohlrad des ersten Planetengetriebes und der zweite Planetenträger des zweiten Planetengetriebes mit der ersten Eingangsseite, bevorzugt dem ersten Antriebselement oder der ersten Eingangswelle, verbindbar oder verbunden sein. Alternativ auch umgekehrt.

Alternativ kann der erste Planetenträger des ersten Planetengetriebes mit dem zweiten Planetenträger des zweiten Planetengetriebes, insbesondere als erste Eingangsseite, und ein erstes Hohlrad des ersten Planetengetriebes mit einem zweiten Hohlrad des zweiten Planetengetriebes, insbesondere als erste Ausgangsseite, verbunden sein, oder umgekehrt. Im Speziellen können das erste Hohlrad des ersten Planetengetriebes und das zweite Hohlrad des zweiten Planetengetriebes mit der ersten Ausgangsseite, bevorzugt dem ersten Abtriebselement oder der ersten Ausgangswelle, verbindbar oder verbunden sein. Im Speziellen können der erste Planetenträger des ersten Planetengetriebes und der zweite Planetenträger des zweiten Planetengetriebes mit der ersten Eingangsseite, bevorzugt dem ersten Antriebselement oder der ersten Eingangswelle, verbindbar oder verbunden sein. Alternativ auch umgekehrt.

Alternativ kann ein erster Doppelplanetenträger des ersten Planetengetriebes mit dem zweiten Planetenträger des zweiten Planetengetriebes, insbesondere als erste Eingangsseite, und ein erstes Hohlrad des ersten Planetengetriebes mit einem zweiten Hohlrad des zweiten Planetengetriebes, insbesondere als erste Ausgangsseite, verbunden sein, oder umgekehrt. Im Speziellen können das erste Hohlrad des ersten Planetengetriebes und das zweite Hohlrad des zweiten Planetengetriebes mit der ersten Ausgangsseite, bevorzugt dem ersten Abtriebselement oder der ersten Ausgangswelle, verbindbar oder verbunden sein. Im Speziellen können der erste Doppelplanetenträger des ersten Planetengetriebes und der zweite Planetenträger des zweiten Planetengetriebes mit der ersten Eingangsseite, bevorzugt dem ersten Antriebselement oder der ersten Eingangswelle, verbindbar oder verbunden sein. Alternativ auch umgekehrt.

Alternativ kann der erster Doppelplanetenträger des ersten Planetengetriebes mit einem zweiten Hohlrad des zweiten Planetengetriebes, insbesondere als erste Ausgangsseite, verbunden sein und ein erstes Hohlrad des ersten Planetengetriebes mit einem zweiten Planetenträger des zweiten Planetengetriebes, insbesondere als erste Eingangsseite, verbunden sein, oder umgekehrt. Als zweite Eingangsseite der ersten Übersetzungseinheit, bevorzugt der zweiten Eingangsseite des Planetenkoppelgetriebes, kann das erste Sonnenrad des ersten Planetengetriebes und als zweite Ausgangsseite der ersten Übersetzungseinheit, bevorzugt der zweiten Ausgangsseite des Planetenkoppelgetriebes, kann das zweite Sonnenrad des zweiten Planetengetriebes ausgebildet sein, oder umgekehrt. Mit anderen Worten, die erste Übersetzungseinheit, bevorzugt das Planetenkoppelgetriebe, besonders bevorzugt das gekoppelte erste und zweite Planetengetriebe, können vorteilhafterweise also vier Freiheitsgrade, insbesondere die erste und zweite Eingangsseite und die erste und zweite Ausgangsseite aufweisen.

Der erste Variator kann über den oder durch den Antrieb und der Antrieb über das oder durch das siebte Schaltelement mit der ersten Eingangsseite der ersten Übersetzungseinheit, bevorzugt der ersten Eingangsseite des Planetenkoppelgetriebes verbindbar oder verbunden sein. Alternativ kann ein Motor mit dem Antrieb und der Antrieb mit der ersten Eingangsseite der ersten Übersetzungseinheit, bevorzugt der ersten Eingangsseite des Planetenkoppelgetriebes verbindbar oder verbunden sein. Alternativ oder zusätzlich kann der Motor über den oder durch den Antrieb mit dem ersten Variator verbindbar oder verbunden sein. Alternativ oder zusätzlich kann der erste Variator mit dem Antrieb verbindbar oder verbunden sein. Alternativ oder zusätzlich kann der zweite Variator mit der zweiten Eingangsseite der ersten Übersetzungseinheit, bevorzugt der zweiten Eingangsseite des Planetenkoppelgetriebes, besonders bevorzugt dem ersten Sonnenrad des ersten Planetengetriebes, verbunden sein.

Die erste und zweite Eingangsseite können antreibbar sein. Über die Eingangsseiten kann eine Kraft und/oder ein Drehmoment und/oder eine Drehzahl in die erste Übersetzungseinheit einleitbar oder an diese übertragbar sein. Die erste und zweite Ausgangsseite kann oder können eine erste und zweite Ausgangswelle sein. Die Ausgangsseiten können antreibbar sein. Über die Ausgangsseiten kann eine Kraft und/oder ein Drehmoment und/oder eine Drehzahl aus der ersten Übersetzungseinheit ausleitbar oder von dieser übertragbar sein.

Im Speziellen kann die erste Ausgangsseite, insbesondere die erste Ausgangswelle, der ersten Übersetzungseinheit mit der dritten oder durch die dritte Eingangsseite mit der zweiten Übersetzungseinheit verbindbar oder verbunden sein. Ebenso kann zweite Ausgangsseite, insbesondere die zweite Ausgangswelle, der ersten Übersetzungseinheit mit der vierten oder durch die vierte Eingangsseite mit der zweiten Übersetzungseinheit verbindbar oder verbunden sein. Die erste Ausgangsseite und die dritte Eingangsseite können als eine dritte Eingangswelle ausgebildet sein. Die zweite Ausgangsseite und die vierte Eingangsseite können als eine vierte Eingangswelle ausgebildet sein. Die zweite Übersetzungseinheit kann ausgangsseitig mit dem Abtrieb, insbesondere der Abtriebswelle, verbindbar oder verbunden sein. Insgesamt kann die erste Übersetzungseinheit über die zweiten Übersetzungseinheit mit dem Abtrieb, insbesondere der Abtriebswelle, verbindbar oder verbunden sein.

Der erste Variator kann direkt oder über eine oder mit einer oder durch eine erste Übersetzungsstufe, insbesondere eine fünfte Stirnradstufe und/oder drei oder vier oder mehr Zahnräder und/oder ein weiteres Planetengetriebe und/oder ein sonstiges Getriebe, mit dem Antrieb verbunden sein. Der zweite Variator kann direkt oder über eine oder mit einer oder durch eine zweite Übersetzungsstufe, insbesondere eine sechste Stirnradstufe und/oder drei oder vier oder mehr Zahnräder und/oder ein weiteres Planetengetriebe und/oder ein sonstiges Getriebe, mit der zweiten Eingangsseite und/oder einer siebten Eingangsseite verbunden sein. Die zweite Übersetzungstufe kann mit dem zweiten Antriebselement, insbesondere der zweiten Eingangswelle, verbunden sein

Der Antrieb, insbesondere die Antriebswelle, und/oder der Abtrieb, insbesondere die Abtriebswelle, kann, eine Vollwelle sein. Der Antrieb und der Abtrieb können koaxial zueinander angeordnet sein. Der Abtrieb kann mit einem Fahrantrieb verbunden sein. Im Speziellen kann der Abtrieb mit einer oder mehreren oder durch eine oder mehrere weitere Übersetzungsstufen mit dem Fahrantrieb verbunden sein. Die eine oder mehrere weitere Übersetzungsstufen können als weitere Stirnradstufen und/oder weitere Zahnradpaare und/oder drei oder mehr Zahnräder und/oder weitere Planetengetriebe oder sonstige Getriebe ausgebildet sein. Die zweite Eingangswelle kann als Hohlwelle ausgebildet sein. Ausserdem können die zweite Eingangswelle und der Antrieb zueinander koaxial angeordnet sein. Ebenso kann der Antrieb in der zweiten Eingangswelle angeordnet sein, insbesondere frei drehbar angeordnet sein. Ausserdem kann die zweite Eingangswelle koaxial zum Antrieb angeordnet sein. Darüber hinaus kann die dritte Übersetzungseinheit, insbesondere ebenso die erste und/oder zweite Übersetzungseinheit, achsparallel und/oder koaxial zum Antrieb angeordnet sein.

Wesentlich für die Erfindung ist, dass die Antriebsvorrichtung, insbesondere durch die Kombination der ersten und zweiten Übersetzungseinheit, vorteilhafterweise eine optimale Getriebespreizung aufweist. Darüber hinaus kann die Antriebsvorrichtung vorteilhafterweise als eine konstruktiv einfache Antriebsvorrichtung realisiert werden, die ausserdem über einen kompakten Aufbau verfügt. Ausserdem kann die Antriebsvorrichtung modular aufgebaut werden, wodurch beispielsweise die erste und/oder zweite Übersetzungseinheit auf einfache Art und Weise ausgetauscht werden können. Im Speziellen kann dadurch von Vorteil ein minimaler Einbauraum und ein optimal konstruktiv einfacher Aufbau der Antriebsvorrichtung erreicht werden. Ausserdem ermöglicht der geringere Einbauraum, dass das Zugfahrzeug aufgrund des kürzeren Radabstands wendiger und kompakter wird und/oder der eingesparte Einbauraum für andere Funktionen/Baugruppen verwendet werden kann. Wesentlicher Vorteil dieser Erfindung ist, dass unter Berücksichtigung modularer Übersetzungseinheiten gleiche Funktionen verglichen mit Stufengetrieben durch die gleichen Module auch bei stufenlosen Getrieben erfüllt werden können und zudem die stufenlosen Getriebe bedarfsgerecht gebaut werden können. Wesentlich hierfür zu nennen ist die Vergrößerung der Spreizung durch die zweite Übersetzungseinheit, die Änderung der Fahrtrichtung durch Drehrichtungsänderung mit der dritten Übersetzungseinheit sowie das Anfahren durch die vierte Übersetzungseinheit. Im Gegensatz dazu werden im Automobil progressive Gangabstufungen gewünscht, deswegen ist dort eine Kombination von zwei Übersetzungseinheiten eher nachteilhaft, weil dadurch eine geometrische Abstufung quasi erzwungen wird.

In Ausgestaltung der Erfindung weist die erste Übersetzungseinheit, insbesondere das Planetenkoppelgetriebe, zwei verschiedenen Standübersetzungen auf. Vorteilhafterweise können dadurch die vier Freiheitsgrad realisiert werden. Die verschiedenen Standübersetzungen ermöglichen vorteilhafterweise unterschiedliche Übersetzungen und/oder Modi der Antriebsvorrichtung, insbesondere gleichzeitig einen kompakten Aufbau. Im Weiteren können die oben genannten Vorteile der Antriebsvorrichtung realisiert werden.

In Ausgestaltung der Erfindung umfasst die zweite Übersetzungseinheit eine erste Stirnradstufe und/oder eine zweite Stirnradstufe und/oder ein drittes Planetengetriebe, und mindestens ein erstes und zweites Schaltelement.

Die zweite Übersetzungseinheit kann im Speziellen beispielsweise die folgenden Ausführungsformen umfassen:
- die erste Stirnradstufe und das erste und zweite Schaltelement, insbesondere genau nur diese Komponenten (erste Ausführungsbeispiel), oder
- die erste und zweite Stirnradstufe und das erste und zweite Schaltelement, insbesondere genau nur diese Komponenten (zweites Ausführungsbeispiel), oder
- die erste Stirnradstufe und das erste Planetengetriebe, und das erste und zweite und dritte Schaltelement, insbesondere genau nur diese Komponenten (drittes Ausführungsbeispiel).

Im ersten Ausführungsbeispiel kann:
- das erste Schaltelement mit der dritten Eingangsseite verbindbar oder verbunden sein, und/oder
- das zweite Schaltelement mit der vierten Eingangsseite verbindbar oder verbunden, und/oder
- das erste Schaltelement mit der ersten Stirnradstufe verbindbar oder verbunden sein, und/oder
- das zweite Schaltelement mit der ersten Stirnradstufe verbindbar oder verbunden, und/oder
- die erste Ausgangsseite und/oder die dritte Eingangsseite durch das oder über das erste Schaltelement mit der ersten Stirnradstufe verbindbar oder verbunden sein und/oder die zweite Ausgangsseite und/oder die vierte Eingangsseite durch das oder über das zweite Schaltelement mit der ersten Stirnradstufe verbindbar oder verbunden sein, und/oder
- die erste Stirnradstufe mit dem Abtrieb, insbesondere der Abtriebswelle, verbunden sein, und/oder
- das erste und/oder zweite Schaltelement kann über die oder mit der ersten Stirnradstufe mit dem Abtrieb, insbesondere der Abtriebswelle, verbindbar oder verbunden sein.

Im zweiten Ausführungsbeispiel kann zusätzlich oder alternativ zum ersten Ausführungsbeispiel:
- das erste Schaltelement mit der dritten Eingangsseite verbindbar oder verbunden sein, und/oder
- das zweite Schaltelement mit der vierten Eingangsseite verbindbar oder verbunden, und/oder
- das erste Schaltelement mit der ersten Stirnradstufe verbindbar oder verbunden sein, und/oder
- das zweite Schaltelement mit der zweiten Stirnradstufe verbindbar oder verbunden, und/oder
- die erste Ausgangsseite und/oder die dritte Eingangsseite durch das oder über das erste Schaltelement mit der ersten Stirnradstufe verbindbar oder verbunden sein und/oder die zweite Ausgangsseite und/oder die vierte Eingangsseite durch das oder über das zweite Schaltelement mit der zweiten Stirnradstufe verbindbar oder verbunden sein, und/oder
- die erste und zweite Stirnradstufe mit dem Abtrieb, insbesondere der Abtriebswelle, verbunden sein, und/oder
- das erste Schaltelement kann über die oder mit der ersten Stirnradstufe mit dem Abtrieb, insbesondere der Abtriebswelle, verbindbar oder verbunden sein, und/oder
- das zweite Schaltelement kann über die oder mit der zweiten Stirnradstufe mit dem Abtrieb, insbesondere der Abtriebswelle, verbindbar oder verbunden sein.

Im dritten Ausführungsbeispiel kann zusätzlich oder alternativ zum ersten und/oder zweiten Ausführungsbeispiel:
- das erste Schaltelement mit der dritten Eingangsseite verbindbar oder verbunden sein, und/oder
- das zweite Schaltelement mit der vierten Eingangsseite verbindbar oder verbunden, und/oder
- das dritte Schaltelement, das insbesondere als Bremse ausgebildet sein kann, mit dem dritten Planetengetriebe, bevorzugt einer Komponente des dritten Planetengetriebes, besonders bevorzugt dem dritten Hohlrad des dritten Planetengetriebes verbunden sein, und/oder
- das erste Schaltelement mit dem dritten Planetengetriebe, bevorzugt einer Komponente des dritten Planetengetriebes, besonders bevorzugt dem dritten Planetenträger des dritten Planetengetriebes, verbindbar oder verbunden sein, und/oder
- das zweite Schaltelement mit dem dritten Planetengetriebe, bevorzugt einer Komponente des dritten Planetengetriebes, besonders bevorzugt dem dritten Planetenträger des dritten Planetengetriebes, verbindbar oder verbunden sein, und/oder
- die erste Ausgangsseite und/oder die dritte Eingangsseite durch das erste Schaltelement mit dem dritten Planetengetriebe, bevorzugt einer Komponente des dritten Planetengetriebes, besonders bevorzugt dem dritten Planetenträger des dritten Planetengetriebes, verbindbar sein, und/oder
- die zweite Ausgangsseite und/oder die vierte Eingangsseite durch das zweite Schaltelement mit dem dritten Planetengetriebe, bevorzugt einer Komponente des dritten Planetengetriebes, besonders bevorzugt dem dritten Planetenträger des dritten Planetengetriebes, verbindbar sein, und/oder
- das dritte Planetengetriebe, bevorzugt eine Komponente des dritten Planetengetriebes, besonders bevorzugt der dritte Planetenträger des dritten Planetengetriebes, mit der ersten Stirnradstufe verbunden sein, und/oder
- die zweite Ausgangsseite mit dem dritten Planetengetriebe, bevorzugt einer Komponente des dritten Planetengetriebes, besonders bevorzugt der dritten Sonne des dritten Planetengetriebes verbunden sein, und/oder
- die erste Stirnradstufe mit dem Abtrieb, insbesondere der Abtriebswelle, verbunden sein, und/oder
- das erste und/oder zweite Schaltelement kann über die oder mit der ersten Stirnradstufe mit dem Abtrieb, insbesondere der Abtriebswelle, verbindbar oder verbunden sein, und/oder

In Ausgestaltung der Erfindung umfasst die Antriebsvorrichtung eine dritte Übersetzungseinheit, insbesondere eine Reversiereinheit oder Lastschaltwendeeinheit. Die dritte Übersetzungseinheit weist eine fünfte und sechste Eingangsseite und eine fünfte Ausgangsseite auf. Die Antriebsvorrichtung, insbesondere die fünfte Eingangsseite, kann ein fünftes Antriebselement umfassen oder als ein fünftes Antriebselement ausgebildet sein. Die Antriebsvorrichtung, insbesondere die sechste Eingangsseite kann ein sechstes Antriebselement umfassen oder als ein sechstes Antriebselement ausgebildet sein. Die fünfte und/oder sechste Eingangsseite, insbesondere das fünfte und/oder sechste Antriebselement, kann oder können beispielsweise als eine Welle, insbesondere eine fünfte und/oder sechste Eingangswelle, und/oder ein Zahnrad und/oder ein Schaltelement ausgebildet sein und/oder diese umfassen. Die Antriebsvorrichtung, insbesondere die fünfte Ausgangsseite, kann ein fünftes Abtriebselement umfassen oder als ein fünftes Abtriebselement ausgebildet sein. Die fünfte Ausgangsseite, besonders bevorzugt das fünfte Abtriebselement, kann beispielsweise als eine Welle, insbesondere eine fünfte Ausgangswelle, und/oder ein Zahnrad und/oder ein Schaltelement ausgebildet sein und/oder diese umfassen. Alternativ kann die fünfte Ausgangsseite, insbesondere das fünfte Abtriebselement, und die erste Eingangsseite, insbesondere das erste Antriebselement, als eine gemeinsame Komponente, insbesondere als die erste Eingangswelle, ausgebildet sein.

Die dritte Übersetzungseinheit kann, insbesondere eingangsseitig, mit dem Antrieb verbindbar oder verbunden sein. Die dritte Übersetzungseinheit kann, insbesondere eingangsseitig, mit dem Antrieb verbindbar oder verbunden sein. Im Speziellen kann der Antrieb mit der fünften Eingangsseite verbindbar oder verbunden sein. Ebenso kann der Antrieb über die erste Übersetzungsstufe mit der sechsten Eingangsseite verbindbar oder verbunden sein. Die dritte Übersetzungseinheit kann zusätzlich mit dem ersten Variator, insbesondere über die erste oder mit der ersten Übersetzungsstufe, verbindbar oder verbunden sein. Die dritte Übersetzungseinheit kann, insbesondere ausgangsseitig, mit der ersten Übersetzungseinheit verbindbar oder verbunden sein. Die dritte Übersetzungseinheit kann zur Umkehr der Fahrtrichtung ausgebildet sein. Die dritte Übersetzungseinheit kann lastschaltbar oder nicht-lastschaltbar sein. Darüber hinaus kann die dritte Übersetzungseinheit, insbesondere ebenso die erste und/oder zweite Übersetzungseinheit, achsparallel und/oder koaxial zum Antrieb angeordnet sein.

Mit der dritten Übersetzungseinheit kann eine Drehrichtung der ersten Ausgangswelle umkehrbar sein.

Im Speziellen kann der Motor durch den oder über den Antrieb mit der dritten Übersetzungseinheit, insbesondere der fünften und sechsten Eingangsseite, verbindbar oder verbunden sein. Im Speziellen kann die dritte Übersetzungseinheit, insbesondere die fünfte und sechste Ausgangsseite, mit der ersten Eingangsseite, bevorzugt dem ersten Antriebselement, besonders bevorzugt der ersten Eingangswelle, der ersten Übersetzungseinheit verbindbar oder verbunden sein. Die dritte Übersetzungseinheit kann beispielsweise die erste Übersetzungsstufe und ein viertes und fünftes Schaltelement umfassen. Die dritte Übersetzungseinheit kann aber auch nur das vierte und fünfte Schaltelement umfassen. Die dritte Übersetzungseinheit kann insbesondere durch das vierte und/oder fünfte Schaltelement betätigbar sein. Die fünfte und sechste Eingangsseite kann mit dem Antrieb verbindbar oder verbunden sein. Die fünfte Eingangsseite kann mit dem Antrieb verbindbar oder verbunden sein. Die fünfte Eingangsseite kann mit dem vierten Schaltelement verbunden sein. Im Speziellen kann das vierte Schaltelement mit dem Antrieb verbindbar oder verbunden sein. Die sechste Eingangsseite kann mit dem Antrieb verbindbar oder verbunden sein. Die sechste Eingangsseite kann mit der ersten Übersetzungsstufe verbindbar oder verbunden sein. Im Speziellen kann die erste Übersetzungsstufe mit dem Antrieb verbindbar oder verbunden sein. Die erste Übersetzungsstufe kann mit dem fünften Schaltelement verbindbar oder verbunden sein. Der Antrieb kann durch die oder über die erste Übersetzungsstufe mit dem fünften Schaltelement verbindbar oder verbunden sein. Die fünfte Ausgangsseite kann mit der erste Eingangsseite verbindbar oder verbunden sein. Im Speziellen kann die fünfte Ausgangsseite und die erste Eingangsseite über die oder mit der ersten Eingangswelle verbunden sein. Ebenso können das vierte und/oder fünfte Schaltelement mit der fünften Ausgangsseite, insbesondere dem fünften Abtriebselement, verbindbar oder verbunden sein oder als fünfte Ausgangsseite ausgebildet sein. Alternativ können das vierte und/oder fünfte Schaltelement mit der ersten Eingangswelle verbindbar oder verbunden sein, insbesondere wenn die fünfte Ausgangsseite und die erste Eingangsseite als eine gemeinsame Komponente ausgebildet sind. Die erste Eingangswelle kann als Hohlwelle ausgebildet sein. Ausserdem können die erste und/oder vierte Eingangswelle und/oder der Antrieb zueinander koaxial angeordnet sein. Ebenso können die erste und/oder vierte Eingangswelle ineinander, insbesondere frei drehbar ineinander, angeordnet sein. Im Speziellen kann die erste Eingangswelle in der vierten Eingangswelle angeordnet sein, insbesondere frei drehbar angeordnet sein. Ebenso kann der Antrieb in der ersten Eingangswelle angeordnet sein, insbesondere frei drehbar angeordnet sein.

Die erste Übersetzungsstufe kann im Speziellen drei oder vier oder mehr Zahnräder mit mindestens einem freilaufenden Zahnrad umfassen. Dadurch kann die dritte Übersetzungseinheit vorteilhafterweise als Vorvariatorstufe für zweite Übersetzungseinheit ausgebildet sein. Ebenso kann die dritte Übersetzungseinheit in Planetenbauweise ausgeführt sein. Die dritte Übersetzungseinheit kann beispielsweise ein weiteres Planetengetriebe und das vierte und fünfte Schaltelement umfassen. Das vierte Schaltelement kann eingangsseitig mit dem Antrieb verbindbar oder verbunden sein. Das vierte Schaltelement kann ausgangsseitig dem Planetenträger des weiteren Planetengetriebes verbindbar oder verbunden sein. Das fünfte Schaltelement kann insbesondere als Bremse ausgebildet sein. Das fünfte Schaltelement kann dem Hohlrad des weiteren Planetengetriebes verbunden sein. Das Sonnenrad des weiteren Planetengetriebes kann mit der fünften Ausgangsseite verbindbar oder verbunden sein. Die fünfte Ausgangsseite kann mit der erste Eingangsseite verbindbar oder verbunden sein. Im Speziellen kann die fünfte Ausgangsseite und die erste Eingangsseite über die oder mit der ersten Eingangswelle verbunden sein. Durch die Planetenbauweise wird eine besonders kurze axiale Baulänge erzielt, was sich vorteilhaft auch auf die Baulänge der Schaltgetriebeanordnung insgesamt auswirkt.

In Ausgestaltung der Erfindung umfasst die Antriebsvorrichtung eine vierte Übersetzungseinheit, insbesondere eine Anfahreinheit. Die vierte Übersetzungseinheit weist mindestens eine siebte Eingangsseite und mindestens eine sechste Ausgangsseite auf. Die vierte Übersetzungseinheit kann ausserdem mit der ersten Übersetzungseinheit und/oder mit der Vorgelegewelle verbindbar oder verbunden sein. Die vierte Übersetzungseinheit kann mit der ersten Übersetzungseinheit, bevorzugt der zweiten Eingangsseite, besonders bevorzugt der zweiten Eingangswelle oder dem zweiten Antriebselement verbindbar oder verbunden sein. Die vierte Übersetzungseinheit kann, insbesondere ausgangsseitig, mit der Vorgelegewelle verbindbar oder verbunden sein. Die vierte Übersetzungseinheit kann, insbesondere eingangsseitig, mit dem zweiten Variator verbindbar oder verbunden sein. Der zweite Variator kann direkt oder über die zweite Übersetzungsstufe mit der zweiten Eingangsseite, insbesondere dem zweiten Antriebselement oder der zweiten Eingangswelle, und/oder der siebten Eingangsseite verbunden sein. Die zweite Übersetzungstufe kann mit der zweiten Eingangsseite, insbesondere dem zweiten Antriebselement oder der zweiten Eingangswelle, verbindbar oder verbunden sein.

Die vierte Übersetzungseinheit kann beispielsweise eine dritte Stirnradstufe und eine vierte Stirnradstufe, und mindestens ein sechstes Schaltelement umfassen. Dabei kann:
- die siebte Eingangsseite insbesondere das zweite Antriebselement oder die zweite Eingangswelle und/oder die dritte Stirnradstufe sein.
- die dritte Stirnradstufe mit dem zweiten Variator, insbesondere der zweiten Übersetzungsstufe, und/oder der zweiten Eingangsseite, insbesondere dem zweiten Antriebselement oder der zweiten Eingangswelle, verbindbar oder verbunden sein, und/oder
- die dritte Stirnradstufe mit der vierten Stirnradstufe verbunden sein, insbesondere mit der vierten Stirnradstufe in Eingriff stehen oder über eine Welle verbunden sein, und/oder

- die vierte Stirnradstufe mit dem sechsten Schaltelement verbunden sein, und/oder
- die vierte Stirnradstufe mit dem sechsten oder durch das sechste Schaltelement mit der Vorgelegewelle verbindbar sein, und/oder
- die Vorgelegewelle mit dem Abtrieb, insbesondere der Abtriebswelle, verbindbar oder verbunden sein.

Über die dritte Stirnradstufe kann eine Kraft und/oder ein Drehmoment und/oder eine Drehzahl in die vierte Übersetzungseinheit einleitbar oder an diese übertragbar sein. Über das sechste Schaltelement kann eine Kraft und/oder ein Drehmoment und/oder eine Drehzahl von der vierten Übersetzungseinheit in die Vorgelegewelle und über die Vorgelegewelle in den Abtrieb, insbesondere die Abtriebswelle, einleitbar oder an diese oder diesen übertragbar sein. Die vierte Übersetzungseinheit, insbesondere das sechste Schaltelement, kann mit dem Abtrieb und/oder der Vorgelegewelle verbindbar oder verbunden sein. Das sechste Schaltelement kann zur ausgangsseitigen Anbindung, insbesondere an den Abtrieb und/oder die Vorgelegewelle, ausgebildet sein.

Alternativ kann die vierte Übersetzungseinheit die dritte und vierte Stirnradstufe und das vierte Planetengetriebe und das sechste Schaltelement umfassen. Alternativ oder zusätzlich kann oder können:
- die siebte Eingangsseite das vierte Hohlrad des vierten Planetengetriebes sein
- das vierte Planetengetriebe, bevorzugt eine Komponente des vierten Planetengetriebes, besonders bevorzugt das vierte Hohlrad des vierten Planetengetriebes, mit dem zweiten Variator und/oder der zweiten Übersetzungsstufe verbunden sein, und/oder
- die zweite Übersetzungsstufe und das vierte Hohlrad in Eingriff stehen, insbesondere miteinander kämmen, oder das vierte Hohlrad als Zahnrad oder Komponente der zweiten Übersetzungsstufe, insbesondere der sechsten Stirnradstufe, ausgebildet sein, und/oder
- das vierte Hohlrad kann mit der zweiten Eingangsseite, insbesondere dem zweiten Antriebselement oder der zweiten Eingangswelle verbindbar oder verbunden sein, und/oder
- die vierte Sonne des vierten Planetengetriebes kann mit dem Antrieb verbunden sein, und/oder
- der vierte Planetenträger des vierten Planetengetriebes mit der dritten Stirnradstufe verbunden sein, und/oder
- die dritte Stirnradstufe mit der vierten Stirnradstufe verbunden sein, insbesondere mit der vierten Stirnradstufe in Eingriff stehen oder über eine Welle verbunden sein, und/oder
- die vierte Stirnradstufe mit dem sechsten Schaltelement verbunden sein, und/oder
- die vierte Stirnradstufe mit dem sechsten oder durch das sechste Schaltelement mit der Vorgelegewelle verbindbar sein, und/oder
- und/oder der zweite Variator durch das oder über das sechste Schaltelement mit der Vorgelegewelle verbindbar oder verbunden sein, und/oder
- die Vorgelegewelle mit dem Abtrieb verbindbar oder verbunden sein.

Die sechste Ausgangsseite kann das sechste Schaltelement sein oder die sechste Ausgangsseite, insbesondere ein sechstes Abtriebselement, mit dem sechsten Schaltelement verbunden sein.

Die Vorgelegewelle kann eine Vollwelle oder Hohlwelle sein. Die Vorgelegewelle kann achsparallel und/oder koaxial zur ersten und/oder zweiten Eingangswelle und/oder dem Abtrieb, insbesondere die Abtriebswelle, angeordnet sein. Die Vorgelegewelle kann über ein Kopplungszahnrad, insbesondere über ein mit der ersten Stirnradstufe kämmendes Kopplungszahnrad, mit dem Abtrieb verbunden sein. Die Vorgelegewelle kann aber auch mit einer dritten oder über eine dritte Übersetzungsstufe, beispielsweise eine siebte Stirnradstufe und/oder drei oder vier oder mehr Zahnräder und/oder ein weiteres Planetengetriebe und/oder ein sonstiges Getriebe, und/oder einem weiteren Schaltelement mit dem Abtrieb verbindbar oder verbunden sein. Ausserdem kann die Vorgelegewelle mit dem Fahrantrieb, insbesondere dem Vorderachsantrieb, verbunden sein. Die Vorgelegewelle kann mit einer vierte oder über eine vierte Übersetzungsstufe, beispielsweise eine achte Stirnradstufe und/oder drei oder vier oder mehr Zahnräder und/oder ein weiteres Planetengetriebe und/oder ein sonstiges Getriebe, und/oder einem weiteren Schaltelement mit einer weiteren Welle verbindbar oder verbunden sein. Die Vorgelegewelle oder die weitere Welle kann mit dem ersten Differenzialgetriebe oder dem Vorderachsdifferenzial verbunden sein. Im Speziellen kann die Vorgelegewelle oder die weitere Welle mit einer Verzahnung eines Vorderachsantriebs in Verbindung stehen. Beispielsweise kann ein Vorderachsantriebsrad mit der Vorgelegewelle oder der weiteren Welle drehfest verbunden oder wahlweise drehfest verbindbar und lösbar sein. Dadurch kann vorteilhafterweise eine kompakte und konstruktiv einfach ausgestaltete Anordnung der Antriebsvorrichtung realisiert werden.

In Ausgestaltung der Erfindung ist der erste Variator über den oder durch den Antrieb und das siebte Schaltelement mit der ersten Eingangsseite verbindbar. Der erste Variator kann über den oder durch den Antrieb und der Antrieb über das oder durch das siebte Schaltelement mit der ersten Eingangsseite der ersten Übersetzungseinheit, bevorzugt der ersten Eingangsseite des Planetenkoppelgetriebes, besonders bevorzugt dem ersten Antriebselement oder der ersten Eingangswelle, verbindbar oder verbunden sein. Dadurch kann die Antriebsvorrichtung auf einfache Art und Weise ein rein elektrische betrieben werden.

In Ausgestaltung der Erfindung sind der erste Variator als ein erster Elektromotor und der zweite Variator als ein zweiter Elektromotor ausgebildet. Alternativ können der erste und zweite Variator als Hydrostat ausgebildet sein, wobei der Hydrostat insbesondere eine Hydraulikpumpe und einen Hydraulikmotor umfasst. Der erste und zweite Variator können also als Hydraulikpumpe oder Hydraulikmotor ausgebildet und/oder betreibbar sein. Alternativ oder zusätzlich können der erste und/oder zweite Variator als Brennstoffzelle ausgebildet sein. Der erste und/oder zweite Variator, insbesondere der erste und/oder zweite Elektromotor, können mit Gleichstrom und/oder Drehstrom betriebene Synchron- und/oder Asynchronmaschinen mit permanenter und/oder elektrischer Erregung, besonders bevorzugt eine permanenterregte Drehstrom-Synchronmaschinen sein. Der erste und/oder zweite Variator können motorisch und/oder generatorisch betreibbar sein. Der erste und/oder zweite Variator können die Antriebsvorrichtung mit einer Kraft und/oder einer Drehzahl und/oder einem Drehmoment antreiben. Der erste und/oder zweite Variator können jeweils eine Abtriebswelle, insbesondere eine erste und zweite Abtriebswelle umfassen. Der erste Variator kann abtriebsseitig, also insbesondere mit der ersten Abtriebswelle, mit dem Antrieb verbindbar oder verbunden sein. Der zweite Variator kann abtriebsseitig, also insbesondere mit der zweiten Abtriebswelle, mit dem ersten und/oder zweiten und/oder dritten oder dem gemeinsamen Eingang verbindbar oder verbunden sein. Beispielsweise kann ein erster Rotor des ersten Variators, insbesondere des ersten Elektromotors, und/oder ein zweiter Rotor des zweiten Variators, insbesondere des zweiten Elektromotors, mit der jeweiligen Abtriebswelle verbunden sein. Der erste und/oder zweite Variator, insbesondere der erste und/oder zweite Elektromotor, kann als Drehmoment- oder Torquemotor ausgeführt sein. Der erste und/oder zweite Variator können zusätzlich als Generator ausgebildet sein.

Die Antriebsvorrichtung kann ausserdem eine Leistungselektronik und/oder einen Energiespeicher umfassen. Mit der Leistungselektronik kann Leistung, insbesondere elektrische Leistung, zwischen dem ersten und/oder zweiten Variator, insbesondere einem ersten und/oder zweiten Elektromotor, und/oder dem Energiespeicher übertragbar sein. Die Leistungselektronik kann in der Steuereinheit integriert sein oder als externe Einheit(en) von der Steuereinheit ansteuerbar sein. Die Leistungselektronik kann ein elektronisches Steuergerät und/oder einen Inverter und/oder einen Spannungswandler umfassen. Im Betrieb kann der Inverter und/oder der Spannungswandler die Spannung des Energiespeichers in eine Spannung oder Energie oder Leistung umwandeln, welche die erste und/oder zweite Energiemaschine benötigen. Zum Aufladen des Energiespeichers kann dieser Vorgang umgekehrt werden. Der Energiespeicher kann vom elektronischen Steuergerät ansteuerbar sein, um elektrische Energie und/oder Leistung zu speichern und/oder an den ersten und/oder zweiten Variator abzugeben. Die Steuereinheit oder das elektronische Steuergerät und/oder die erste und/oder zweite Energiemaschine, insbesondere der erste und/oder zweite Elektromotor, können mit der Leistungselektronik und/oder dem Energiespeicher elektrisch verbunden und/oder elektrisch koppelbar oder gekoppelt sein. Die Leistungselektronik, insbesondere das elektronische Steuergerät, kann in die Steuereinheit integriert sein. Der erste und/oder zweite Variator können als Generator ausgebildet sein, und insbesondere in einem Rekuperationsbetrieb den Energiespeicher aufladen. Der Energiespeicher kann als eine Batterie und/oder ein Akku und/oder eine Superkondensator und/oder eine Brennstoffzelle und/oder eine sonstige Vorrichtung zur Speicherung von elektrischer Energie ausgebildet sein.

Alternativ oder zusätzlich können der erste und zweite Variator als Hydrostat ausgebildet sein. Mit anderen Worten, der erste und zweite Variator können beide zusammen als eine Hydrostateinheit ausgebildet sein. Der erste und zweite Variator können dabei wechselweise als Hydraulikpumpe und Hydraulikmotor ausgebildet sein. Der Hydrostat kann als Eingangselement eine Hydraulikpumpe, insbesondere eine verstellbare Hydraulikpumpe, und als Ausgangselement einen Hydraulikmotor aufweisen. Der Hydraulikmotor kann von der oder durch die oder mit der Hydraulikpumpe antreibbar sein, insbesondere durch eine hydraulische Leistung durch die Hydraulikpumpe antreibbar sein. Die Hydraulikpumpe kann durch eine Kraft und/oder Drehzahl und/oder ein Drehmoment des Motors antreibbar sein. Die Kraft und/oder Drehzahl und/oder das Drehmoment des Hydraulikmotors können in die erste und/oder zweite Übersetzungseinheit und/oder vierte Übersetzungseinheit eingeleitet werden. Durch Verstellung der Hydraulikpumpe kann die Ausgangsleistung, also insbesondere die Kraft und/oder Drehzahl und/oder das Drehmoment, der Antriebsvorrichtung, insbesondere am Abtrieb eingestellt werden. Die Hydraulikpumpe kann ein Pumpenrad mit verstellbarer Hydraulikgeometrie aufweisen. Alternativ können andere Mitteln zum Verstellen der Hydraulikpumpe vorgesehen sein, mit denen die hydraulische Leistung der Hydraulikpumpe einstellbar ist. Dadurch kann vorteilhafterweise auf einfache konstruktive Art und Weise eine hybride Antriebsvorrichtung realisiert werden.

In Ausgestaltung der Erfindung umfasst die Antriebsvorrichtung einen Motor. Der Motor kann über den oder durch den Antrieb mit der ersten Eingangsseite und dem ersten Variator verbunden sein. Alternativ oder zusätzlich kann der Motor über den oder durch den Antrieb mit der fünften und sechsten Eingangsseite und dem ersten Variator und/oder dem vierten Hohlrad verbunden sein. Der Motor kann als ein Verbrennungsmotor ausgebildet sein. Alternativ oder zusätzlich kann es sich bei dem Motor um einen Elektromotor handeln, insbesondere einen dritten Elektromotor. Vorteilhafterweise kann die Antriebsvorrichtung, insbesondere auch die Arbeitsmaschine, dadurch modular aufgebaut und/oder hybrid antreibbar sein. Die Steuereinheit kann mit dem Motor signalverbunden und/oder wirkend gekoppelt und/oder signalübertragend und/oder datenleitend verbunden sein. Vorteilhafterweise kann die Antriebsvorrichtung, insbesondere auch die Arbeitsmaschine, dadurch modular aufgebaut sein.

In Ausgestaltung der Erfindung weisen die erste und/oder zweite und/oder dritte und/oder vierte Übersetzungseinheit einen Durchgang oder mehrere Durchgänge, insbesondere einen oder mehrere zentrale Durchgänge, für den Antrieb, insbesondere die Antriebswelle, auf. Der Antrieb, insbesondere die Antriebswelle, kann zusätzlich als eine Zapfwellen-Antriebswelle (PTO-Antriebswelle) ausgebildet sein, insbesondere auch verwendbar sein. Der Antrieb, insbesondere die Antriebswelle, und die Zapfwellen-Antriebswelle können als eine Welle, insbesondere eine gemeinsame Welle, ausgebildet sein. Der Antrieb, insbesondere die Antriebswelle, kann als Vollwelle ausgeführt sein. Der Durchgang oder die Durchgänge, insbesondere der oder die zentralen Durchgänge, kann oder können als eine oder mehrere Wellendurchführungen, insbesondere eine oder mehrere zentrale Wellendurchführungen, für den Antrieb, insbesondere die Antriebswelle, ausgebildet sein.

Die erste und/oder zweite und/oder dritte und/oder vierte Übersetzungseinheit können also eine oder mehrere Wellendurchführung, insbesondere eine oder mehrere zentrale Wellendurchführung, für den Antrieb, insbesondere die Antriebswelle, aufweisen. Im Speziellen können:
- die erste und/oder zweite und/oder dritte Sonne und/oder die erste und/oder zweite und/oder vierte Eingangswelle, und/oder
- das erste und/oder vierte Schaltelement, und/oder
jeweils Durchgänge, insbesondere Wellendurchführungen, für den Antrieb, insbesondere die Antriebswelle, aufweisen. Der Antrieb, insbesondere die Antriebswelle, können sich also durch diese Komponenten erstrecken. Ausserdem kann der Antrieb, insbesondere die Antriebswelle, zur ersten und/oder zweiten und/oder dritten und/oder vierten Eingangswelle koaxial und/oder frei drehbar in diesen angeordnet sein. Auf diese Weise ist eine direkte und damit besonders energieeffiziente Übertragung des Drehmoments und/oder der Kraft und/oder der Drehzahl zum ersten Leistungsausgang der Antriebsvorrichtung oder Arbeitsmaschine möglich.

In Ausgestaltung der Erfindung ist der Motor und/oder der erste Variator mit dem ersten Leistungsausgang verbindbar oder verbunden, insbesondere mit dem achten oder durch das achte Schaltelement und/oder das neunte Schaltelement, mit dem ersten Leistungsausgang verbindbar oder verbunden. Der erste Leistungsausgang kann eine Zapfwelleneinheit umfassen oder als Zapfwelleneinheit ausgebildet sein. Die Zapfwelleneinheit kann ein Zapfwellengetriebe und/oder eine Zapfwelle umfassen. Der Motor kann über den Antrieb, insbesondere die Antriebswelle, mit dem achten und/oder neunten Schaltelement verbunden sein. Der erste Variator kann über den Antrieb, insbesondere die Antriebswelle, mit dem neunten Schaltelement verbunden sein. Das achte und/oder neunte Schaltelement kann, insbesondere über den Antrieb, mit dem ersten Leistungsausgang, insbesondere dem Zapfwellengetriebe und/oder der Zapfwelle, verbunden sein. Das achte und/oder neunte Schaltelement kann den Antrieb, insbesondere die Antriebswelle, mit dem ersten Leistungsausgang, insbesondere dem Zapfwellengetriebe und/oder der Zapfwelle, verbinden. Der erste Leistungsausgang, bevorzugt die Zapfwelleneinheit, besonders bevorzugt das Zapfwellengetriebe, kann also antriebsseitig, insbesondere über oder durch das achte und/oder neunte Schaltelement, mit dem Antrieb, insbesondere der Antriebswelle, und/oder der Zapfwellen-Antriebswelle verbindbar oder verbunden sein. Ausserdem kann der erste Leistungsausgang, bevorzugt die Zapfwelleneinheit, besonders bevorzugt das Zapfwellengetriebe, abtriebsseitig mit der Zapfwelle verbindbar oder verbunden sein. Der erste Leistungsausgang ist mit dem Motor und/oder dem ersten Variator antreibbar. Dadurch kann vorteilhafterweise eine kompakte und/oder modulare und/oder konstruktiv einfache Ausgestaltung der Antriebsvorrichtung, insbesondere des ersten Leistungsausgangs, erreicht werden.

In Ausgestaltung der Erfindung umfasst die Antriebsvorrichtung oder die Arbeitsmaschine eine Steuereinheit. Die Steuereinheit ist oben und unten im Detail beschrieben.

Die Erfindung betrifft weiter eine Getriebegehäuseanordnung mit einer Antriebsvorrichtung, insbesondere einer Antriebsvorrichtung nach einem der Ansprüche 1 bis 10. Die Getriebegehäuseanordnung umfasst ein erstes Gehäusemodul mit der ersten Übersetzungseinheit und ein zweites Gehäusemodul mit der zweiten Übersetzungseinheit, und das erste und zweite Gehäusemodul sind entlang oder in Richtung des Antriebs, insbesondere der Antriebswelle, angeordnet. Im Speziellen können das erste und zweite Gehäusemodul entlang oder in Richtung des Antriebs, insbesondere der Antriebswelle, nacheinander und/oder direkt benachbart angeordnet sein. Die Arbeitsmaschine kann die Getriebegehäuseanordnung umfassen.

Im ersten Gehäusemodul kann zusätzlich die Vorgelegewelle, insbesondere zumindest teilweise die Vorgelegewelle, und/oder der zweite Variator angeordnet sein. Das erste Gehäusemodul kann innen liegende Lagerstellen, beispielsweise in Form von Stegen oder anderen Lager- und/oder Befestigungseinrichtungen aufweisen. An und/oder auf und/oder in den Lagerstellen kann die erste Übersetzungseinheit, insbesondere Komponenten der ersten Übersetzungseinheit, lagerbar sein. Zusätzlich kann die Vorgelegewelle, insbesondere zumindest teilweise die Vorgelegewelle, und/oder der zweite Variator an und/oder auf und/oder in den Lagerstellen lagerbar sein.

Im zweiten Gehäusemodul können zusätzlich die Vorgelegewelle, insbesondere zumindest teilweise die Vorgelegewelle, und/oder der Abtrieb, insbesondere die Abtriebswelle, und/oder der erste Variator angeordnet sein. Das zweite Gehäusemodul kann innen liegende Lagerstellen, beispielsweise in Form von Stegen oder anderen Lager- und/oder Befestigungseinrichtungen aufweisen. An und/oder auf und/oder in den Lagerstellen kann die zweite Übersetzungseinheit, insbesondere Komponenten der zweiten Übersetzungseinheit, lagerbar sein. Zusätzlich können die Vorgelegewelle, insbesondere zumindest teilweise die Vorgelegewelle, und/oder der Abtrieb, insbesondere die Abtriebswelle, und/oder der erste Variator an und/oder auf und/oder in den Lagerstellen lagerbar sein. Das erste Gehäusemodul kann eine eingangsseitige Gehäusewand aufweisen. Die eingangsseitige Gehäusewand des ersten Gehäusemoduls kann jede Gehäusewand des ersten Gehäusemoduls sein, insbesondere aber die Gehäusewand, deren Wellenlagerebenen orthogonal zum Antrieb, insbesondere der Antriebswelle, und/oder der Kupplungsantriebswelle angeordnet ist.

Die eingangsseitige Gehäusewand des ersten Gehäusemoduls kann mindestens eine erste Eingangsöffnung aufweisen. Die erste Eingangsöffnung kann zum Anbinden und/oder Verbinden der ersten Eingangsseite mit dem Antrieb, insbesondere der Antriebswelle, und/oder der zweiten Eingangsseite, insbesondere der zweiten Eingangswelle, mit dem zweiten Variator ausgebildet sein. In der ersten Eingangsöffnung der eingangsseitigen Gehäusewand des ersten Gehäusemoduls kann der Antrieb und/oder die zweite Eingangswelle angeordnet sein. Im Speziellen kann sich der Antrieb, insbesondere die Antriebswelle, und/oder die zweite Eingangswelle durch die erste Eingangsöffnung erstrecken.

Alternativ oder zusätzlich kann die eingangsseitige Gehäusewand des ersten Gehäusemoduls eine zweite Eingangsöffnung aufweisen. Die zweite Eingangsöffnung kann zur Durchführung und/oder zum Anbinden und/oder Verbinden der Vorgelegewelle ausgebildet sein. In der zweiten Eingangsöffnung der eingangsseitigen Gehäusewand des ersten Gehäusemoduls kann die Vorgelegewelle angeordnet sein. Im Speziellen kann sich die Vorgelegewelle durch die zweite Eingangsöffnung erstrecken.

Das erste Gehäusemodul kann eine ausgangsseitige Gehäusewand aufweisen. Die ausgangsseitige Gehäusewand des ersten Gehäusemoduls kann jede Gehäusewand des ersten Gehäusemoduls sein.

Die ausgangsseitige Gehäusewand des ersten Gehäusemoduls, insbesondere deren Wellenlagerebene, kann parallel zur eingangsseitigen Gehäusewand des ersten Gehäusemoduls, insbesondere deren Wellenlagerebene, und/oder orthogonal zum Antrieb, insbesondere der Antriebswelle, und/oder der Kupplungsantriebswelle angeordnet sein.

Die ausgangsseitige Gehäusewand des ersten Gehäusemoduls kann eine erste Ausgangsöffnung aufweisen. Die erste Ausgangsöffnung kann zum Anbinden und/oder Verbinden der zweiten Ausgangsseite mit der vierten Eingangsseite und/oder zum Anbinden und/oder Verbinden der ersten Eingangsseite mit der fünften Ausgangsseite und/oder zur Durchführung des Antriebs ausgebildet sein. In der ersten Ausgangsöffnung kann die erste und/oder dritte und/oder vierte Eingangswelle und/oder der Antrieb angeordnet sein. Im Speziellen kann sich die erste und/oder dritte und/oder vierte Eingangswelle und/oder der Antrieb durch die erste Ausgangsöffnung erstrecken.

Alternativ kann die ausgangsseitige Gehäusewand des ersten Gehäusemoduls eine zweite Ausgangsöffnung aufweisen. Die zweite Ausgangsöffnung kann zum Anbinden und/oder Verbinden der ersten Ausgangsseite mit der dritten Eingangsseite ausgebildet sein. In der zweiten Ausgangsöffnung kann die dritte Eingangswelle angeordnet sein. Im Speziellen kann sich die dritte Eingangswelle durch die zweite Ausgangsöffnung erstrecken.

Alternativ oder zusätzlich kann die ausgangsseitige Gehäusewand des ersten Gehäusemoduls eine dritte Ausgangsöffnung aufweisen. Die dritte Ausgangsöffnung kann zur Durchführung und/oder zum Anbinden und/oder Verbinden der Vorgelegewelle ausgebildet sein. In der dritten Ausgangsöffnung kann die Vorgelegewelle angeordnet sein. Im Speziellen kann sich die Vorgelegewelle durch die dritte Ausgangsöffnung erstrecken.

Das zweite Gehäusemodul kann eine eingangsseitige Gehäusewand aufweisen. Die eingangsseitige Gehäusewand des zweiten Gehäusemoduls kann jede Gehäusewand des zweiten Gehäusemoduls sein. Die eingangsseitige Gehäusewand des zweiten Gehäusemoduls, insbesondere deren Wellenlagerebene, kann parallel zur eingangsseitigen Gehäusewand des ersten Gehäusemoduls, insbesondere deren Wellenlagerebene, und/oder orthogonal zum Antrieb, insbesondere der Antriebswelle, angeordnet sein. Die eingangsseitige Gehäusewand des zweiten Gehäusemoduls kann eine dritte Eingangsöffnung aufweisen. Die dritte Eingangsöffnung kann zum Anbinden und/oder Verbinden der zweiten Ausgangsseite mit der vierten Eingangsseite und/oder zum Anbinden und/oder Verbinden der ersten Eingangsseite mit der fünften Ausgangsseite und/oder zur Durchführung des Antriebs ausgebildet sein. In der dritten Eingangsöffnung kann die erste und/oder dritte und/oder vierte Eingangswelle und/oder der Antrieb angeordnet sein. Im Speziellen kann sich die erste und/oder dritte und/oder vierte Eingangswelle und/oder der Antrieb durch die dritte Eingangsöffnung erstrecken.

Die Mittellinie der ersten Ausgangsöffnung und die Mittellinie der zweiten Eingangsöffnung können koaxial oder achsparallel sein.Alternativ oder zusätzlich kann die eingangsseitige Gehäusewand des zweiten Gehäusemoduls eine vierte Eingangsöffnung aufweisen. Die vierte Eingangsöffnung kann zur Durchführung der Vorgelegewelle und/oder zum Anbinden und/oder Verbinden der Vorgelegewelle an den Abtrieb, insbesondere die Abtriebswelle, ausgebildet sein. In der vierten Eingangsöffnung der eingangsseitigen Gehäusewand des zweiten Gehäusemoduls kann die Vorgelegewelle angeordnet sein. Im Speziellen kann sich die Vorgelegewelle durch die vierte Eingangsöffnung erstrecken.

Die Mittellinie der zweiten Ausgangsöffnung und die Mittellinie der dritten Eingangsöffnung können koaxial oder achsparallel sein.

Die ausgangsseitige Gehäusewand des ersten Gehäusemoduls und die eingangsseitige Gehäusewand des zweiten Gehäusemoduls können alternativ als erste gemeinsame Gehäusewand des ersten und zweiten Gehäusemoduls ausgebildet sein. Die erste gemeinsame Gehäusewand kann eine erste Durchgangsöffnung aufweisen. Die erste Ausgangsöffnung und die dritte Eingangsöffnung können als die erste Durchgangsöffnung ausgebildet sein. Die erste Durchgangsöffnung übernimmt in diesem Fall die Funktion der ersten Ausgangsöffnung und der dritten Eingangsöffnung. Die erste gemeinsame Gehäusewand kann eine zweite Durchgangsöffnung aufweisen. Die zweite Ausgangsöffnung und die vierte Eingangsöffnung können als die zweite Durchgangsöffnung ausgebildet sein. Die zweite Durchgangsöffnung übernimmt in diesem Fall die Funktion der zweiten Ausgangsöffnung und der vierten Eingangsöffnung. In der ersten Durchgangsöffnung kann die erste und/oder dritte und/oder vierte Eingangswelle und/oder der Antrieb angeordnet sein. Im Speziellen können sich die erste und/oder dritte und/oder vierte Eingangswelle und/oder der Antrieb durch die erste Durchgangsöffnung erstrecken. In der zweiten Durchgangsöffnung kann die Vorgelegewelle angeordnet sein. Im Speziellen kann sich die Vorgelegewelle durch die zweite Durchgangsöffnung erstrecken.

Das zweite Gehäusemodul kann eine ausgangsseitige Gehäusewand aufweisen. Die ausgangsseitige Gehäusewand des zweiten Gehäusemoduls kann jede Gehäusewand des zweiten Gehäusemoduls sein. Die ausgangsseitige Gehäusewand des zweiten Gehäusemoduls, insbesondere deren Wellenlagerebene, oder die zweite gemeinsame Gehäusewand, insbesondere deren Wellenlagerebene, kann parallel zur eingangsseitigen Gehäusewand des ersten und/oder zweiten Gehäusemoduls, insbesondere deren Wellenlagerebene, und/oder orthogonal zum Antrieb, insbesondere der Antriebswelle, angeordnet sein.

Die ausgangsseitige Gehäusewand des zweiten Gehäusemoduls kann eine vierte Ausgangsöffnung aufweisen. Die vierte Ausgangsöffnung kann zum Anbinden und/oder Verbinden der ersten Eingangsseite mit der fünften Ausgangsseite und/oder zur Durchführung des Antriebs ausgebildet sein. In der vierten Ausgangsöffnung kann die erste Eingangswelle und/oder der Antrieb angeordnet sein. Im Speziellen kann sich die erste Eingangswelle und/oder der Antrieb durch die vierte Ausgangsöffnung erstrecken.

Alternativ oder zusätzlich kann die ausgangsseitige Gehäusewand des zweiten Gehäusemoduls eine fünfte Ausgangsöffnung aufweisen. Die fünfte Ausgangsöffnung kann zur Durchführung und/oder zum Anbinden und/oder Verbinden des Abtriebs, insbesondere der Abtriebswelle, ausgebildet sein. In der fünften Ausgangsöffnung der ausgangsseitige Gehäusewand des zweiten Gehäusemoduls kann der Abtrieb, insbesondere die Abtriebswelle, angeordnet sein. Im Speziellen kann sich der Abtrieb, insbesondere die Abtriebswelle, durch die fünfte Ausgangsöffnung erstrecken.

In Ausgestaltung der Erfindung umfasst die Getriebegehäuseanordnung ein drittes Gehäusemodul mit der dritten Übersetzungseinheit und das erste und zweite und dritte Gehäusemodul sind entlang des Antriebs angeordnet. Im Speziellen können das erste und zweite und dritte Gehäusemodul entlang oder in Richtung des Antriebs, insbesondere der Antriebswelle, nacheinander und/oder direkt benachbart angeordnet sein. Im Speziellen können das zweite und dritte Gehäusemodul direkt benachbart angeordnet sein.

Im dritten Gehäusemodul können das fünfte und sechste Schaltelement und die zweite Übersetzungsstufe angeordnet sein. Alternativ kann im dritten Gehäusemodul die dritte Übersetzungseinheit in Planetenbauweise angeordnet sein. Das dritte Gehäusemodul kann innen liegende Lagerstellen, beispielsweise in Form von Stegen oder anderen Lager- und/oder Befestigungseinrichtungen aufweisen. An und/oder auf und/oder in den Lagerstellen kann die dritte Übersetzungseinheit, insbesondere Komponenten der dritten Übersetzungseinheit, lagerbar sein.

Das dritte Gehäusemodul kann eine eingangsseitige Gehäusewand aufweisen. Die eingangsseitige Gehäusewand des dritten Gehäusemoduls kann jede Gehäusewand des dritten Gehäusemoduls sein. Die eingangsseitige Gehäusewand des dritten Gehäusemoduls, insbesondere deren Wellenlagerebene, kann parallel zur eingangsseitigen Gehäusewand des ersten und/oder zweiten Gehäusemoduls, insbesondere deren Wellenlagerebenen, und/oder orthogonal zum Antrieb, insbesondere der Antriebswelle, angeordnet sein. Die eingangsseitige Gehäusewand des dritten Gehäusemoduls kann eine fünfte Eingangsöffnung aufweisen. Die fünfte Eingangsöffnung kann zum Anbinden und/oder Verbinden der ersten Eingangsseite mit der fünften Ausgangsseite und/oder zur Durchführung des Antriebs ausgebildet sein. In der fünften Eingangsöffnung kann die erste Eingangswelle und/oder der Antrieb angeordnet sein. Im Speziellen kann sich die erste Eingangswelle und/oder der Antrieb durch die vierte Eingangsöffnung erstrecken. Die Mittellinie der vierten Ausgangsöffnung und die Mittellinie der fünften Eingangsöffnung können koaxial oder achsparallel sein. Das dritte Gehäusemodul kann eine ausgangsseitige Gehäusewand aufweisen. Die ausgangsseitige Gehäusewand des dritten Gehäusemoduls kann jede Gehäusewand des dritten Gehäusemoduls sein. Die ausgangsseitige Gehäusewand des dritten Gehäusemoduls, insbesondere deren Wellenlagerebene, kann parallel zur eingangsseitigen Gehäusewand des ersten und/oder zweiten und/oder dritten Gehäusemoduls, insbesondere deren Wellenlagerebenen, und/oder orthogonal zum Antrieb, insbesondere der Antriebswelle, angeordnet sein.

Alternativ oder zusätzlich kann die ausgangsseitige Gehäusewand des dritten Gehäusemoduls eine sechste Ausgangsöffnung aufweisen. Die sechste Ausgangsöffnung kann zur Durchführung des Antriebs ausgebildet sein. In der sechsten Ausgangsöffnung kann der Antrieb angeordnet sein. Im Speziellen kann sich der Antrieb durch die sechste Ausgangsöffnung erstrecken.

Die ausgangsseitige Gehäusewand des zweiten Gehäusemoduls und die eingangsseitige Gehäusewand des dritten Gehäusemoduls können alternativ als zweite gemeinsame Gehäusewand des zweiten und dritten Gehäusemoduls ausgebildet sein. Die zweite gemeinsame Gehäusewand kann eine dritte Durchgangsöffnung aufweisen. Die vierte Ausgangsöffnung und die fünfte Eingangsöffnung können als die dritte Durchgangsöffnung ausgebildet sein. Die dritte Durchgangsöffnung übernimmt in diesem Fall die Funktion der vierten Ausgangsöffnung und der fünften Eingangsöffnung. In der dritten Durchgangsöffnung können die erste Eingangswelle und/oder der Antrieb angeordnet sein. Im Speziellen können sich die erste Eingangswelle und/oder der Antrieb durch die dritte Durchgangsöffnung erstrecken.

Alternativ oder zusätzlich kann die ausgangsseitige Gehäusewand des dritten Gehäusemoduls eine siebte Ausgangsöffnung aufweisen. Die siebte Ausgangsöffnung kann zur Durchführung und/oder zum Anbinden und/oder Verbinden des Abtriebs, insbesondere der Abtriebswelle, ausgebildet sein. In der siebten Ausgangsöffnung der kann der Abtrieb, insbesondere die Abtriebswelle, angeordnet sein. Im Speziellen kann sich der Abtrieb, insbesondere die Abtriebswelle, durch die siebte Ausgangsöffnung erstrecken.

In Ausgestaltung der Erfindung, umfasst die Getriebegehäuseanordnung ein viertes Gehäusemodul mit der vierten Übersetzungseinheit. Das erste und zweite und dritte und vierte Gehäusemodul sind entlang des Antriebs angeordnet. Im Speziellen können die Gehäusemodule in der Reihenfolge viertes und erstes und zweites und drittes Gehäusemodul entlang oder in Richtung des Antriebs, insbesondere der Antriebswelle, nacheinander und/oder direkt benachbart angeordnet sein. Im Speziellen können das vierte und erste und das erste und zweite und das zweite und dritte Gehäusemodul direkt benachbart angeordnet sein.

Im vierten Gehäusemodul kann zusätzlich die Vorgelegewelle angeordnet sein. Das vierte Gehäusemodul kann innen liegende Lagerstellen, beispielsweise in Form von Stegen oder anderen Lager- und/oder Befestigungseinrichtungen aufweisen. An und/oder auf und/oder in den Lagerstellen kann die vierte Übersetzungseinheit, insbesondere Komponenten der dritten Übersetzungseinheit, und/oder die Vorgelegewelle lagerbar sein.

Das vierte Gehäusemodul kann eine eingangsseitige Gehäusewand aufweisen. Die eingangsseitige Gehäusewand des vierten Gehäusemoduls kann jede Gehäusewand des vierten Gehäusemoduls sein. Die eingangsseitige Gehäusewand des vierten Gehäusemoduls, insbesondere deren Wellenlagerebene, kann parallel zur eingangsseitigen Gehäusewand des ersten und/oder zweiten und/oder dritten Gehäusemoduls, insbesondere deren jeweiliger Wellenlagerebene, und/oder orthogonal zum Antrieb, insbesondere der Antriebswelle, angeordnet sein.

Die eingangsseitige Gehäusewand des vierten Gehäusemoduls kann eine sechste Eingangsöffnung aufweisen. Die sechste Eingangsöffnung kann zur Durchführung des Antriebs ausgebildet sein. In der sechsten Eingangsöffnung kann der Antrieb angeordnet sein. Im Speziellen kann sich der Antrieb durch die sechste Eingangsöffnung erstrecken.

Alternativ oder zusätzlich kann die eingangsseitige Gehäusewand des vierten Gehäusemoduls eine siebte Eingangsöffnung aufweisen. Die siebte Eingangsöffnung kann zur Durchführung der Vorgelegewelle ausgebildet sein. In der siebten Eingangsöffnung der eingangsseitigen Gehäusewand des vierten Gehäusemoduls kann die Vorgelegewelle angeordnet sein. Im Speziellen kann sich die Vorgelegewelle durch die siebte Eingangsöffnung erstrecken.

Das vierte Gehäusemodul kann eine ausgangsseitige Gehäusewand aufweisen. Die ausgangsseitige Gehäusewand des vierten Gehäusemoduls kann jede Gehäusewand des zweiten Gehäusemoduls sein. Die ausgangsseitige Gehäusewand des zweiten Gehäusemoduls, insbesondere deren Wellenlagerebene, kann parallel zur eingangsseitigen Gehäusewand des ersten und/oder zweiten und/oder dritten Gehäusemoduls, insbesondere deren jeweilige Wellenlagerebene, und/oder orthogonal zum Antrieb, insbesondere der Antriebswelle, angeordnet sein.

Die ausgangsseitige Gehäusewand des vierten Gehäusemoduls kann eine achte Ausgangsöffnung aufweisen. Die achte Ausgangsöffnung kann zur Durchführung der zweiten Eingangswelle und/oder des Antriebs und/oder zum Anbinden und/oder Verbinden der zweiten und/oder siebten Eingangsseite ausgebildet sein. Alternativ oder zusätzlich kann die achte Ausgangsöffnung zum Anbinden und/oder Verbinden der vierten Übersetzungseinheit mit der ersten Übersetzungseinheit, ausgebildet sein. In der achten Ausgangsöffnung kann die zweite Eingangswelle und/oder der Antrieb angeordnet sein. Im Speziellen kann sich die zweite Eingangswelle und/oder der Antrieb durch die achte Ausgangsöffnung erstrecken.

Alternativ oder zusätzlich kann die ausgangsseitige Gehäusewand des vierten Gehäusemoduls kann eine neunte Ausgangsöffnung aufweisen. Die neunte Ausgangsöffnung kann zur Durchführung und/oder zum Anbinden und/oder Verbinden der Vorgelegewelle ausgebildet sein. In der neunten Ausgangsöffnung der ausgangsseitige Gehäusewand des vierten Gehäusemoduls kann die Vorgelegewelle angeordnet sein. Im Speziellen kann sich die Vorgelegewelle durch die neunte Ausgangsöffnung erstrecken.

In dieser Ausführungsform, als wenn die Getriebegehäuseanordnung das erste, zweite, dritte und vierte Gehäusemodul umfasst, können die gemeinsamen Gehäusewände wie folgt anders ausgebildet und angeordnet sein.

Die ausgangsseitige Gehäusewand des vierten Gehäusemoduls und die eingangsseitige Gehäusewand des ersten Gehäusemoduls können alternativ als dritte gemeinsame Gehäusewand des ersten und vierten Gehäusemoduls ausgebildet sein. Die dritte gemeinsame Gehäusewand kann eine vierte Durchgangsöffnung aufweisen. Die achte Ausgangsöffnung und die erste Eingangsöffnung können als die vierte Durchgangsöffnung ausgebildet sein. Die vierte Durchgangsöffnung übernimmt in diesem Fall die Funktion der achten Ausgangsöffnung und der ersten Eingangsöffnung. Alternativ oder zusätzlich kann die dritte gemeinsame Gehäusewand eine fünfte Durchgangsöffnung aufweisen. Die neunte Ausgangsöffnung und die zweite Eingangsöffnung können als die fünfte Durchgangsöffnung ausgebildet sein. Die fünfte Durchgangsöffnung übernimmt in diesem Fall die Funktion der neunten Ausgangsöffnung und der zweiten Eingangsöffnung. In der vierten Durchgangsöffnung kann die zweite Eingangswelle und/oder der Antrieb, insbesondere die Antriebswelle, angeordnet sein. Im Speziellen können sich die zweite Eingangswelle und/oder der Antrieb, insbesondere die Antriebswelle, durch die vierte Durchgangsöffnung erstrecken. In der fünften Durchgangsöffnung kann die Vorgelegewelle angeordnet sein. Im Speziellen kann sich die Vorgelegewelle durch die fünfte Durchgangsöffnung erstrecken.

Die erste bis siebte Eingangsöffnung und/oder die erste bis neunte Ausgangsöffnung und/oder die erste bis fünfte Durchgangsöffnung können jeweils als Durchgang, insbesondere zentraler Durchgang, ausgebildet und/oder ausgeführt sein. Im Speziellen können erste bis siebte Eingangsöffnung und/oder die erste bis neunte Ausgangsöffnung und/oder die erste bis sechste Durchgangsöffnung jeweils als Wellendurchführung, insbesondere zentrale Wellendurchführungen, für die erste und/oder zweite Eingangswelle und/oder die Vorgelegewelle und/oder den Antrieb, insbesondere die Antriebswelle, und/oder den Abtrieb ausgebildet und/oder ausgeführt sein.

Weitere Anschlussmöglichkeiten für weitere Gehäusemodule können an der Gehäusewand des ersten und/oder zweiten und/oder dritten und/oder vierten Gehäusemoduls vorgesehen sein, um beispielsweise das erste und/oder zweite Differenzialgetriebe oder den ersten Leistungsausgang an die sich durch die eingangs- und/oder ausgangsseitigen Gehäusewände erstreckende Vorgelegewelle und/oder Antrieb und/oder Abtrieb anschließen zu können.

Das erste und zweite und/oder dritte und/oder vierte Gehäusemodule können entlang einer Längsachse der Getriebegehäuseanordnung, und insbesondere einer Längsachse der Arbeitsmaschine, angeordnet sein. Die Längsachse der Getriebegehäuseanordnung und eine Längsachse der Arbeitsmaschine und/oder der Antrieb können identisch oder parallel sein.

Die Getriebegehäuseanordnung kann somit vorteilhafterweise modular aufgebaut sein. Modular soll in diesem Zusammenhang bedeuten, dass die Getriebegehäuseanordnung aus mehreren Gehäusemodulen zusammengesetzt ist und für jede der oben beschriebenen Übersetzungseinheiten ein Gehäusemodul ausgebildet ist, welches im Zusammenbau mit den anderen Gehäusemodulen die gesamte Getriebegehäuseanordnung darstellt. Die benachbarten und/oder aneinander anliegenden Gehäusewände können dabei als getrennte oder gemeinsame Gehäusewände ausgebildet sein. Eine derartige Anordnung ermöglicht, dass sich ein Wechsel der Übersetzungseinheiten leicht und kostengünstig ausführen lässt, ohne die gesamte Antriebsvorrichtung komplett demontieren zu müssen. Hier werden die Vorteile einer Getriebegehäuseanordnung und/oder Antriebsvorrichtung im Hinblick auf einen geringeren Montageaufwand, hohen Grad an Kompatibilität und Variabilität deutlich. Im Weiteren kann vorteilhafterweise kann durch die Getriebegehäuseanordnung die Antriebsvorrichtung modular angeordnet und/oder modular aufgebaut sein.

Die Erfindung betrifft weiter eine Arbeitsmaschine mit einer Antriebsvorrichtung, insbesondere eine Antriebsvorrichtung nach einem der Ansprüche 1 bis 10, oder einer Getriebegehäuseanordnung, insbesondere einer Getriebegehäuseanordnung nach einem der Ansprüche 11 bis 13. Die Arbeitsmaschine kann eine Baumaschine oder ein Zugfahrzeug, bevorzugt ein landwirtschaftliches Zugfahrzeug, beispielsweise ein Traktor oder Schlepper sein. Die Arbeitsmaschine weist die oben beschriebenen Vorteile der Antriebsvorrichtung und/oder Getriebegehäuseanordnung auf.

Die Arbeitsmaschine umfasst die Antriebsvorrichtung oder die Getriebegehäuseanordnung. Die Antriebsvorrichtung ist zum Antreiben der Arbeitsmaschine ausgebildet. Die Arbeitsmaschine kann eine, zwei oder mehrere Achse(n) umfassen. Die Arbeitsmaschine kann mit einer Drehzahl und/oder Kraft und/oder einem Drehmoment des Motors antreibbar sein.

Die Steuereinheit kann zur Steuerung und/oder Regelung, insbesondere zum Einstellen und/oder Verstellen, der Arbeitsmaschine, insbesondere des Motors eingerichtet sein. Die Arbeitsmaschine kann eine Ein- und Ausgabeeinheit umfassen. Die Steuereinheit kann mit der Ein- und Ausgabeeinheit signalverbunden und/oder wirkend gekoppelt und/oder signalübertragend und/oder datenleitend verbunden sein, und/oder mit der Ein- und Ausgabeeinheit ansteuerbar und/oder einstellbar und/oder verstellbar sein. Die Ein- und Ausgabeeinheit kann in die Steuereinheit oder umgekehrt integriert sein. Der Bediener der Arbeitsmaschine kann mit der oder durch die Ein- und Ausgabeeinheit beispielsweise eine Geschwindigkeit der Arbeitsmaschine einstellen und/oder verstellen.

Die Arbeitsmaschine kann ausserdem eines oder mehrere Hilfsaggregate umfassen, beispielsweise eine Pumpe und/oder einen Kühler etc.. Die Hilfsaggregate können ein Bestandteil der Hydraulik des Antriebsvorrichtung sein. Die Arbeitsmaschine kann den ersten Leistungsausgang, insbesondere die Zapfwelleneinheit umfassen. Die Steuereinheit kann konfiguriert sein, die Antriebsvorrichtung und/oder die Achse und/oder Arbeitsmaschine mit einem Fahrsignal einzustellen und/oder zu verstellen und/oder anzusteuern und mit dem oder basierend auf dem Fahrsignal eine Geschwindigkeit der Arbeitsmaschine einzustellen und/oder zu verstellen, insbesondere zu erhöhen oder zu verringern. Die Arbeitsmaschine kann das oder die Bodeneingriffsmittel umfassen. Die Bodeneingriffsmittel können die Arbeitsmaschine auf dem Boden abstützen und/oder tragen. Ein Zugfahrzeugrahmen der Arbeitsmaschine, insbesondere ein erstes und zweites Rahmenelement, kann sich auf die Bodeneingriffsmittel abstützen. Die Bodeneingriffsmittel können Räder oder Raupen oder Ketten sein. Die Bodeneingriffsmittel können insbesondere Vorderräder und Hinterräder sein. Die Arbeitsmaschine kann einen Geschwindigkeitssensor, beispielsweise einen Drehzahlsensor, zur Erfassung einer Geschwindigkeit der Arbeitsmaschine umfassen. Im Speziellen kann die Steuereinheit konfiguriert sein, eine Kraft und/oder ein Drehmoment und/oder eine Drehzahl des Motors und/oder des ersten und/oder zweiten Variators mit dem Fahrsignal einzustellen und/oder zu verstellen und/oder anzusteuern.

In Ausgestaltung der Erfindung umfasst die Arbeitsmaschine zwei Rahmenelemente, insbesondere ein erstes und ein zweites Rahmenelement. Die die Antriebsvorrichtung, bevorzugt die Getriebegehäuseanordnung, besonders bevorzugt das erste und/oder zweite und/oder dritte und/oder vierte Gehäusemodul, ist an, insbesondere zwischen, den Rahmenelementen angeordnet. Die Rahmenelemente, insbesondere das erste und zweite Rahmenelement, können parallel zur Längsachse der Arbeitsmaschine angeordnet sein. Die Getriebegehäuseanordnung, insbesondere das erste und zweite und/oder dritte und/oder vierte Gehäusemodule, können entlang der Längsachse der Arbeitsmaschine angeordnet sein. Die Längsachse der Getriebegehäuseanordnung und die Längsachse der Arbeitsmaschine können identisch oder parallel sein. Das erste und/oder zweite und/oder dritte und/oder vierte Gehäusemodul können zwischen den Rahmenelementen angeordnet sein, insbesondere auch an diesen befestigt und/oder gelagert sein. Ebenso kann die Zapfwelleneinheit an den Rahmenelementen angeordnet sein, insbesondere an diesen befestigt und/oder gelagert sein.

Die Schaltelemente, insbesondere deren Ventile oder Ventileinrichtungen oder Aktuatoren, und/oder der Motor und/oder der erste Leistungsausgang, insbesondere die Zapfwelleneinheit, und/oder der erste und/oder zweite Variator und/oder der Energiespeicher und/oder die Leistungselektronik können mit der Steuereinheit ansteuerbar und/oder einstellbar und/oder verstellbar, bevorzugt steuerbar und/oder regelbar sein. Die Steuereinheit kann Signale zur Steuerung des Betriebs der Antriebsvorrichtung und/oder der Arbeitsmaschine versenden und/oder empfangen. Zweckmäßigerweise können die Signale über ein geeignetes Datenkommunikationsnetzwerk bereitgestellt werden, beispielsweise eines, das dem ISOBUS- und/oder CAN-Standard entspricht. Die Steuereinheit kann als ein elektronisches Modul, ein eingebettetes System, eine Recheneinheit, ein Computer, als ein Modul zum Steuern und/oder Regeln der Antriebsvorrichtung und/oder der Arbeitsmaschine ausgebildet sein. Die Steuereinheit kann einen oder mehrere Prozessoren, einen Speicher und/oder alle Software, Hardware, Algorithmen, Anschlüsse, insbesondere auch Sensoren, umfassen, die für die Steuerung und/oder Regelung der Antriebsvorrichtung und/oder der Arbeitsmaschine erforderlich sind. Verfahren können als Programm oder Algorithmus ausgebildet sein, welche auf und/oder mit der Steuereinheit ausführbar sind. Die Steuereinheit kann jedes Gerät umfassen, das Daten von verschiedenen Sensoren analysiert, Daten vergleichen und die erforderlichen Entscheidungen treffen, um den Betrieb der Antriebsvorrichtung und/oder der Arbeitsmaschine und die erforderlichen Aufgaben zur Steuerung und/oder Regelung des Betriebs der Antriebsvorrichtung und/oder der Arbeitsmaschine, zu steuern und/oder zu regeln und/oder auszuführen. Die Steuereinheit kann mit den Bauteilen der Antriebsvorrichtung und/oder der Arbeitsmaschine, also insbesondere dem ersten Leistungsausgang und/oder dem Motor und/oder dem ersten und/oder zweiten Variator und/oder den Sensoren, beispielsweise der Geschwindigkeitssensor und/oder der Energiespeicher und/oder die Leistungselektronik und/oder der oder den Drehzahl- und/oder Drehmomentsensor(en) signalverbunden und/oder wirkend gekoppelt und/oder signalübertragend und/oder datenleitend verbunden sein. Unter einer signalverbunden und/oder wirkend gekoppelten und/oder signalübertragenden und/oder datenleitenden Verbindung kann dabei unter anderem verstanden werden, dass ein Austausch von Signalen bzw. Daten zwischen den verbundenen Bauteilen und der Steuereinheit stattfinden kann. Signale können beispielsweise von der Steuereinheit empfangen und versendet werden und/oder verarbeitet und/oder bearbeitet werden. Die Verbindung zwischen der Steuereinheit sowie den Bauteilen bzw. Komponenten der Antriebsvorrichtung und/oder der Arbeitsmaschine kann kabelgebunden, insbesondere also mit Kabel, und/oder kabellos, also per Funk, beispielsweise mit Bluetooth oder WLAN realisiert sein. Die Kommunikation kann beispielsweise mittels Isobus, CAN-Bus oder ähnlichem erfolgen. Die Steuereinheit kann unmittelbar mit, insbesondere mit der in einer Kabine der Arbeitsmaschine angeordneten, Ein- und Ausgabeeinheit in Verbindung stehen, durch welche von einer Bedienperson eingegebene Daten an die Steuereinheit übertragen oder von dieser empfangen und ausgegeben werden können. Die Steuereinheit kann in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung eines ersten Ausführungsbeispiels einer erfindungsgemässen Arbeitsmaschine mit einer erfindungsgemässen Antriebsvorrichtung, und
- Fig. 2: eine schematische Darstellung eines ersten Ausführungsbeispiels der erfindungsgemässen Antriebsvorrichtung, und
- Fig. 3: eine schematische Darstellung eines zweiten Ausführungsbeispiels der erfindungsgemässen Antriebsvorrichtung, und
- Fig. 4: eine schematische Darstellung eines dritten Ausführungsbeispiels der erfindungsgemässen Antriebsvorrichtung, und
- Fig. 5: eine schematische Darstellung eines vierten Ausführungsbeispiels der erfindungsgemässen Antriebsvorrichtung, und
- Fig. 6: eine schematische Darstellung eines fünften Ausführungsbeispiels der erfindungsgemässen Antriebsvorrichtung, und
- Fig. 7: eine schematische Darstellung eines sechsten Ausführungsbeispiels der erfindungsgemässen Antriebsvorrichtung, und
- Fig. 8: eine schematische Darstellung eines siebten Ausführungsbeispiels der erfindungsgemässen Antriebsvorrichtung, und
- Fig. 9: eine schematische Darstellung eines achten Ausführungsbeispiels der erfindungsgemässen Antriebsvorrichtung, und
- Fig. 10: eine schematische Darstellung eines neunten Ausführungsbeispiels der erfindungsgemässen Antriebsvorrichtung, und
- Fig. 11: eine schematische Darstellung eines Ausführungsbeispiels der ersten Übersetzungseinheit, und
- Fig. 12: eine schematische Darstellung eines weiteren Ausführungsbeispiels der ersten Übersetzungseinheit, und
- Fig. 13: eine schematische Darstellung eines Ausführungsbeispiels der dritten Übersetzungseinheit, und
- Fig. 14: eine schematische Darstellung eines Ausführungsbeispiels der vierten Übersetzungseinheit, und
- Fig. 15: eine schematische Darstellung eines Ausführungsbeispiels der zweiten Übersetzungseinheit, und
- Fig. 16: eine schematische Darstellung eines weiteren Ausführungsbeispiels der zweiten Übersetzungseinheit, und
- Fig. 17: eine schematische Darstellung eines ersten Ausführungsbeispiel einer erfindungsgemässen Getriebegehäuseanordnung, und
- Fig. 18: eine schematische Darstellung eines zweiten Ausführungsbeispiel einer erfindungsgemässen Getriebegehäuseanordnung, und
- Fig. 19: eine schematische Darstellung eines dritten Ausführungsbeispiel einer erfindungsgemässen Getriebegehäuseanordnung, und
- Fig. 20: eine schematische Darstellung eines weiteren Ausführungsbeispiels einer erfindungsgemässen Arbeitsmaschine mit einer erfindungsgemässen Getriebegehäuseanordnung und Antriebsvorrichtung.

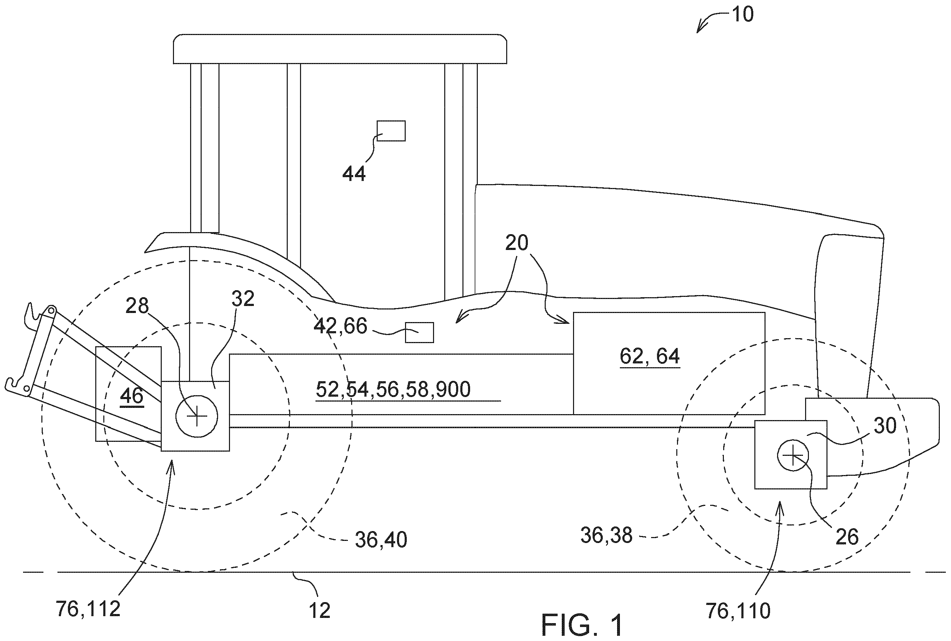

Figur 1 zeigt eine schematische Darstellung eines ersten Ausführungsbeispiels einer erfindungsgemässen Arbeitsmaschine 10, hier eines landwirtschaftlichen Zugfahrzeugs oder Traktors bzw. Schleppers, mit einer erfindungsgemässen Antriebsvorrichtung 20. Die Arbeitsmaschine 10 ist mit der Antriebsvorrichtung 20 antreibbar.

Die Antriebsvorrichtung 20 umfasst einen Antrieb 52, der insbesondere als Antriebswelle 50, ausgebildet sein kann, und einen Abtrieb 54, der insbesondere als eine Abtriebswelle 60 ausgebildet sein kann, und eine erste und zweite Übersetzungseinheit 56, 58. Die Arbeitsmaschine 10, insbesondere die Antriebsvorrichtung 20, umfasst eine erste Fahrzeugachse 26 und eine zweite Fahrzeugachse 28. Die erste Fahrzeugachse 26 kann eine Vorderachse und die zweite Fahrzeugachse 28 eine Hinterachse sein. Ausserdem kann die erste Fahrzeugachse 26 als lenkbare Achse ausgeführt sein. Die Arbeitsmaschine 10 kann eines oder mehrere Bodeneingriffsmittel 36, hier in Form von Rädern 38, 40 dargestellt, aufweisen, welche mit einem Untergrund 12 zur Übertragung von Antriebskräften in Eingriff stehen und/oder durch die sich die Arbeitsmaschine 10 auf dem Untergrund 12 abstützt. Die Arbeitsmaschine 10, insbesondere die Antriebsvorrichtung 20, kann einen Fahrantrieb 76, insbesondere einen Vorderachsantrieb 110 und einen Hinterachsantrieb 112 umfassen. Der Fahrantrieb 76 kann die erste Fahrzeugachse 26 und/oder die zweite Fahrzeugachse 28 und/oder ein erstes Differenzialgetriebe 30 und/oder ein zweites Differenzialgetriebe 32 und/oder das oder die Bodeneingriffsmittel 36 umfassen. Die Arbeitsmaschine 10, insbesondere die Antriebsvorrichtung 20, kann einen Vorderachsantrieb 110 aufweisen, der die erste Fahrzeugachse 26 und/oder das erste Differenzialgetriebe 30, also insbesondere ein Vorderachsdifferenzial, und/oder das oder die Bodeneingriffsmittel 36 umfassen kann. Ebenso kann die Arbeitsmaschine 10, oder insbesondere die Antriebsvorrichtung 20, einen Hinterachsantrieb 112 aufweisen, der die zweite Fahrzeugachse 28 und/oder das zweite Differenzialgetriebe 32, also insbesondere ein Hinterachsdifferenzial, und/oder das oder die Bodeneingriffsmittel 36 umfassen kann. Die erste Fahrzeugachse 26 kann mit dem ersten Differenzialgetriebe 30 verbunden sein. Die zweite Fahrzeugachse 28 kann mit dem zweiten Differenzialgetriebe 32 verbunden sein.

Der Abtrieb 54 kann mit dem Fahrantrieb 76, insbesondere dem ersten und/oder zweiten Differenzialgetriebe 30, 32, insbesondere nur mit dem zweiten Differenzialgetriebe 32, verbunden sein. Der Abtrieb 54 kann über das zweite oder mit dem zweiten Differenzialgetriebe 32 mit der zweiten Fahrzeugachse 28 verbunden sein. Über das erste oder mit dem ersten Differenzialgetriebe 30 und/oder das zweite oder mit dem zweiten Differenzialgetriebe 32 kann eine Kraft und/oder ein Drehmoment und/oder eine Drehzahl vom Abtrieb 54 an die erste und/oder zweite Fahrzeugachse 26, 28, und somit insbesondere an die Bodeneingriffsmittel 36, übertragbar sein.

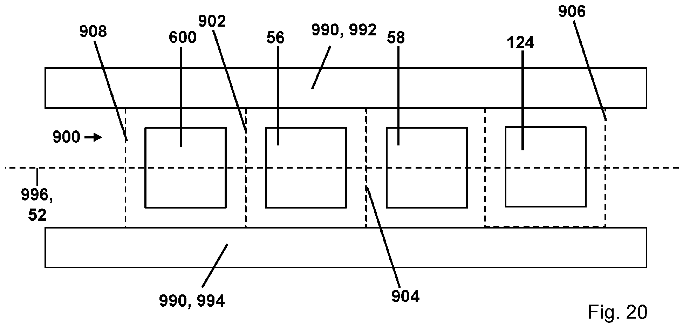

Die Antriebsvorrichtung 20 oder die Arbeitsmaschine 10 kann einen Motor 62 umfassen. Der Motor 62 kann mit dem Antrieb 52 verbindbar oder verbunden sein. Mit der Antriebsvorrichtung 20, insbesondere dem Motor 62, kann eine Drehbewegung und/oder Kraft und/oder ein Drehmoment und/oder eine Drehzahl erzeugbar und, insbesondere über die erste und/oder eine zweite Übersetzungseinheit 56, 58, auf den Abtrieb 54, auf die erste und/oder zweite Fahrzeugachse 26, 28 übertragbar sein. Die erste und/oder zweite Fahrzeugachse 26, 28 wandeln die Drehbewegung und/oder Kraft und/oder das Drehmoment und/oder die Drehzahl in eine Drehbewegung und/oder Kraft und/oder ein Drehmoment und/oder Drehzahl eines oder mehrerer Bodeneingriffsmittel 36 und somit in einen Schub der Arbeitsmaschine 10 um. Die Arbeitsmaschine 10 kann ausserdem ein Zugfahrzeugrahmen umfassen, der insbesondere ein erstes und zweites Rahmenelement 960, 962, 964 (siehe Figur 20) aufweisen kann. Der Zugfahrzeugrahmen kann insbesondere von den an der ersten und/oder zweiten Fahrzeugachse 28, 30 aufgehängten Bodeneingriffsmitteln 36, insbesondere den Rädern 38, 40 getragen werden kann. Im Speziellen sind ein erstes Paar Räder 38 an der ersten Fahrzeugachse 26 und ein zweites Paar Räder 40 an der zweiten Fahrzeugachse 28 angeordnet sein. Dabei können die Durchmesser der Rädern 38, 40 voneinander abweichen, insbesondere kann der Durchmesser des ersten Paars Räder 38 kleiner als der Durchmesser des zweiten Paars Räder 40 sein. Alternativ können die Bodeneingriffsmittel 36 auch als Raupen oder Ketten ausgebildet und angeordnet sein.

Die Arbeitsmaschine 10, insbesondere die Antriebsvorrichtung 20, kann einen ersten Leistungsausgang 46 umfassen. Der erste Leistungsausgang 46 kann eine Zapfwelleneinheit 90 umfassen. Der erste Leistungsausgang 46 kann zum Antreiben eines Arbeitsgeräts (nicht gezeigt) vorgesehen sein, das über eine Schnittstelle (z.B. Dreipunktschnittstelle) an der Arbeitsmaschine 10 anbringbar ist.

Die Arbeitsmaschine 10, insbesondere alternativ oder zusätzlich die Antriebsvorrichtung 20, kann eine Steuereinheit 42 und/oder eine Ein- und Ausgabeeinheit 44 umfassen. Die Steuereinheit 42 kann mit der Ein- und Ausgabeeinheit 44 signalverbunden und/oder wirkend gekoppelt und/oder signalübertragend und/oder datenleitend verbunden sein. Im Speziellen kann die Steuereinheit 42 unmittelbar mit der in einer Kabine der Arbeitsmaschine 10 angeordneten Ein- und Ausgabeeinheit 44 Verbindung stehen, durch welche von einer Bedienperson eingegebene Daten an die Steuereinheit 42 übertragen oder von dieser empfangen und ausgegeben werden können. Die Antriebsvorrichtung 20, und/oder insbesondere die Arbeitsmaschine 10, kann mit der Steuereinheit 42 einstellbar und/oder verstellbar sein. Die Steuereinheit 42 ist mit dem Motor 62 signalverbunden und/oder wirkend gekoppelt und/oder signalübertragend und/oder datenleitend verbunden. Die Steuereinheit 42 ist konfiguriert, die Drehzahl und/oder das Drehmoment und/oder die Kraft der Antriebsvorrichtung 20, insbesondere des Motors 62 einzustellen und/oder zu verstellen, insbesondere diese anzusteuern und/oder zu steuern und/oder zu regeln.

Die Steuereinheit 42 kann konfiguriert sein, eine vorgebbare Drehzahl und/oder ein vorgebbares Drehmoment und/oder eine vorgebbare Kraft der Antriebsvorrichtung 20, insbesondere des Motors 62 einzustellen und/oder zu verstellen, insbesondere diese anzusteuern und/oder zu steuern und/oder zu regeln. Die Steuereinheit 42 kann konfiguriert sein, die Antriebsvorrichtung 20, insbesondere alternativ oder zusätzlich die Arbeitsmaschine 10, einzustellen und/oder zu verstellen, um die Drehzahl und/oder das Drehmoment und/oder die Kraft des Motors 62 einzustellen und/oder zu verstellen, insbesondere zu steuern und/oder zu regeln.

Ausserdem kann die Arbeitsmaschine 10, alternativ oder zusätzlich die Antriebsvorrichtung 20, eine Leistungselektronik 66 umfassen, um die elektrische Leistung bzw. Energie zwischen der ersten und/oder zweiten Variator 70, 74, insbesondere wenn diese als erster und/oder zweiter Elektromotor 500, 502 ausgebildet sind, und einem Energiespeicher 64 zu übertragen. Der Energiespeicher 64 kann die elektrisch angetriebenen Komponenten der Antriebsvorrichtung 20, bevorzugt den ersten und/oder zweiten Elektromotor 500, 502, mit Strömen bzw. Spannungen geeigneter Frequenz und Amplituden, um gewünschte Ausgangsdrehzahlen oder -Drehmomente für den ersten Leistungsausgang 46 und/oder die Antriebsvorrichtung 20 bereitzustellen.

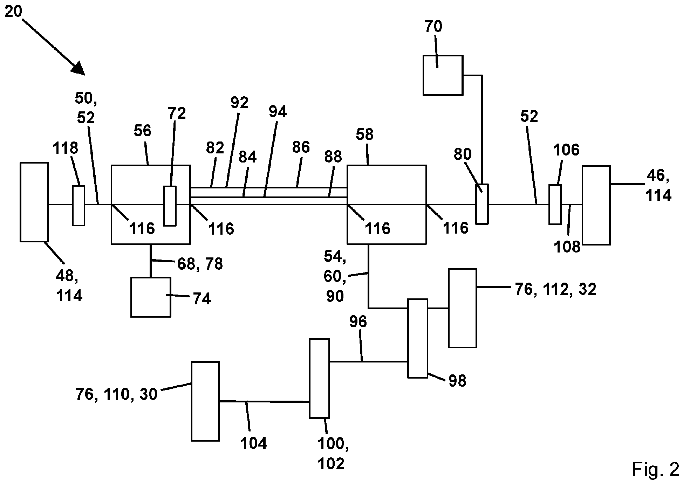

Figur 2 zeigt eine schematische Darstellung eines ersten Ausführungsbeispiels der erfindungsgemässen Antriebsvorrichtung 20. Die in Figur 2 gezeigte Antriebsvorrichtung 20 entspricht im Wesentlichen der in Figur 1 Antriebsvorrichtung 20, sodass im Folgenden lediglich auf Details und/oder Unterschiede eingegangen wird. Die in Figur 1 dargestellte Arbeitsmaschine 10 kann die in Figur 2 dargestellte Antriebsvorrichtung 20 umfassen.

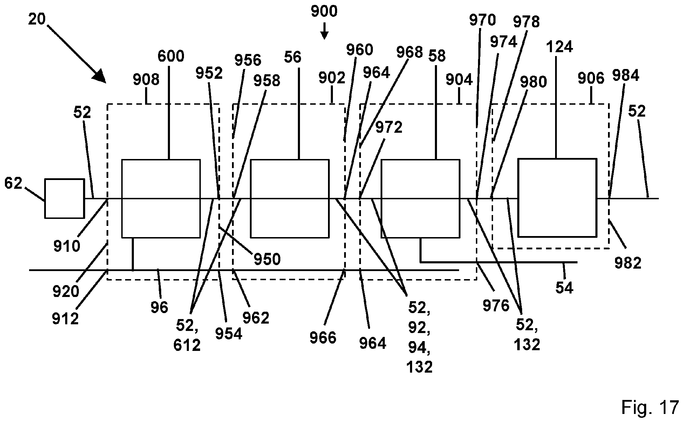

Die Antriebsvorrichtung 20 für eine Arbeitsmaschine 10 oder eine Getriebegehäuseanordnung 900 (siehe Figuren 17 bis 20) gemäss Figur 2 umfasst einen Antrieb 52, der insbesondere als Antriebswelle 50 ausgebildet sein kann, und einen Abtrieb 54, der insbesondere als Abtriebswelle 60 ausgebildet sein kann. Die Antriebsvorrichtung 20 umfasst weiter einen ersten und zweiten Variator 70, 74. Der erste Variator 70 kann als ein erster Elektromotor 500 und der zweite Variator 74 als ein zweiter Elektromotor 502 ausgebildet sein. Der erste und zweite Variator 70, 74 können aber auch als Hydrostat, insbesondere Hydraulikpumpe und Hydraulikmotor ausgebildet sein.

Die Antriebsvorrichtung 20 umfasst ausserdem die erste Übersetzungseinheit 56, wobei die erste Übersetzungseinheit 56 als ein Planetenkoppelgetriebe 300 mit einer ersten und zweiten Eingangsseite 72, 78 und einer ersten und zweiten Ausgangsseite 82, 84 ausgebildet ist. Die erste Übersetzungseinheit 56, insbesondere das Planetenkoppelgetriebe 300, kann zwei verschiedenen Standübersetzungen aufweisen.

Der erste Variator 70 ist mit dem Antrieb 52, insbesondere die Antriebswelle 50, verbindbar oder verbunden, insbesondere über eine oder durch eine erste Übersetzungsstufe 80. Der erste Variator 70 ist ausserdem über den oder durch den Antrieb 52, insbesondere die Antriebswelle 50, mit der ersten Übersetzungseinheit 56, bevorzugt der ersten Eingangsseite 72, verbindbar oder verbunden. Die erste Eingangsseite 72 kann mit einer ersten Eingangswelle 132 verbunden sein. Der zweite Variator 74 ist mit der zweiten Eingangsseite 78 verbindbar oder verbunden, insbesondere über eine oder durch eine zweite Übersetzungsstufe 68. Die zweite Eingangsseite 78 kann mit einer zweiten Eingangswelle 612 verbunden sein.

Die Antriebsvorrichtung 20 umfasst weiter eine zweite Übersetzungseinheit 58 mit einer dritten und vierten Eingangsseite 86, 88 und mindestens einer dritten Ausgangsseite 90. Die zweite Übersetzungseinheit 58 kann eine erste Stirnradstufe 306 und/oder eine zweite Stirnradstufe 314 und/oder ein drittes Planetengetriebe 614 und mindestens ein erstes und zweites Schaltelement 308, 310 umfassen. Die erste Ausgangsseite 82 ist mit der dritten Eingangsseite 86 und/oder die zweite Ausgangsseite 84 ist mit der vierten Eingangsseite 88 verbindbar oder verbunden. Die erste Ausgangsseite 82 und die dritte Eingangsseite 86 können als eine dritte Eingangswelle 92 ausgebildet sein. Im Speziellen sind die erste Ausgangsseite 82 und die dritte Eingangsseite 86 über oder durch die dritte Eingangswelle 92 verbunden. Die zweite Ausgangsseite 84 und die vierte Eingangsseite 88 können als eine vierte Eingangswelle 94 ausgebildet sein. Im Speziellen sind die erste Ausgangsseite 82 und die dritte Eingangsseite 86 über oder durch die vierte Eingangswelle 94 verbunden. Die zweite Übersetzungseinheit 58, insbesondere die dritte Ausgangsseite 90, ist mit dem Abtrieb 54, insbesondere der Abtriebswelle 60, verbindbar oder verbunden. Der Abtrieb 54 kann ausserdem mit dem Fahrantrieb 76, bevorzugt dem Hinterachsantrieb 112, besonders bevorzugt dem zweiten Differenzialgetriebe 32 verbindbar oder verbunden sein. Ebenso kann der Abtrieb 54 mit einer Vorgelegewelle 96 verbindbar oder verbunden sein, insbesondere über eine oder durch eine dritte Übersetzungsstufe 98.

Ausserdem kann die Vorgelegewelle 96 mit dem Fahrantrieb 76, bevorzugt dem Vorderachsantrieb 110, besonders bevorzugt dem ersten Differenzialgetriebe 30 verbindbar oder verbunden sein. Die Vorgelegewelle 96 kann mit einer vierten oder über eine vierte Übersetzungsstufe 100, beispielsweise eine sechste Stirnradstufe oder ein Zahnradpaar oder drei oder mehr Zahnräder oder ein sechstes Planetengetriebe oder ein sonstiges Getriebe, und/oder einem weiteren Schaltelement 102 mit einer weiteren Welle 104 verbindbar oder verbunden sein.

Die Antriebsvorrichtung 20 kann ausserdem den ersten Leistungsausgang 46 umfassen. Der erste Variator 70 kann mit dem ersten Leistungsausgang 46 verbindbar oder verbunden sein. Im Speziellen kann der erste Variator 70 mit dem ersten Leistungsausgang 46 über den oder durch den Antrieb 52 verbindbar oder verbunden sein. Der Antrieb 52 kann mit einem neunten oder durch ein neuntes Schaltelement 106 mit dem ersten Leistungsausgang 46 verbindbar oder verbunden sein. Das neunte Schaltelement 106 kann durch eine oder mit einer Verbindungswelle 108 mit dem ersten Leistungsausgang 46 verbindbar oder verbunden sein. Der erste Leistungsausgang 46 kann eine Zapfwelleneinheit 114 umfassen. Die Zapfwelleneinheit 114 kann ein Zapfwellengetriebe und/oder eine Zapfwelle umfassen. Das neunte Schaltelement 106 und/oder die Zapfwelleneinheit 114, insbesondere das Zapfwellengetriebe, kann antriebsseitig mit dem Antrieb 52 verbunden sein. Ausserdem kann die Zapfwelleneinheit 114, insbesondere das Zapfwellengetriebe, abtriebsseitig mit der Zapfwelle verbindbar oder verbunden sein. Die erste und/oder zweite Übersetzungseinheit 56, 58 können ausserdem einen Durchgang 116, insbesondere einen zentralen Durchgang, für den Antrieb 52, also insbesondere die Antriebswelle 60, aufweisen.

Die Antriebsvorrichtung 20 kann ausserdem einen zweiten Leistungsausgang 48 umfassen. Der erste Variator 70 kann mit einem zweiten Leistungsausgang 48 verbindbar oder verbunden sein. Im Speziellen kann der erste Variator 70 mit dem zweiten Leistungsausgang 48 über den oder durch den Antrieb 52 verbindbar oder verbunden sein. Der erste Variator 70 kann über den Antrieb 52 mit einem zehnten Schaltelement 118 verbunden sein. Der erste Variator 70 kann durch das zehnte Schaltelement 118 mit dem zweiten Leistungsausgang 48 verbindbar sein. Der zweite Leistungsausgang 48 kann eine Zapfwelleneinheit 114 umfassen. Die Zapfwelleneinheit 114 kann ein Zapfwellengetriebe und/oder eine Zapfwelle umfassen. Die Figuren 2 bis 5 beschreiben den Leistungsfluss der Antriebsvorrichtung 20 zum Antrieb 54 schematisch.

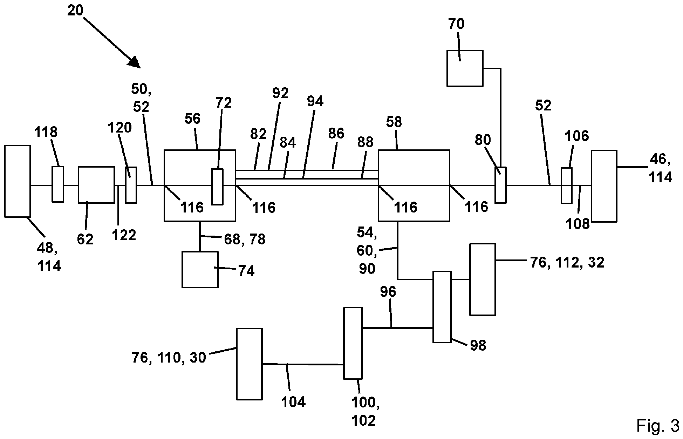

Figur 3 zeigt eine schematische Darstellung des zweiten Ausführungsbeispiels der erfindungsgemässen Antriebsvorrichtung 20. Die in Figur 3 gezeigte Antriebsvorrichtung 20 entspricht im Wesentlichen der in den Figuren 1 und 2 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 3 dargestellte Antriebsvorrichtung 20 umfassen.

Die Antriebsvorrichtung 20 kann weiter einen Motor 62 umfassen. Der Motor 62 ist über den oder durch den Antrieb 52 mit der ersten Eingangsseite 72 und, insbesondere über die erste Übersetzungsstufe 80, mit dem ersten Variator 70 verbunden. Der Motor 62 kann mit dem Antrieb 52, insbesondere über ein achtes oder mit einem achten Schaltelement 120, verbindbar oder verbunden sein. Mit dem Motor 62 kann so eine Drehzahl und/oder ein Drehmoment und/oder eine Kraft in die erste Übersetzungseinheit 56 einleitbar sein. Die erste Übersetzungseinheit 56 kann im Drehmoment- und/oder Leistungsfluss vor der zweiten Übersetzungseinheit 58 angeordnet sein. Der Motor 62 kann ausserdem mit dem ersten und/oder zweiten Leistungsausgang 46, 48 verbindbar oder verbunden sein. Im Speziellen kann der Motor 62 und/oder der erste Variator 70 mit dem ersten Leistungsausgang 46 über den oder durch den Antrieb 52 verbindbar oder verbunden sein. Der Motor 62 kann dabei mit einer Verbindungswelle 122 mit dem achten Schaltelemente 120 verbunden sein. Der Motor 62 kann dabei durch das oder über das achte Schaltelement 120 mit dem Antrieb 52 verbindbar sein. Der Motor 62 kann über den Antrieb 52 mit dem zehnten Schaltelement 118 verbunden sein. Der Motor 62 kann durch das zehnte Schaltelement 118 mit dem zweiten Leistungsausgang 48 verbindbar sein.

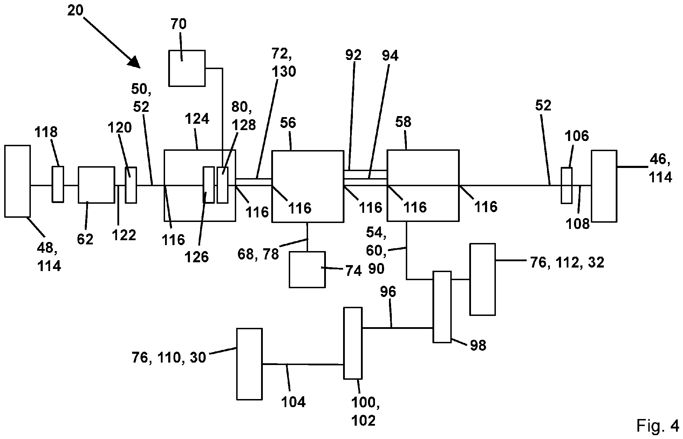

Figur 4 zeigt eine schematische Darstellung des dritten Ausführungsbeispiels der erfindungsgemässen Antriebsvorrichtung 20. Die in Figur 4 gezeigte Antriebsvorrichtung 20 entspricht im Wesentlichen der in den Figuren 1 bis 3 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 4 dargestellte Antriebsvorrichtung 20 umfassen.

Die Antriebsvorrichtung 20 umfasst eine dritte Übersetzungseinheit 124, die insbesondere eine Reversiereinheit oder Lastschaltwendeeinheit sein kann. Die dritte Übersetzungseinheit kann zur Umkehr der Drehrichtung des Abtriebs 54 ausgebildet sein. Die dritte Übersetzungseinheit 124 ist eingangsseitig mit der ersten Übersetzungseinheit 56 verbindbar oder verbunden. Die dritte Übersetzungseinheit 124 ist ausgangsseitig mit der zweiten Übersetzungseinheit 58 verbindbar oder verbunden. Die dritte Übersetzungseinheit 124 weist eine fünfte und sechste Eingangsseite 126, 128 und eine fünfte Ausgangsseite 130 auf. Die dritte Übersetzungseinheit 124 ist eingangsseitig mit dem Antrieb 52 verbindbar oder verbunden. Die dritte Übersetzungseinheit 124 kann zusätzlich mit dem ersten Variator 70, insbesondere über die erste Übersetzungsstufe 80, verbindbar oder verbunden sein. Die dritte Übersetzungseinheit ist ausgangsseitig mit der ersten Übersetzungseinheit 56, insbesondere der ersten Eingangsseite 72, verbindbar oder verbunden. Im Speziellen ist der Antrieb 52 mit der fünften Eingangsseite 126 und über die erste Übersetzungsstufe 80 mit der sechsten Eingangsseite 128 verbindbar oder verbunden. Die fünfte Ausgangsseite 130 ist über die erste Eingangswelle 132 mit der ersten Eingangsseite 72 verbindbar oder verbunden.

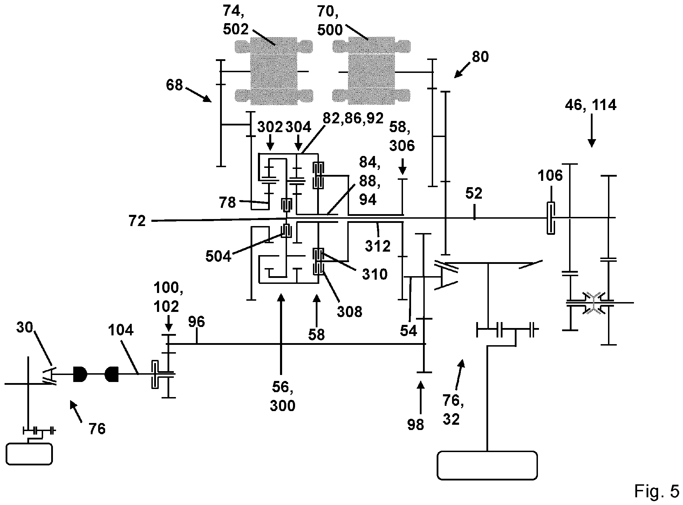

Figur 5 zeigt eine schematische Darstellung des vierten Ausführungsbeispiels der erfindungsgemässen Antriebsvorrichtung 20. Die in Figur 5 gezeigte Antriebsvorrichtung 20 entspricht im Wesentlichen der in den Figuren 1 bis 4 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 5 dargestellte Antriebsvorrichtung 20 umfassen.

Die Antriebsvorrichtung 20 gemäss Figur 5 umfasst den Antrieb 52 und den Abtrieb 54 und den ersten und zweiten Variator 70, 74, die als erster und zweiter Elektromotor 500, 502 ausgebildet sind, aber keine Motor 62. Ausserdem umfasst die Antriebsvorrichtung 20 die erste und zweite Übersetzungseinheit 56, 58. Der erste Variator 70 ist, insbesondere über die erste Übersetzungsstufe 80, die vorliegend als jeweils zwei in Eingriff stehende Zahnradpaare ausgebildet ist, mit dem Antrieb 52 und über den oder durch den Antrieb 52 und ein siebtes Schaltelement 504 mit der ersten Eingangsseite 72 der ersten Übersetzungseinheit 56 verbindbar. Der zweite Variator 74 ist mit der zweiten Eingangsseite 78 verbunden, insbesondere über eine oder durch die zweite Übersetzungsstufe 68. Die zweite Eingangsseite 78 kann mit der zweiten Eingangswelle 612 verbunden sein.

Die erste Übersetzungseinheit 56 ist als ein Planetenkoppelgetriebe 300 (siehe Figur 3) ausgebildet, insbesondere mit zwei verschiedenen Standübersetzungen. Im Speziellen kann die erste Übersetzungseinheit 56 ein erstes und/oder zweites Planetengetriebe 302, 304 umfassen, wobei das erste und zweite Planetengetriebe 302, 304 miteinander gekoppelt sind. Die erste Übersetzungseinheit 56 weist somit 4 Freiheitsgrade auf.

Die zweite Übersetzungseinheit 58 umfasst die erste Stirnradstufe 306 und das erste und zweite Schaltelement 308, 310. Die erste Ausgangsseite 82 der ersten Übersetzungseinheit 56 ist mit der dritten Eingangsseite 86 der zweiten Übersetzungseinheit 58 verbunden, insbesondere mit der dritten Eingangswelle 92. Die zweite Ausgangsseite 84 der ersten Übersetzungseinheit 56 ist mit der vierten Eingangsseite 88 der zweiten Übersetzungseinheit 58 verbunden, insbesondere mit der vierten Eingangswelle 94. Dadurch kann eine Kraft und/oder ein Drehmoment und/oder eine Drehzahl von der ersten zur zweiten Übersetzungseinheit 56, 58 übertragbar sein. Die zweite Übersetzungseinheit 58 ist im Drehmoment- und/oder Leistungsfluss nach der ersten Übersetzungseinheit 56 angeordnet. Die zweite Übersetzungseinheit 58, insbesondere die dritte Ausgangsseite 90, ist mit dem Abtrieb 54, insbesondere der Abtriebswelle 60, verbunden. Das erste und zweite Schaltelement 308, 310 sind über eine weitere Welle 312 mit der ersten Stirnradstufe 306 verbunden. Die erste Ausgangsseite 82 und/oder die dritte Eingangsseite 86 können durch das oder über das erste Schaltelement 308 mit der ersten Stirnradstufe 306 verbindbar oder verbunden sein und/oder die zweite Ausgangsseite 84 und/oder die vierte Eingangsseite 88 können durch das oder über das zweite Schaltelement 310 mit der ersten Stirnradstufe 306 verbindbar oder verbunden sein.

Die Antriebsvorrichtung 20 umfasst ausserdem den ersten Leistungsausgang 46. Der erste Variator 70, insbesondere der erste Elektromotor 500, kann mit dem ersten Leistungsausgang 46 über den Antrieb 52 und das neunte Schaltelement 106 mit dem ersten Leistungsausgang 46 verbindbar oder verbunden sein. Der erste Leistungsausgang 46 umfasst die Zapfwelleneinheit 114. Die erste und/oder zweite Übersetzungseinheit 56, 58 weisen ausserdem Durchgänge 116, insbesondere zentrale Durchgänge, für den Antrieb 52, auf.

Der Abtrieb 54 ist mit der Vorgelegewelle 96 verbunden, insbesondere über die dritte Übersetzungsstufe 98, die vorliegend als Stirnradstufe ausgebildet ist. Der Abtrieb 54 kann ausserdem mit dem Fahrantrieb 76, insbesondere dem zweiten Differenzialgetriebe 32 verbunden sein. Die Vorgelegewelle 96 ist mit dem Fahrantrieb 76, insbesondere dem ersten Differenzialgetriebe 30, über die vierte Übersetzungsstufe 100 und das weitere Schaltelement 102 verbunden. Die Vorgelegewelle 96 und der Abtrieb 54 sind koaxial zueinander angeordnet.

Mit der Antriebsvorrichtung 20 gemäss Figur 5 können vorteilhafterweise die jeweils sechs Modi pro Drehrichtung des Abtriebs 54 oder, mit anderen Worten, in Vorwärts- und Rückwärtsrichtung der Arbeitsmaschine 10 realisiert werden.

Mit der vierten Ausführungsform gemäss Figur 5 können mit der ersten und zweiten Übersetzungseinheit 56, 58 jeweils sechs Modi pro Drehrichtung des Abtriebs 54 der Antriebsvorrichtung 20, oder mit anderen Worten, in Vorwärts- und Rückwärtsrichtung der Antriebsvorrichtung 20 oder Arbeitsmaschine 10 realisiert werden (siehe Tabelle 1). Im Speziellen können sechs Vorwärts- und sechs Rückwärtsgänge der Antriebsvorrichtung 20 oder Arbeitsmaschine 10 realisiert werden.

**Tabelle 1 - Modi der vierten Ausführungsform.**

| **Vorwärts Modus** | **Rückwärts Modus** | **504** | **308** | **310** | **106** | **74, 502** | **70, 500** |
|---|---|---|---|---|---|---|---|
| Mode 1 | | | X | X | | Fahrantrieb | - |
| Mode 2 | | | X | X | X | Fahrantrieb | Erster Leistungsausgang |
| Mode 3 | | X | X | | | Fahrantrieb | Fahrantrieb |
| Mode 4 | | X | | X | | Fahrantrieb | Fahrantrieb |
| Mode 5 | | X | X | | X | Erster Leistungsausgang & Fahrantrieb | Erster Leistungsausgang & Fahrantrieb |
| Mode 6 | | X | | X | X | Erster Leistungsausgang & Fahrantrieb | Erster Leistungsausgang & Fahrantrieb |
| | Mode 1 | | X | X | | Fahrantrieb | - |
| | Mode 2 | | X | X | X | Fahrantrieb | Erster Leistungsausgang |
| | Mode 3 | X | X | | | Fahrantrieb | Fahrantrieb |
| | Mode 4 | X | | X | | Fahrantrieb | Fahrantrieb |
| | Mode 5 | X | X | | X | Erster Leistungsausgang & Fahrantrieb | Erster Leistungsausgang & Fahrantrieb |
| | Mode 6 | X | | X | X | Erster Leistungsausgang & Fahrantrieb | Erster Leistungsausgang & Fahrantrieb |

Die Modi können durch Öffnen und Schliessen der zu den genannten Bezugszeichen zugehörigen Schaltelemente und den Betrieb der Variatoren wie in Tabelle 1 dargestellt realisiert werden. Im Speziellen können die Modi durch Öffnen und Schliessen des siebten Schaltelements 504 und/oder des ersten Schaltelements 308 und/oder zweiten Schaltelements 310 und/oder neunten Schaltelements 106 und das Betreiben der ersten und zweiten Variatoren 70, 74, die als erster und zweiter Elektromotor 500, 502 ausgebildet sind, wie in Tabelle 1 dargestellt realisiert werden.

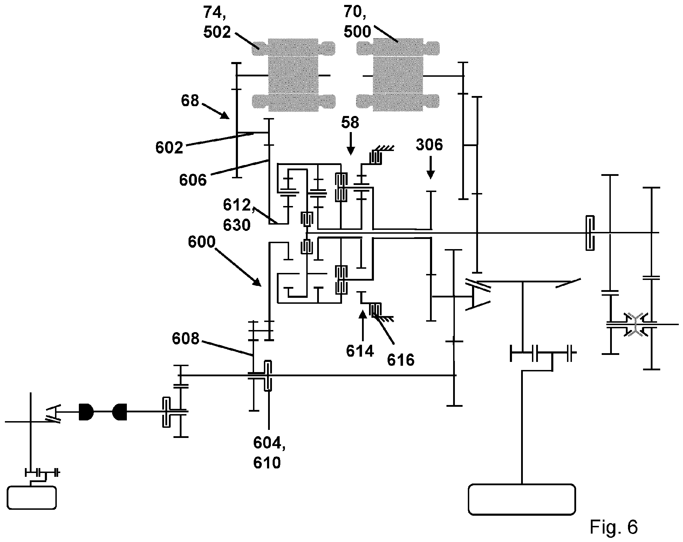

Figur 6 zeigt eine schematische Darstellung des fünften Ausführungsbeispiels der erfindungsgemässen Antriebsvorrichtung 20. Die in Figur 6 gezeigte Antriebsvorrichtung 20 entspricht im Wesentlichen der in den Figuren 1 bis 5 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 6 dargestellte Antriebsvorrichtung 20 umfassen.

Die Antriebsvorrichtung 20 umfasst zusätzlich die vierte Übersetzungseinheit 600. Die vierte Übersetzungseinheit 600 weist eine siebte Eingangsseite 602 und mindestens eine sechste Ausgangsseite 604 auf. Die vierte Übersetzungseinheit 600 ist mit der Vorgelegewelle 96 verbindbar ist. Die vierte Übersetzungseinheit umfasst eine dritte und vierte Stirnradstufe 606, 608 und ein sechstes Schaltelement 610. Der zweite Variator 74 über oder durch die zweite Übersetzungsstufe 68 und eine weitere Welle mit der dritten Stirnradstufe 606 verbunden. Die dritte Stirnradstufe 606 ist über eine weitere Welle mit der vierten Stirnradstufe 608 verbunden. Ausserdem ist die dritte Stirnradstufe 606, als eine siebte Ausgangsseite 630, mit der ersten Übersetzungseinheit 56, insbesondere der zweiten Eingangsseite 78, vorliegend eine zweite Eingangswelle 612, verbunden. Die vierte Stirnradstufe 608 ist über das oder durch das sechste Schaltelement 610 mit der Vorgelegewelle 96 verbindbar.

Ausserdem umfasst die zweite Übersetzungseinheit 58 die erste Stirnradstufe 306 und das dritte Planetengetriebe 614 und das erste und zweite und dritte Schaltelement 308, 310, 616.

Mit der fünften Ausführungsform gemäss Figur 6 können mit der ersten und zweiten Übersetzungseinheit 56, 58 und der vierten Übersetzungseinheit 600 jeweils zehn Modi pro Drehrichtung des Abtriebs 54 der Antriebsvorrichtung 20, oder mit anderen Worten, in Vorwärts- und Rückwärtsrichtung der Antriebsvorrichtung 20 oder Arbeitsmaschine 10 realisiert werden (siehe Tabelle 2). Im Speziellen können zehn Vorwärts- und zehn Rückwärtsgänge der Antriebsvorrichtung 20 oder Arbeitsmaschine 10 realisiert werden.

**Tabelle 2 - Modi der fünften Ausführungsform.**

| **Vorwärts Modus** | **Rückwärts Modus** | **504** | **308** | **310** | **610** | **616** | **106** | **74, 502** | **70, 500** |
|---|---|---|---|---|---|---|---|---|---|
| Mode 1 | | | | | X | | | Fahrantrieb | - |
| Mode 2 | | | X | X | | | | Fahrantrieb | - |
| Mode 3 | | | | | X | | X | Fahrantrieb | Erster Leistungsausgang |
| Mode 4 | | | X | X | | | X | Fahrantrieb | Erster Leistungsausgang |
| Mode 5 | | X | | X | | X | | Fahrantrieb | Fahrantrieb |
| Mode 6 | | X | X | | | | | Fahrantrieb | Fahrantrieb |
| Mode 7 | | X | | X | | | | Fahrantrieb | Fahrantrieb |
| Mode 8 | | X | | X | | X | X | Erster Leistungsausgang & Fahrantrieb | Erster Leistungsausgang & Fahrantrieb |
| Mode 9 | | X | X | | | | X | Erster Leistungsausgang & Fahrantrieb | Erster Leistungsausgang & Fahrantrieb |
| Mode 10 | | X | | X | | | X | Erster Leistungsausgang & Fahrantrieb | Erster Leistungsausgang & Fahrantrieb |
| | Mode 1 | | | | X | | | Fahrantrieb | - |
| | Mode 2 | | X | X | | | | Fahrantrieb | - |
| | Mode 3 | | | | X | | X | Fahrantrieb | Erster Leistungsausgang |
| | Mode 4 | | X | X | | | X | Fahrantrieb | Erster Leistungsausgang |
| | Mode 5 | X | | X | | X | | Fahrantrieb | Fahrantrieb |
| | Mode 6 | X | X | | | | | Fahrantrieb | Fahrantrieb |
| | Mode 7 | X | | X | | | | Fahrantrieb | Fahrantrieb |
| | Mode 8 | X | | X | | X | X | Erster Leistungsausgang & Fahrantrieb | Erster Leistungsausgang & Fahrantrieb |
| | Mode 9 | X | X | | | | X | Erster Leistungsausgang & Fahrantrieb | Erster Leistungsausgang & Fahrantrieb |
| | Mode 10 | X | | X | | | X | Erster Leistungsausgang & Fahrantrieb | Erster Leistungsausgang & Fahrantrieb |

Die Modi können durch Öffnen und Schliessen der zu den genannten Bezugszeichen zugehörigen Schaltelemente und den Betrieb der Variatoren wie in Tabelle 2 dargestellt realisiert werden. Im Speziellen können die Modi durch Öffnen und Schliessen des siebten Schaltelements 504 und/oder des ersten Schaltelements 308 und/oder zweiten Schaltelements 310 und/oder dritten Schaltelements 616 und/oder sechsten Schaltelements 610 und/oder neunten Schaltelements 106 und das Betreiben der ersten und zweiten Variatoren 70, 74, die als erster und zweiter Elektromotor 500, 502 ausgebildet sind, wie in Tabelle 2 dargestellt realisiert werden.

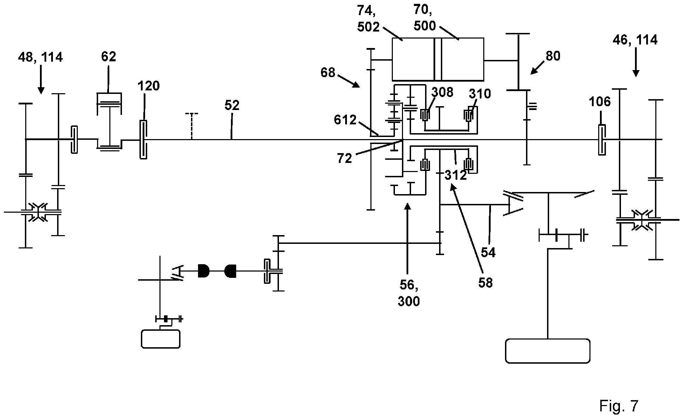

Figur 7 zeigt eine schematische Darstellung des sechsten Ausführungsbeispiels der erfindungsgemässen Antriebsvorrichtung 20. Die in Figur 7 gezeigte Antriebsvorrichtung 20 entspricht im Wesentlichen der in den Figuren 1 bis 6 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 7 dargestellte Antriebsvorrichtung 20 umfassen.

Die Antriebsvorrichtung 20 umfasst die erste und zweite Übersetzungseinheit 56, 58, wobei die erste Übersetzungseinheit als Planetenkoppelgetriebe 300 in einer weiteren Ausführungsform dargestellt ist. Ausserdem umfasst die Antriebsvorrichtung 20 gemäss Figur 7 den Motor 62. Der Motor 62 ist über den oder durch den Antrieb 52 mit der ersten Eingangsseite 72 und dem ersten Variator 70 verbunden. Dabei ist der Antrieb 52 über die erste Übersetzungsstufe 80, die vorliegend als drei in Eingriff stehenden Zahnrädern mit einem frei drehenden Zahnrad ausgebildet ist, mit dem ersten Variator 70 verbunden. Der Motor 62 ist ausserdem mit dem neunten oder durch das neunte Schaltelement 106 mit dem ersten Leistungsausgang 46, insbesondere der Zapfwelleneinheit 114, verbindbar. Der zweite Variator 74 ist über die zweite Übersetzungsstufe 68 mit der ersten Übersetzungseinheit 56, insbesondere der zweiten Eingangsseite 78, vorliegend die zweite Eingangswelle 612, verbunden.

Mit der sechsten Ausführungsform gemäss Figur 7 können mit der ersten und zweiten Übersetzungseinheit 56, 58 zwei Modi in eine Drehrichtung des Abtriebs 54 der Antriebsvorrichtung 20, oder mit anderen Worten, in Vorwärtsrichtung der Antriebsvorrichtung 20 oder Arbeitsmaschine 10 realisiert werden (siehe Tabelle 3). Im Speziellen können zwei Vorwärtsgänge der Antriebsvorrichtung 20 oder Arbeitsmaschine 10 realisiert werden.

**Tabelle 3 - Modi der sechsten Ausführungsform.**

| **Vorwärts Modus** | **Rückwärts Modus** | **308** | **310** |
|---|---|---|---|
| Mode 1 | | | X |
| Mode 2 | | X | |

Die Modi können durch Öffnen und Schliessen der zu den genannten Bezugszeichen zugehörigen Schaltelemente und den Betrieb der Variatoren wie in Tabelle 3 dargestellt realisiert werden. Im Speziellen können die Modi durch Öffnen und Schliessen des ersten Schaltelements 308 und/oder zweiten Schaltelements 310 wie in Tabelle 3 dargestellt realisiert werden.

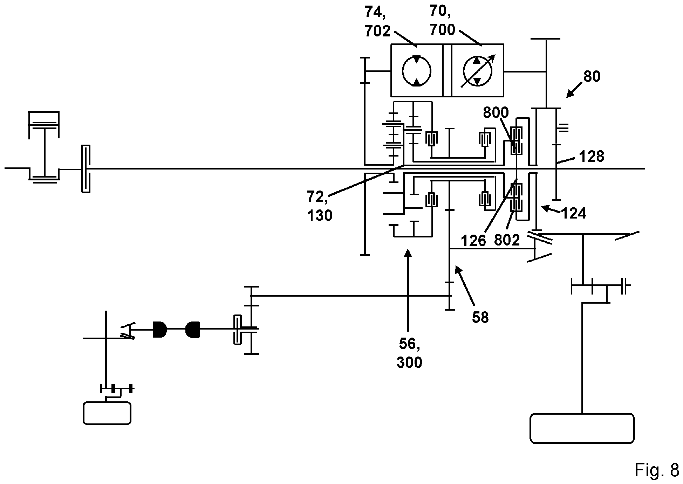

Figur 8 zeigt eine schematische Darstellung des siebten Ausführungsbeispiels der erfindungsgemässen Antriebsvorrichtung 20. Die in Figur 8 gezeigte Antriebsvorrichtung 20 entspricht im Wesentlichen der in den Figuren 1 bis 7 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 8 dargestellte Antriebsvorrichtung 20 umfassen.

Die Antriebsvorrichtung 20 umfasst die erste und zweite und dritte Übersetzungseinheit 56, 58, 124. Der erste und zweite Variator 70, 74 sind als Hydrostat ausgebildet. Der erste Variator 70 ist vorliegend als Hydraulikpumpe 700 und der zweite Variator 74 als Hydraulikmotor 702 ausgebildet und/oder betreibbar. Die dritte Übersetzungseinheit 124 umfasst die fünfte und sechste Eingangsseite 126, 128 und die fünfte Ausgangsseite 130. Die dritte Übersetzungseinheit 124, insbesondere die fünfte und sechste Eingangsseite 126, 128, ist eingangsseitig mit dem Antrieb 52 verbunden. Der Antrieb 52 ist über die erste Übersetzungsstufe 80 mit der sechsten Eingangsseite 128 und dem ersten Variator 70 verbunden. Die fünfte Eingangsseite 126 ist mit dem vierten Schaltelement 800 verbunden. Die sechste Eingangsseite 128 ist über die erste Übersetzungsstufe 80 mit dem fünften Schaltelement 802 verbunden. Die erste Übersetzungsstufe 80 ist vorliegend als vier in Eingriff stehenden Zahnrädern mit einem frei drehenden Zahnrad ausgebildet.

Die dritte Übersetzungseinheit 124 ist ausgangsseitig, insbesondere durch das vierte oder fünfte Schaltelement 800, 802, über die erste Eingangswelle 132 mit der ersten Übersetzungseinheit 56, insbesondere der ersten Eingangsseite 72, verbindbar. Im Speziellen ist der Antrieb 52 mit der fünften Eingangsseite 126 und über die erste Übersetzungsstufe 80 mit der sechsten Eingangsseite 128 verbindbar oder verbunden. Die fünfte Ausgangsseite 130 ist über die erste Eingangswelle 132 mit der ersten Eingangsseite 72 verbindbar oder verbunden.

Mit der siebten Ausführungsform gemäss Figur 8 können mit der ersten, zweiten und dritten Übersetzungseinheit 56, 58, 124 jeweils drei Modi pro Drehrichtung des Abtriebs 54 der Antriebsvorrichtung 20, oder mit anderen Worten, in Vorwärts- und Rückwärtsrichtung der Antriebsvorrichtung 20 oder Arbeitsmaschine 10 realisiert werden (siehe Tabelle 4). Im Speziellen können drei Vorwärts- und drei Rückwärtsgänge der Antriebsvorrichtung 20 oder Arbeitsmaschine 10 realisiert werden.

**Tabelle 4 - Modi der siebten Ausführungsform.**

| **Vorwärts Modus** | **Rückwärts Modus** | **308** | **310** | **800** | **802** |
|---|---|---|---|---|---|
| Mode 1 | | | X | X | |
| Mode 2 | | X | | X | |
| Mode 3 | | X | X | | |
| | Mode 1 | | X | | X |
| | Mode 2 | X | | | X |
| | Mode 3 | X | X | | |

Die Modi können durch Öffnen und Schliessen der zu den genannten Bezugszeichen zugehörigen Schaltelemente oder Koppelelemente wie in Tabelle 4 dargestellt realisiert werden. Im Speziellen können die Modi durch Öffnen und Schliessen des ersten Schaltelements 308 und/oder des zweiten Schaltelements 310 und/oder vierten Schaltelements 800 und/oder fünften Schaltelements 802 wie in Tabelle 4 dargestellt realisiert werden.

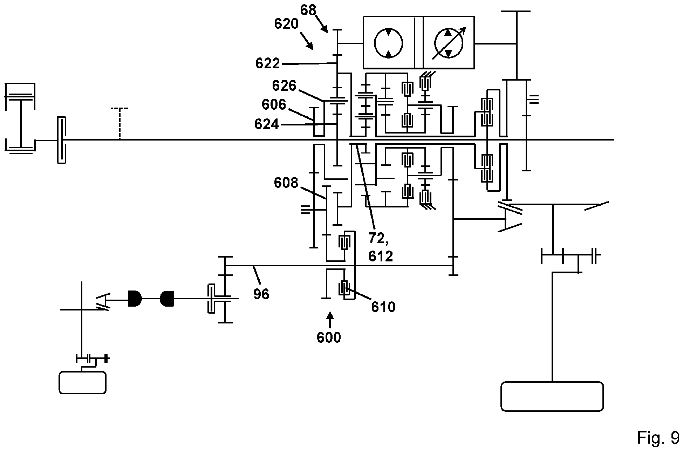

Figur 9 zeigt eine schematische Darstellung des achten Ausführungsbeispiels der erfindungsgemässen Antriebsvorrichtung 20. Die in Figur 9 gezeigte Antriebsvorrichtung 20 entspricht im Wesentlichen der in den Figuren 1 bis 8 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 9 dargestellte Antriebsvorrichtung 20 umfassen.

Die Antriebsvorrichtung 20 umfasst eine alternative Ausführung der vierten Übersetzungseinheit 600. Die vierte Übersetzungseinheit 600 umfasst die dritte und vierte Stirnradstufe 606, 608 und das vierte Planetengetriebe 620 und das sechste Schaltelement 610. Die siebte Eingangsseite 602 ist das vierte Hohlrad 622 des vierten Planetengetriebes 620. Das vierte Hohlrad 622 ist mit dem zweiten Variator 74 über die zweiten Übersetzungsstufe 68 verbunden, wobei die zweite Übersetzungsstufe 68 und das vierte Hohlrad 622 in Eingriff stehen, insbesondere miteinander kämmen bzw. das vierte Hohlrad 622 als Zahnrad oder Komponente der zweiten Übersetzungsstufe 68 ausgebildet ist. Das vierte Hohlrad ist, insbesondere als siebte Ausgangsseite 630, mit der zweiten Eingangsseite, insbesondere der zweiten Eingangswelle 612, verbunden. Ausserdem ist die vierte Sonne 624 des vierten Planetengetriebes 620 mit dem Antrieb 52 verbunden. Der vierte Planetenträger 626 des vierten Planetengetriebes 620 ist mit der dritten Stirnradstufe 606 durch eine weitere Welle verbunden. Die dritte Stirnradstufe 606 ist mit der vierten Stirnradstufe 608 durch eine weitere Welle verbunden. Die vierte Stirnradstufe 608 ist mit dem sechsten Schaltelement 610 über eine weitere Welle verbunden und durch das sechste Schaltelement 610 mit der Vorgelegewelle 96 verbindbar.

Mit der achten Ausführungsform gemäss Figur 9 können mit der ersten, zweiten, dritten und vierten Übersetzungseinheit 56, 58, 124, 600 jeweils vier Modi pro Drehrichtung des Abtriebs 54 der Antriebsvorrichtung 20, oder mit anderen Worten, in Vorwärts- und Rückwärtsrichtung der Antriebsvorrichtung 20 oder Arbeitsmaschine 10 realisiert werden (siehe Tabelle 5). Im Speziellen können vier Vorwärts- und vier Rückwärtsgänge der Antriebsvorrichtung 20 oder Arbeitsmaschine 10 realisiert werden.

**Tabelle 5 - Modi der achten Ausführungsform.**

| **Vorwärts Modus** | **Rückwärts Modus** | **308** | **310** | **616** | **610** | **800** | **802** |
|---|---|---|---|---|---|---|---|
| Mode 1 | | | | X | X | | |
| Mode 2 | | | X | X | | X | |
| Mode 3 | | X | | | | X | |
| Mode 4 | | | X | | | X | |
| | Mode 1 | | | X | X | | |
| | Mode 2 | | X | X | | | X |
| | Mode 3 | X | | | | | X |
| | Mode 4 | | X | | | | X |

Die Modi können durch Öffnen und Schliessen der zu den genannten Bezugszeichen zugehörigen Schaltelemente oder Koppelelemente wie in Tabelle 5 dargestellt realisiert werden. Im Speziellen können die Modi durch Öffnen und Schliessen des ersten Schaltelements 308 und/oder des zweiten Schaltelements 310 und/oder dritten Schaltelements 616 und/oder vierten Schaltelements 800 und/oder fünften Schaltelements 802 und/oder sechsten Schaltelements 610 wie in Tabelle 5 dargestellt realisiert werden.

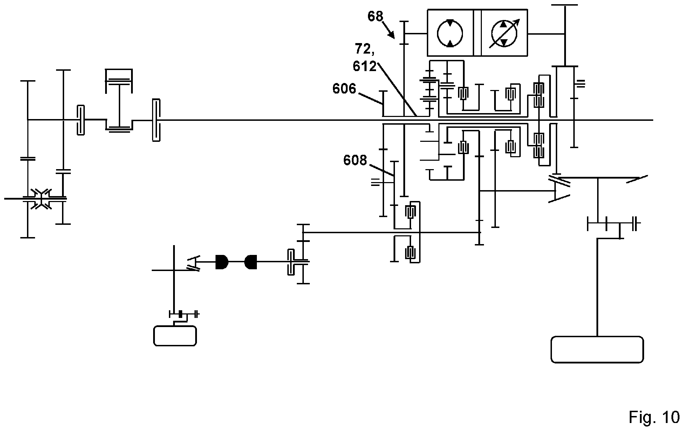

Figur 10 zeigt eine schematische Darstellung des neunten Ausführungsbeispiels der erfindungsgemässen Antriebsvorrichtung 20. Die in Figur 10 gezeigte Antriebsvorrichtung 20 entspricht im Wesentlichen der in den Figuren 1 bis 9 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 10 dargestellte Antriebsvorrichtung 20 umfassen.

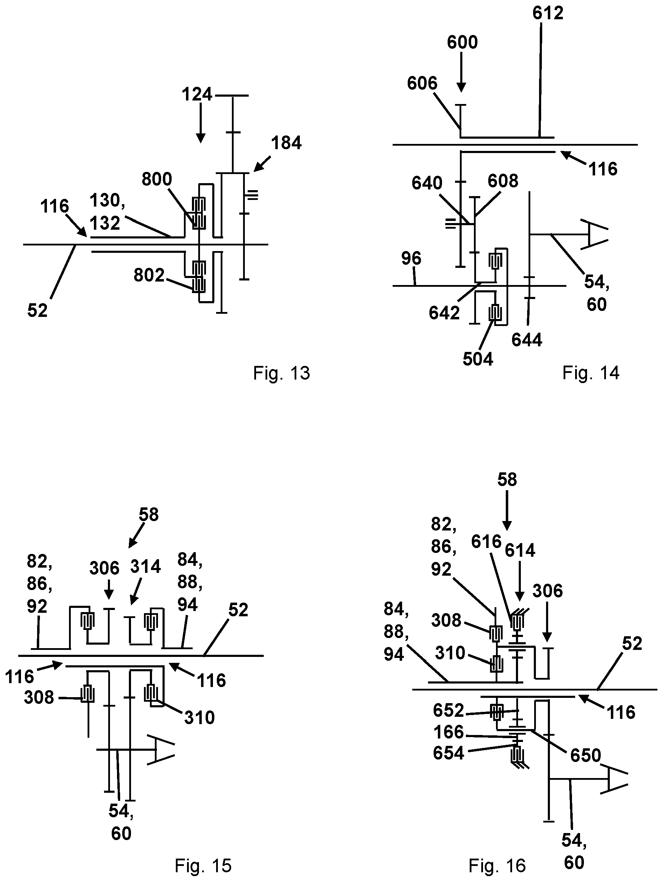

Der zweite Variator 74 ist über oder durch die zweite Übersetzungsstufe 68, vorliegend als Stirnradstufe ausgebildet, mit der zweiten Eingangswelle 612 und somit mit der zweiten Eingangsseite 72 verbunden. Die zweite Eingangswelle 612 ist darüber hinaus mit der dritten Stirnradstufe 612 verbunden. Die dritte Stirnradstufe 606 ist über eine weitere Welle mit der vierten Stirnradstufe 608 verbunden. Eine detaillierte schematische Darstellung und Beschreibung der zweiten Übersetzungseinheit 58 in Figur 10 findet sich bei Figur 15.

Mit der neunten Ausführungsform gemäss Figur 10 können mit der ersten, zweiten, dritten und vierten Übersetzungseinheit 56, 58, 124, 600 jeweils drei Modi pro Drehrichtung des Abtriebs 54 der Antriebsvorrichtung 20, oder mit anderen Worten, in Vorwärts- und Rückwärtsrichtung der Antriebsvorrichtung 20 oder Arbeitsmaschine 10 realisiert werden (siehe Tabelle 6). Im Speziellen können drei Vorwärts- und drei Rückwärtsgänge der Antriebsvorrichtung 20 oder Arbeitsmaschine 10 realisiert werden.

**Tabelle 6 - Modi der neunten Ausführungsform.**

| **Vorwärts Modus** | **Rückwärts Modus** | **308** | **310** | **610** | **800** | **802** |
|---|---|---|---|---|---|---|
| Mode 1 | | | | X | | |
| Mode 2 | | | X | | X | |
| Mode 3 | | X | | | X | |
| | Mode 1 | | | X | | |
| | Mode 2 | | X | | | X |
| | Mode 3 | X | | | | X |

Die Modi können durch Öffnen und Schliessen der zu den genannten Bezugszeichen zugehörigen Schaltelemente oder Koppelelemente wie in Tabelle 6 dargestellt realisiert werden. Im Speziellen können die Modi durch Öffnen und Schliessen des ersten Schaltelements 308 und/oder des zweiten Schaltelements 310 und/oder vierten Schaltelements 800 und/oder fünften Schaltelements 802 und/oder sechsten Schaltelements 610 wie in Tabelle 6 dargestellt realisiert werden.

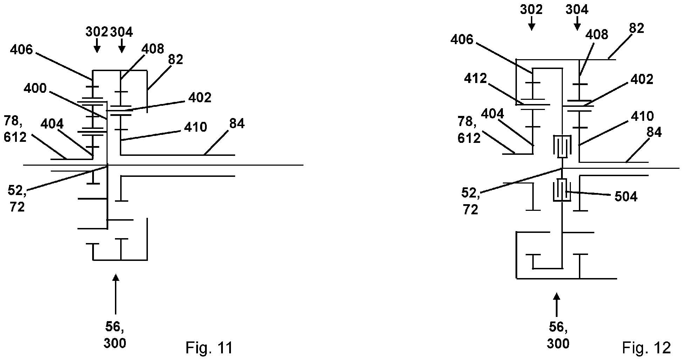

Figur 11 zeigt eine detaillierte schematische Darstellung eines Ausführungsbeispiels der ersten Übersetzungseinheit 56 der erfindungsgemässen Antriebsvorrichtung 20. Die in Figur 11 gezeigte erste Übersetzungseinheit 56 entspricht im Wesentlichen der in den Figuren 1 bis 10 gezeigten ersten Übersetzungseinheit 56, sodass im Folgenden lediglich auf Details und/oder Unterschiede eingegangen wird. Die in den Figuren 1 und 20 dargestellte Arbeitsmaschine 10 oder in den Figuren 1 bis 10 dargestellte Antriebsvorrichtung 20 kann die in Figur 11 dargestellte erste Übersetzungseinheit 56 umfassen.

Die erste Übersetzungseinheit 58, insbesondere das Planetenkoppelgetriebe 300, umfasst ein erstes und/oder zweites Planetengetriebe 302, 304, wobei die Planetengetriebe 302, 304 miteinander gekoppelt sind. Das erste Planetengetriebe 302 umfasst einen Doppelplanetenträger 400. Der Doppelplanetenträger 400 des ersten Planetengetriebes 302 und der zweite Planetenträger 402 des zweiten Planetengetriebes 304 sind miteinander verbunden, insbesondere gekoppelt. Der Doppelplanetenträger 400 des ersten Planetengetriebes 302 und der zweite Planetenträger 402 des zweiten Planetengetriebes 304 bilden die erste Eingangsseite 72 oder sind mit dieser verbunden. Der Antrieb 52 ist mit dem Doppelplanetenträger 400 und dem zweiten Planetenträger 402 verbunden, wodurch eine Kraft und/oder ein Drehmoment und/oder eine Drehzahl des Motors in die erste Übersetzungseinheit 56 einleitbar ist. Alternativ ist die erste Eingangsseite 72 mit der fünften Ausgangsseite 130, insbesondere über die erste Eingangswelle 132, verbindbar oder verbunden, wodurch eine Kraft und/oder ein Drehmoment und/oder eine Drehzahl des Motors über die dritte Übersetzungseinheit 124 in die erste Übersetzungseinheit 56 einleitbar ist. Die zweite Eingangsseite 78 ist mit der zweiten Eingangswelle 612 verbunden. Die zweite Eingangsseite 72 ist mit dem zweiten Variator 74 verbunden. Mit anderen Worten die zweite Eingangswelle 612 kann auch als zweite Eingangsseite 78 ausgebildet sein. Die zweite Eingangswelle 612 bzw. die zweite Eingangsseite 78 ist mit ist einem ersten Sonnenrad 404 des ersten Planetengetriebes 302. Ein erstes Hohlrad 406 des ersten Planetengetriebes 302 und ein zweites Hohlrad 408 des zweiten Planetengetriebes 304 sind miteinander verbunden, insbesondere gekoppelt. Das ersten Hohlrad 406 des ersten Planetengetriebes 302 und das zweiten Hohlrad 408 des zweiten Planetengetriebes 304 bilden die erste Ausgangsseite 82 oder sind mit dieser verbunden. Eine zweite Sonne 410 des zweiten Planetengetriebes 304 bildet die zweite Ausgangsseite 84 oder sind mit dieser verbunden.

Figur 12 zeigt eine detaillierte schematische Darstellung eines Ausführungsbeispiels der ersten Übersetzungseinheit 56 der erfindungsgemässen Antriebsvorrichtung 20. Die in Figur 12 gezeigte erste Übersetzungseinheit 56 entspricht im Wesentlichen der in den Figuren 1 bis 11 gezeigten ersten Übersetzungseinheit 56, sodass im Folgenden lediglich auf Details und/oder Unterschiede eingegangen wird. Die in den Figuren 1 und 20 dargestellte Arbeitsmaschine 10 oder in den Figuren 1 bis 11 dargestellte Antriebsvorrichtung 20 kann die in Figur 12 dargestellte erste Übersetzungseinheit 56 umfassen.

Die erste Übersetzungseinheit 56, insbesondere das Planetenkoppelgetriebe 300, umfasst das erstes und zweites Planetengetriebe 302, 304, wobei die Planetengetriebe 302, 304 miteinander gekoppelt sind. Das erste Hohlrad 406 des ersten Planetengetriebes 302 und der zweite Planetenträger 402 des zweiten Planetengetriebes 304 sind miteinander verbunden, insbesondere gekoppelt. Ausserdem sind der erste Planetenträger 412 des ersten Planetengetriebes 302 und das zweite Hohlrad 408 des zweiten Planetengetriebes 304 miteinander verbunden, insbesondere gekoppelt. Das erste Hohlrad 406 des ersten Planetengetriebes 302 und der zweite Planetenträger 402 des zweiten Planetengetriebes 304 bilden die erste Eingangsseite 72 oder sind mit dieser verbunden. Die erste Sonne 404 des ersten Planetengetriebes 302 bildet die zweite Eingangsseite 78 oder ist mit dieser verbunden. Der erste Variator 70 ist über den Antrieb 52 und das siebte Schaltelement 504 mit der ersten Eingangsseite 72 der ersten Übersetzungseinheit 56 verbindbar, wodurch eine Kraft und/oder ein Drehmoment und/oder eine Drehzahl in die erste Übersetzungseinheit 56 einleitbar ist. Alternativ ist die erste Eingangsseite 72 mit der fünften Ausgangsseite 130, insbesondere über die erste Eingangswelle 132, verbindbar oder verbunden, wodurch eine Kraft und/oder ein Drehmoment und/oder eine Drehzahl des Motors über die dritte Übersetzungseinheit 124 in die erste Übersetzungseinheit 56 einleitbar ist. Der zweite Variator 74 ist mit der zweiten Eingangsseite 78 verbunden, insbesondere über eine oder durch die zweite Übersetzungsstufe 68. Die zweite Eingangsseite 78 ist mit der zweiten Eingangswelle 612 verbunden sein. Mit anderen Worten die zweite Eingangswelle 612 kann auch als zweite Eingangsseite 78 ausgebildet sein. Die zweite Eingangswelle 612 bzw. die zweite Eingangsseite 78 ist mit ist dem ersten Sonnenrad 404 des ersten Planetengetriebes 302. Der erste Planetenträger 412 des ersten Planetengetriebes 302 und das zweite Hohlrad 408 des zweiten Planetengetriebes 304 bilden die erste Ausgangsseite 82 oder sind mit dieser verbunden. Eine zweite Sonne 410 des zweiten Planetengetriebes 304 bildet die zweite Ausgangsseite 84 oder ist mit dieser verbunden.

Figur 13 zeigt eine detaillierte schematische Darstellung eines Ausführungsbeispiels der dritten Übersetzungseinheit 124 der erfindungsgemässen Antriebsvorrichtung 20. Die in Figur 13 gezeigte dritte Übersetzungseinheit 124 entspricht im Wesentlichen der in den Figuren 1 bis 12 gezeigten dritten Übersetzungseinheit 124, sodass im Folgenden lediglich auf Details und/oder Unterschiede eingegangen wird. Die in den Figuren 1 und 20 dargestellte Arbeitsmaschine 10 oder in den Figuren 1 bis 12 dargestellte Antriebsvorrichtung 20 kann die in Figur 13 dargestellte dritte Übersetzungseinheit 124 umfassen.

Die dritte Übersetzungseinheit 124 kann insbesondere eine Reversiereinheit oder Lastschaltwendeeinheit sein. Die dritte Übersetzungseinheit 124 kann zur Umkehr der Fahrtrichtung ausgebildet sein. Mit der dritten Übersetzungseinheit 124 kann also eine Drehrichtung des Antriebs 52 umkehrbar sein. Die dritte Übersetzungseinheit 124 ist eingangsseitig mit den Antrieb 52 verbunden. Die dritte Übersetzungseinheit 124 ist ausgangsseitig, insbesondere über die fünfte Ausgangsseite 130, über erste Eingangswelle 132 mit der ersten Übersetzungseinheit 56, insbesondere der ersten Eingangsseite 72 verbindbar oder verbunden. Die dritte Übersetzungseinheit 124 umfasst in diesem Ausführungsbeispiel das vierte und fünfte Schaltelement 800, 802, und optional die erste Übersetzungsstufe 80. Das fünfte Schaltelement 800 ist mit den Antrieb 52 verbindbar oder verbunden. Das fünfte Schaltelement 802 ist über die oder durch die erste Übersetzungsstufe 80 mit dem Antrieb 52 verbindbar oder verbunden. Das vierte oder fünfte Schaltelement 800, 802 ist mit der ersten Eingangswelle 132 verbindbar oder verbunden. Alternativ kann die dritte Übersetzungseinheit 124 in Planetenbauweise ausgeführt sein. Die dritte Übersetzungseinheit 124 weist ausserdem Durchgänge 116, insbesondere zentrale Durchgänge, für den Antrieb 52, auf.

Figur 14 zeigt eine detaillierte schematische Darstellung eines Ausführungsbeispiels der vierten Übersetzungseinheit 600 der erfindungsgemässen Antriebsvorrichtung 20. Die in Figur 14 gezeigte vierte Übersetzungseinheit 600 entspricht im Wesentlichen der in den Figuren 1 bis 13 gezeigten vierten Übersetzungseinheit 600, sodass im Folgenden lediglich auf Details und/oder Unterschiede eingegangen wird. Die in den Figuren 1 und 20 dargestellte Arbeitsmaschine 10 oder in den Figuren 1 bis 13 dargestellte Antriebsvorrichtung 20 kann die in Figur 14 dargestellte vierte Übersetzungseinheit 600 umfassen.

Die vierte Übersetzungseinheit 600 kann insbesondere als eine Anfahreinheit ausgebildet sein. Die vierte Übersetzungseinheit 600 ist eingangsseitig über die oder durch die zweite Eingangswelle 612 mit der ersten Übersetzungseinheit 56 verbindbar oder verbunden. Die vierte Übersetzungseinheit 600 ist ausgangsseitig mit der Vorgelegewelle 96 verbindbar oder verbunden. Die vierte Übersetzungseinheit 600 umfasst die dritte Stirnradstufe 606 und eine vierte Stirnradstufe 608 und ein siebtes Schaltelement 196. Die dritte Stirnradstufe 606 ist mit der vierten Stirnradstufe 608 verbunden. Die dritte Stirnradstufe 606 ist mit der vierten Stirnradstufe 608 über eine Welle 640, die insbesondere freilaufend sein kann, verbunden. Die vierte Stirnradstufe 608 ist mit dem siebten Schaltelement 504 verbunden, insbesondere über eine weitere Welle 642. Die vierte Stirnradstufe 608 ist mit dem siebten oder durch das siebte Schaltelement 504 mit der Vorgelegewelle 96 verbindbar. Ausserdem ist die Vorgelegewelle 96 mit dem Abtrieb 54, insbesondere der Abtriebswelle 60, über das oder durch das Kopplungszahnrad 644 verbunden. Die vierte Übersetzungseinheit 600 weist ausserdem Durchgänge 116, insbesondere zentrale Durchgänge, für den Antrieb 52, auf.

Figur 15 zeigt eine detaillierte schematische Darstellung eines weiteren Ausführungsbeispiels der zweiten Übersetzungseinheit 58 der erfindungsgemässen Antriebsvorrichtung 20. Die in Figur 15 gezeigte zweite Übersetzungseinheit 58 entspricht im Wesentlichen der in den Figuren 1 bis 14 gezeigten zweiten Übersetzungseinheit 58, sodass im Folgenden lediglich auf Details und/oder Unterschiede eingegangen wird. Die in den Figuren 1 und 20 dargestellte Arbeitsmaschine 10 oder in den Figuren 1 bis 13 dargestellte Antriebsvorrichtung 20 kann die in Figur 15 dargestellte zweite Übersetzungseinheit 58 umfassen.

In einer alternativen oder weiteren Ausführungsformen umfasst die zweite Übersetzungseinheit 58 die erste und zweite Stirnradstufe 306, 314 und das erste und zweite Schaltelement 308, 310 (siehe auch Figur 10). Dabei ist das erste Schaltelement 308 mit der ersten Ausgangsseite 82 und der dritten Eingangsseite 86 verbunden, insbesondere der dritten Eingangswelle 92 verbunden. Das zweite Schaltelement 310 ist mit der mit der zweiten Ausgangsseite 84 und der vierten Eingangsseite 88 verbunden, insbesondere der vierten Eingangswelle 94 verbunden. Das erste Schaltelement 308 ist mit der ersten Stirnradstufe 306 und das vierte Schaltelement 310 mit der zweiten Stirnradstufe 314 verbindbar oder verbunden. Die erste Ausgangsseite 82 und/oder die dritte Eingangsseite 86 können durch das oder über das erste Schaltelement 308 mit der ersten Stirnradstufe 306 verbindbar oder verbunden sein und/oder die zweite Ausgangsseite 84 und/oder die vierte Eingangsseite 88 können durch das oder über das zweite Schaltelement 310 mit der zweiten Stirnradstufe 314 verbindbar oder verbunden sein. Die erste und zweite Stirnradstufe 306, 314 sind mit dem Abtrieb 54, insbesondere der Abtriebswelle 60, verbunden. Die zweite Übersetzungseinheit 58 weist ausserdem Durchgänge 116, insbesondere zentrale Durchgänge, für den Antrieb 52, auf.

Figur 16 zeigt eine detaillierte schematische Darstellung eines weiteren Ausführungsbeispiels der zweiten Übersetzungseinheit 58 der erfindungsgemässen Antriebsvorrichtung 20. Die in Figur 16 gezeigte zweite Übersetzungseinheit 58 entspricht im Wesentlichen der in den Figuren 1 bis 15 gezeigten zweiten Übersetzungseinheit 58, sodass im Folgenden lediglich auf Details und/oder Unterschiede eingegangen wird. Die in den Figuren 1 und 20 dargestellte Arbeitsmaschine 10 oder in den Figuren 1 bis 14 dargestellte Antriebsvorrichtung 20 kann die in Figur 16 dargestellte zweite Übersetzungseinheit 58 umfassen.

Die zweite Übersetzungseinheit 58 umfasst das dritte Planetengetriebe 614 und die erste Stirnradstufe 306 und das erste und zweite Schaltelement 308, 310. Dabei ist das erste Schaltelement 308 mit der ersten Ausgangsseite 82 und der dritten Eingangsseite 86 verbunden, insbesondere der dritten Eingangswelle 92 verbunden. Ausserdem ist die dritte Eingangswelle 92 durch das erste Schaltelement 308 mit einem dritten Planetenträger 650 des dritten Planetengetriebes 614 verbindbar. Die vierte Eingangswelle 94 ist mit der dritten Sonne 652 des dritten Planetengetriebes 614 verbunden. Das dritte Schaltelement 616, das als Bremse ausgebildet ist, ist mit dem ersten Hohlrad 654 des dritten Planetengetriebes 614 verbunden. Ausserdem ist der dritte Planetenträger 650 des dritte Planetengetriebes 614 mit der ersten Stirnradstufe 306 verbunden. Die erste Stirnradstufe 306 ist mit dem Abtrieb 54, insbesondere der Abtriebswelle 60, verbunden. Die zweite Übersetzungseinheit 58 weist ausserdem Durchgänge 116, insbesondere zentrale Durchgänge, für den Antrieb 52, auf.

Figur 17 zeigt eine schematische Darstellung eines ersten Ausführungsbeispiel einer erfindungsgemässen Getriebegehäuseanordnung 900. Die in Figur 17 gezeigte Getriebegehäuseanordnung 900 kann die in den Figuren 1 bis 16 gezeigte Antriebsvorrichtung 20 oder Komponenten der erfindungsgemässen Antriebsvorrichtung 20 umfassen, sodass im Folgenden lediglich auf Details und/oder Unterschiede eingegangen wird. Die in den Figuren 1 und 20 dargestellte Arbeitsmaschine 10 kann die in Figur 17 dargestellte Getriebegehäuseanordnung 900 umfassen.

Die Getriebegehäuseanordnung 900 umfasst ein erstes Gehäusemodul 902 mit der ersten Übersetzungseinheit 56. Im Speziellen ist die erste Übersetzungseinheit 56 im ersten Gehäusemodul 902 angeordnet. Die Getriebegehäuseanordnung 900 umfasst ein zweites Gehäusemodul 904 mit der zweiten Übersetzungseinheit 58. Im Speziellen ist die zweite Übersetzungseinheit 58 im zweiten Gehäusemodul 904 angeordnet. Zusätzlich kann die Getriebegehäuseanordnung 900 ein drittes Gehäusemodul 906 mit der dritten Übersetzungseinheit 124 umfassen. Im Speziellen kann die dritte Übersetzungseinheit 124 im dritten Gehäusemodul 906 angeordnet sein. Zusätzlich kann die Getriebegehäuseanordnung 900 ein viertes Gehäusemodul 908 mit der vierten Übersetzungseinheit 600 umfassen. Im Speziellen kann die vierte Übersetzungseinheit 600 im vierten Gehäusemodul 908 angeordnet sein. Das erste und zweite und dritte und vierte Gehäusemodul 902, 904, 906, 908 sind entlang oder in Richtung des Antriebs 52, insbesondere der Antriebswelle 50, angeordnet. Die Gehäusemodule sind in der Reihenfolge viertes und erstes und zweites und drittes Gehäusemodul 908, 902, 904, 906 nacheinander und benachbart angeordnet. Im ersten Gehäusemodul 902 können zusätzlich der Antrieb 52 und/oder die Vorgelegewelle 96 und/oder die zweite Übersetzungsstufe 74 und/oder der zweite Variator 74 und/oder die erste und/oder die zweite und/oder die dritte und/oder vierte Eingangswelle 132, 612, 92, 94 angeordnet sein. Im zweiten Gehäusemodul 904 können zusätzlich der Antrieb 52 und/oder die Vorgelegewelle 96 und/oder der Abtrieb 54, insbesondere die Abtriebswelle 60, und/oder die erste und/oder dritte und/oder vierte Eingangswelle 132, 92, 94 angeordnet sein. Im dritten Gehäusemodul 906 können zusätzlich der Antrieb 52 und/oder die Vorgelegewelle 96 und/oder der Abtrieb 54, insbesondere die Abtriebswelle 60, und/oder die erste und/oder dritte und/oder vierte Eingangswelle 132 92, 94 angeordnet sein. Im vierten Gehäusemodul 908 können zusätzlich der Antrieb 52 und/oder die Vorgelegewelle 96 und/oder die erste und/oder zweite Eingangswelle 132, 612 angeordnet sein.

Das vierte Gehäusemodul 908 weist eine eingangsseitige Gehäusewand 920 auf. Das vierte Gehäusemodul 908 weist eine ausgangsseitige Gehäusewand 950 auf. Die eingangsseitige Gehäusewand 920 des vierten Gehäusemoduls 908 weist eine sechste Eingangsöffnung 910 auf. Die sechste Eingangsöffnung 910 kann zur Durchführung und/oder zum Anbinden und/oder Verbinden des Antriebs 52, insbesondere der Antriebswelle 50, ausgebildet sein. In der sechsten Eingangsöffnung 910 der eingangsseitigen Gehäusewand 920 des vierten Gehäusemoduls 908 ist der Antrieb 52, insbesondere die Antriebswelle 50, angeordnet. Im Speziellen erstreckt sich der Antrieb 52, insbesondere die Antriebswelle 54, durch die sechste Eingangsöffnung 910.

Zusätzlich kann die eingangsseitige Gehäusewand 920 eine siebte Eingangsöffnung 912 aufweisen. Die siebte Eingangsöffnung 912 kann zur Durchführung und/oder zum Anbinden und/oder Verbinden der Vorgelegewelle 96 ausgebildet sein. In der siebten Eingangsöffnung 912 der eingangsseitigen Gehäusewand 920 kann die Vorgelegewelle 96 angeordnet sein. Im Speziellen kann sich die Vorgelegewelle 96 durch die siebte Eingangsöffnung 912 erstrecken. Die ausgangsseitige Gehäusewand 950 des vierte Gehäusemoduls 908 umfasst eine achte Ausgangsöffnung 952. Die achte Ausgangsöffnung 952 ist zur Durchführung und/oder zum Anbinden und/oder Verbinden des Antriebs 52, insbesondere die Antriebswelle 50, ausgebildet. Zusätzlich kann die achte Ausgangsöffnung 952 zur Durchführung und/oder zum Anbinden und/oder Verbinden der zweiten Eingangswelle 612 ausgebildet sein. In der achten Ausgangsöffnung 952 ist der Antrieb 52, insbesondere die Antriebswelle 50, und/oder die zweite Eingangswelle 612 angeordnet. Im Speziellen erstreckt sich der Antrieb 52, insbesondere die Antriebswelle 50, und/oder die zweite Eingangswelle 612 durch die achte Ausgangsöffnung 952. Zusätzlich kann die ausgangsseitige Gehäusewand 950 eine neunte Ausgangsöffnung 954. Die neunte Ausgangsöffnung 954 kann zur Durchführung und/oder zum Anbinden und/oder Verbinden der Vorgelegewelle 96 ausgebildet sein. In der neunten Ausgangsöffnung 954 kann die Vorgelegewelle 96 angeordnet sein. Im Speziellen kann sich die Vorgelegewelle 96 durch die neunte Ausgangsöffnung 954 erstrecken.

Das erste Gehäusemodul 902 weist eine eingangsseitige Gehäusewand 956 aufweisen. Das vierte Gehäusemodul 908 umfasst eine ausgangsseitige Gehäusewand 960. Die eingangsseitige Gehäusewand 956 umfasst eine erste Eingangsöffnung 958. Die erste Eingangsöffnung 958 ist zur Durchführung und/oder zum Anbinden und/oder Verbinden des Antriebs 52, insbesondere der Antriebswelle 50, und/oder der zweiten Eingangswelle 612 ausgebildet. In der ersten Eingangsöffnung 958 ist der Antrieb 52, insbesondere die Antriebswelle 50, und die zweite Eingangswelle 612 angeordnet. Im Speziellen erstrecken sich der Antrieb 52, insbesondere die Antriebswelle 50, und die zweite Eingangswelle 612 durch die erste Eingangsöffnung 958. Zusätzlich kann die eingangsseitige Gehäusewand 956 des ersten Gehäusemoduls 902 eine zweite Eingangsöffnung 962 aufweisen. Die zweite Eingangsöffnung 962 kann zur Durchführung und/oder zum Anbinden und/oder Verbinden der Vorgelegewelle 96 ausgebildet sein. In der zweiten Eingangsöffnung 962 der eingangsseitigen Gehäusewand 956 kann die Vorgelegewelle 96 angeordnet sein. Im Speziellen kann sich die Vorgelegewelle 96 durch die zweite Eingangsöffnung 962 erstrecken.

Die ausgangsseitige Gehäusewand 960 des ersten Gehäusemoduls 902 umfasst eine erste Ausgangsöffnung 964. Die erste Ausgangsöffnung 964 ist zur Durchführung und/oder zum Anbinden und/oder Verbinden des Antriebs 52 ausgebildet. Zusätzlich kann die erste Ausgangsöffnung 964 zur Durchführung und/oder zum Anbinden und/oder Verbinden der ersten und/oder dritten und/oder vierten Eingangswelle 132, 92, 94 ausgebildet sein. In der ersten Ausgangsöffnung 964 ist der Antrieb 52, insbesondere die Antriebswelle 50, und/oder die erste und/oder dritte und/oder vierte Eingangswelle 132, 92, 94 angeordnet. Im Speziellen erstreckt sich der Antrieb 52, insbesondere die Antriebswelle 50, und/oder die erste und/oder dritte und/oder vierte Eingangswelle 132, 92, 94 durch die erste Ausgangsöffnung 964. Zusätzlich kann die ausgangsseitige Gehäusewand 960 eine dritte Ausgangsöffnung 966. Die dritte Ausgangsöffnung 966 kann zur Durchführung und/oder zum Anbinden und/oder Verbinden der Vorgelegewelle 96 ausgebildet sein. In der dritte Ausgangsöffnung 966 kann die Vorgelegewelle 96 angeordnet sein. Im Speziellen kann sich die Vorgelegewelle 96 durch die dritte Ausgangsöffnung 966 erstrecken.

Das zweite Gehäusemodul 904 weist eine eingangsseitige Gehäusewand 968 auf. Das zweite Gehäusemodul 904 weist eine ausgangsseitige Gehäusewand 970 auf. Die eingangsseitige Gehäusewand 968 des zweiten Gehäusemoduls 904 umfasst eine dritte Eingangsöffnung 972. Die dritte Eingangsöffnung 972 ist zur Durchführung und/oder zum Anbinden und/oder Verbinden des Antriebs 52, insbesondere der Antriebswelle 50, ausgebildet. Zusätzlich kann die dritte Eingangsöffnung 972 zur Durchführung und/oder zum Anbinden und/oder Verbinden der ersten und/oder dritten und/oder vierten Eingangswelle 132, 92, 94 ausgebildet sein. In der dritten Eingangsöffnung 972 ist der Antrieb 52, insbesondere die Antriebswelle 50, und/oder die erste und/oder dritte und/oder vierte Eingangswelle 132, 92, 94 angeordnet. Im Speziellen erstrecken sich der Antrieb 52, insbesondere die Antriebswelle 50, und/oder die erste und/oder dritte und/oder vierte Eingangswelle 132, 92, 94 durch die dritte Eingangsöffnung 972. Zusätzlich kann die eingangsseitige Gehäusewand 968 des zweiten Gehäusemoduls 904 eine vierte Eingangsöffnung 974 aufweisen. Die vierte Eingangsöffnung 974 kann zur Durchführung und/oder zum Anbinden und/oder Verbinden der Vorgelegewelle 96 ausgebildet sein. In der vierten Eingangsöffnung 974 der eingangsseitigen Gehäusewand 968 kann die Vorgelegewelle 96 angeordnet sein. Im Speziellen kann sich die Vorgelegewelle 96 durch die vierte Eingangsöffnung 974 erstrecken.

Die ausgangsseitige Gehäusewand 970 des zweiten Gehäusemoduls 904 umfasst eine vierte Ausgangsöffnung 974. Die vierte Ausgangsöffnung 974 ist zur Durchführung des Antriebs 52 ausgebildet. Zusätzlich kann die vierte Ausgangsöffnung 974 zum Anbinden und/oder Verbinden der ersten Eingangswelle 132 ausgebildet sein. In der vierten Ausgangsöffnung 974 ist der Antrieb 52, insbesondere die Antriebswelle 50, und/oder die erste Eingangswelle 132 angeordnet. Im Speziellen erstreckt sich der Antrieb 52, insbesondere die Antriebswelle 50, und/oder die erste Eingangswelle 132 durch die fünfte Ausgangsöffnung 974.

Zusätzlich kann die ausgangsseitige Gehäusewand 970 eine fünfte Ausgangsöffnung 976 aufweisen. Die fünfte Ausgangsöffnung 976 kann zur Durchführung und/oder zum Anbinden und/oder Verbinden des Abtriebs 54 ausgebildet sein. In der fünften Ausgangsöffnung 976 kann der Abtrieb 54, insbesondere die Abtriebswelle 60, angeordnet sein. Im Speziellen kann sich der Abtrieb 54, insbesondere die Abtriebswelle 60, durch die fünfte Ausgangsöffnung 976 erstrecken. Das dritte Gehäusemodul 906 weist eine eingangsseitige Gehäusewand 978 auf. Das dritte Gehäusemodul 906 weist eine ausgangsseitige Gehäusewand 982 auf.

Die eingangsseitige Gehäusewand 978 des dritten Gehäusemoduls 906 umfasst eine fünfte Eingangsöffnung 980. Die fünfte Eingangsöffnung 980 ist zur Durchführung und/oder zum Anbinden und/oder Verbinden des Antriebs 52, insbesondere der Antriebswelle 50, ausgebildet. Die fünfte Eingangsöffnung 980 kann zur Durchführung und/oder zum Anbinden und/oder Verbinden der ersten Eingangswelle 132 ausgebildet. In der fünften Eingangsöffnung 980 ist der Antrieb 52, insbesondere die Antriebswelle 50, und/oder die erste Eingangswelle 132 angeordnet. Im Speziellen erstrecken sich der Antrieb 52, insbesondere der Antriebswelle 50, und/oder die erste Eingangswelle 132 durch die fünfte Eingangsöffnung 980. Zusätzlich kann die ausgangsseitige Gehäusewand 982 des dritten Gehäusemoduls 906 eine sechste Ausgangsöffnung 984 aufweisen. Die sechste Ausgangsöffnung 984 ist zur Durchführung und/oder zum Anbinden und/oder Verbinden des Antriebs 52, insbesondere der Antriebswelle 50, mit dem ersten Leistungsausgang 46 ausgebildet. In der sechsten Ausgangsöffnung 984 ist der Antrieb 52, insbesondere die Antriebswelle 50, angeordnet. Im Speziellen erstreckt sich der Antrieb 52, insbesondere die Antriebswelle 50, durch die sechste Ausgangsöffnung 984.

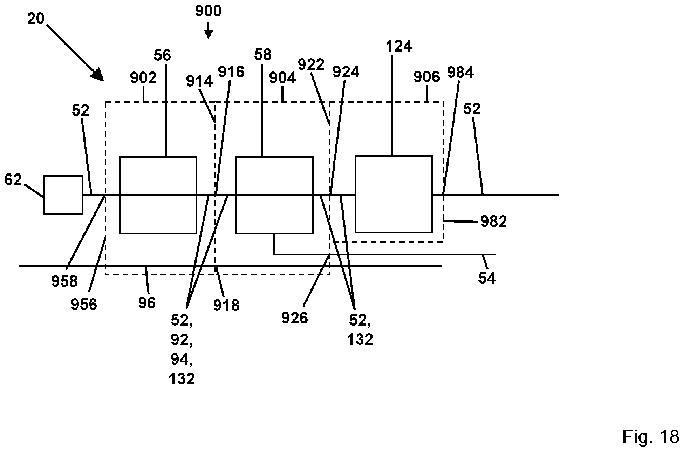

Figur 18 zeigt eine schematische Darstellung eines zweiten Ausführungsbeispiel einer erfindungsgemässen Getriebegehäuseanordnung 900. Die in Figur 18 gezeigte Getriebegehäuseanordnung 900 kann die in den Figuren 1 bis 17 gezeigte Antriebsvorrichtung 20 oder Komponenten der erfindungsgemässen Antriebsvorrichtung 20 umfassen, sodass im Folgenden lediglich auf Details und/oder Unterschiede eingegangen wird. Die in Figur 18 gezeigte Getriebegehäuseanordnung 900 entspricht im Wesentlichen der in Figur 17 gezeigten Getriebegehäuseanordnung 900, sodass im Folgenden lediglich auf Details und/oder Unterschiede eingegangen wird. Die in den Figuren 1 und 20 dargestellte Arbeitsmaschine 10 kann die in Figur 18 dargestellte Getriebegehäuseanordnung 900 umfassen.

Das erste und zweite und dritte Gehäusemodul 902, 904, 906 sind entlang oder in Richtung des Antriebs 52, insbesondere der Antriebswelle 50, angeordnet. Die Gehäusemodule sind in der Reihenfolge erstes und zweites und drittes Gehäusemodul 902, 904, 906 nacheinander und direkt benachbart angeordnet.

Alternativ sind die ausgangsseitige Gehäusewand 960 des ersten Gehäusemoduls 902 und die eingangsseitige Gehäusewand 968 des zweiten Gehäusemoduls 904 als erste gemeinsame Gehäusewand 914 des ersten und zweiten Gehäusemoduls 902, 908 ausgebildet. Die erste gemeinsame Gehäusewand 914 weist eine erste Durchgangsöffnung 916 auf. Die erste gemeinsame Gehäusewand 914 kann eine zweite Durchgangsöffnung 918 aufweisen. Die erste Durchgangsöffnung 916 ist zur Durchführung und/oder zum Anbinden und/oder Verbinden des Antriebs 52, insbesondere der Antriebswelle 50, und/oder der ersten und/oder dritten und/oder vierten Eingangswelle 132, 92, 94 ausgebildet. Die zweite Durchgangsöffnung 918 kann zur Durchführung und/oder zum Anbinden und/oder Verbinden der zweiten Eingangswelle 612 ausgebildet sein. In der ersten Durchgangsöffnung 916 ist der Antrieb 52, insbesondere die Antriebswelle 50, und/oder die erste und/oder dritte und/oder vierte Eingangswelle 132, 92, 94 angeordnet. Im Speziellen erstrecken sich der Antrieb 52, insbesondere die Antriebswelle 50, und/oder die erste und/oder dritte und/oder vierte Eingangswelle 132, 92, 94 durch die erste Durchgangsöffnung 912. In der zweiten Durchgangsöffnung 918 kann die Vorgelegewelle 106 angeordnet sein. Im Speziellen kann sich die Vorgelegewelle 106 durch die zweite Durchgangsöffnung 918 erstrecken.

Alternativ sind die ausgangsseitige Gehäusewand 970 des zweiten Gehäusemoduls 904 und die eingangsseitige Gehäusewand 978 des dritten Gehäusemoduls 906 sind als zweite gemeinsame Gehäusewand 922 des zweiten und dritten Gehäusemoduls 904, 906 ausgebildet. Die zweite gemeinsame Gehäusewand 922 weist eine dritte Durchgangsöffnung 924 auf. Die dritte Durchgangsöffnung 924 ist zur Durchführung und/oder zum Anbinden und/oder Verbinden des Antriebs 52, insbesondere der Antriebswelle 50, und/oder der ersten Eingangswelle 132 ausgebildet. In der dritten Durchgangsöffnung 924 kann der Antrieb 52, insbesondere der Antriebswelle 50, und/oder die erste Eingangswelle 132 angeordnet sein. Im Speziellen erstrecken sich der Antrieb 52, insbesondere die Antriebswelle 50, und/oder die erste Eingangswelle 132 durch die dritte Durchgangsöffnung 924.

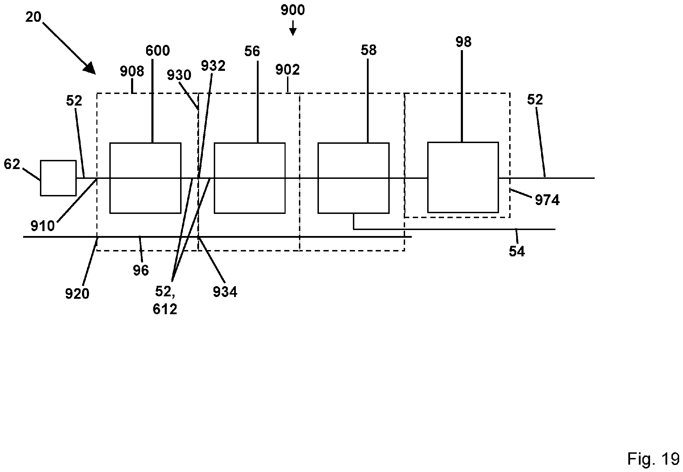

Figur 19 zeigt eine schematische Darstellung eines dritten Ausführungsbeispiel einer erfindungsgemässen Getriebegehäuseanordnung 900. Die in Figur 19 gezeigte Getriebegehäuseanordnung 900 kann die in den Figuren 1 bis 18 gezeigte Antriebsvorrichtung 20 oder Komponenten der erfindungsgemässen Antriebsvorrichtung 20 umfassen, sodass im Folgenden lediglich auf Details und/oder Unterschiede eingegangen wird. Die in Figur 19 gezeigte Getriebegehäuseanordnung 900 entspricht im Wesentlichen der in den Figuren 17 und 18 gezeigten Getriebegehäuseanordnung 900, sodass im Folgenden lediglich auf Details und/oder Unterschiede eingegangen wird. Die in den Figuren 1 und 20 dargestellte Arbeitsmaschine 10 kann die in Figur 19 dargestellte Getriebegehäuseanordnung 900 umfassen.

Das erste und zweite und dritte und vierte Gehäusemodul 902, 904, 906, 908 sind entlang oder in Richtung des Antriebs 52, insbesondere der Antriebswelle 50, angeordnet. Die Gehäusemodule sind in der Reihenfolge viertes und erstes und zweites und drittes Gehäusemodul 908, 902, 904, 906 nacheinander und direkt benachbart angeordnet.

Die ausgangsseitige Gehäusewand 950 des vierten Gehäusemoduls 908 und die eingangsseitige Gehäusewand 956 des ersten Gehäusemoduls 902 sind als dritte gemeinsame Gehäusewand 930 des ersten und vierten Gehäusemoduls 902, 908 ausgebildet. Die erste gemeinsame Gehäusewand 930 kann eine vierte Durchgangsöffnung 932 aufweisen. Die erste gemeinsame Gehäusewand 930 kann eine fünfte Durchgangsöffnung 934 aufweisen. In der vierten Durchgangsöffnung 932 sind der Antrieb 52, insbesondere die Antriebswelle 50, und/oder die zweite Eingangswelle 612 angeordnet. Im Speziellen erstrecken sich der Antrieb 52, insbesondere die Antriebswelle 50, und/oder die zweite Eingangswelle 612 durch die vierte Durchgangsöffnung 932. In der fünften Durchgangsöffnung 934 kann die Vorgelegewelle 106 angeordnet sein. Im Speziellen kann sich die Vorgelegewelle 106 durch die fünfte Durchgangsöffnung 934 erstrecken.

Vorteilhafterweise kann die Gehäuseanordnung dadurch auf einfache Art und Weise anbindbar sein und/oder modular aufgebaut sein.

Figur 20 zeigt eine detaillierte schematische Darstellung eines weiteren Ausführungsbeispiels der erfindungsgemässen Arbeitsmaschine 10 mit einer erfindungsgemässen Getriebegehäuseanordnung 900. Die in Figur 20 gezeigte Getriebegehäuseanordnung 900 kann die in den Figuren 1 bis 19 gezeigte Antriebsvorrichtung 20 oder Komponenten der erfindungsgemässen Antriebsvorrichtung 20 umfassen, sodass im Folgenden lediglich auf Details und/oder Unterschiede eingegangen wird. Die in Figur 20 gezeigte Getriebegehäuseanordnung 900 entspricht im Wesentlichen der in den Figuren 17 bis 19 gezeigten Getriebegehäuseanordnung 900, sodass im Folgenden lediglich auf Details und/oder Unterschiede eingegangen wird. Die in den Figuren 1 dargestellte Arbeitsmaschine 10 kann die in Figur 20 dargestellte Getriebegehäuseanordnung 900 umfassen.

Figur 20 zeigt schematisch zwei Rahmenelemente 990, insbesondere ein erstes und zweites Rahmenelement 992, 994, der Arbeitsmaschine 10. Die Getriebegehäuseanordnung 900, insbesondere das erste und zweite und dritte und vierte Gehäusemodul 902, 904, 906, 908, sind an, insbesondere zwischen, den zwei Rahmenelementen 990, insbesondere dem ersten und zweiten Rahmenelement 992, 994, angeordnet. Die Rahmenelemente 990, 992, 994 können an, insbesondere zwischen oder unmittelbar benachbart zu, dem ersten und zweiten Differenzialgetriebe 30, 32 angeordnet sein. Der Motor 62 kann an, insbesondere auf oder zwischen den zwei Rahmenelementen 990, insbesondere dem ersten und zweiten Rahmenelement 992, 994, angeordnet sein. Die Getriebegehäuseanordnung 900, insbesondere das erste und zweite und dritte und vierte Gehäusemodul 902, 904, 906, 908, sind entlang einer Längsachse 996 der Arbeitsmaschine 10 angeordnet. Der Antrieb 52, insbesondere die Antriebswelle 50, und die Längsachse 996 der Arbeitsmaschine 10 können identisch oder parallel sein.

## Patentansprüche

1. Antriebsvorrichtung für eine Arbeitsmaschine (10) oder eine Getriebegehäuseanordnung (900), umfassend:
einen Antrieb (52), und
einen Abtrieb (54), und
einen ersten und zweiten Variator (70, 74), und
eine erste Übersetzungseinheit (56), die als ein Planetenkoppelgetriebe (300) mit einer ersten und zweiten Eingangsseite (72, 78) und einer ersten und zweiten Ausgangsseite (82, 84) ausgebildet ist,
wobei der erste Variator (70) mit dem Antrieb (52) verbindbar oder verbunden ist, und der zweite Variator (74) mit der zweiten Eingangsseite (78) verbunden ist,
und die Antriebsvorrichtung (20) eine zweite Übersetzungseinheit (58) mit einer dritten und vierten Eingangsseite (86, 88) und mindestens einer dritten Ausgangsseite (90) umfasst,
**dadurch gekennzeichnet, dass**
die erste Ausgangsseite (82) mit der dritten Eingangsseite (86) und/oder die zweite Ausgangsseite (84) mit der vierten Eingangsseite (88) verbindbar ist, und die zweite Übersetzungseinheit (58), insbesondere die dritte Ausgangsseite (90), mit dem Abtrieb (58) verbindbar ist.

2. Antriebsvorrichtung nach Anspruch 1, **dadurch gekennzeichnet, dass** die erste Übersetzungseinheit (56), insbesondere das Planetenkoppelgetriebe (300), zwei verschiedenen Standübersetzungen aufweist.

3. Antriebsvorrichtung nach mindestens einem der vorangehenden Ansprüche, **dadurch gekennzeichnet, dass** die zweite Übersetzungseinheit (58) eine erste Stirnradstufe (306) und/oder eine zweite Stirnradstufe (314) und/oder ein drittes Planetengetriebe (614), und mindestens ein erstes und zweites Schaltelement (308, 310) umfasst.

4. Antriebsvorrichtung nach mindestens einem der vorangehenden Ansprüche, **dadurch gekennzeichnet, dass** die Antriebsvorrichtung (20) eine dritte Übersetzungseinheit (124) umfasst, und die dritte Übersetzungseinheit (124) eine fünfte und sechste Eingangsseite (126, 128) und eine fünfte Ausgangsseite (130) aufweist, und/oder die dritte Übersetzungseinheit (124) mit dem Antrieb (52) und mit der ersten Übersetzungseinheit (56) verbindbar ist.

5. Antriebsvorrichtung nach mindestens einem der vorangehenden Ansprüche, **dadurch gekennzeichnet, dass** die Antriebsvorrichtung (20) eine vierte Übersetzungseinheit (600) umfasst, und die vierte Übersetzungseinheit (600) mindestens eine siebte Eingangsseite (602) und mindestens eine sechste Ausgangsseite (604) aufweist, und/oder die vierte Übersetzungseinheit (600) mit der ersten Übersetzungseinheit (56) verbindbar ist, und/oder die vierte Übersetzungseinheit (600) mit einer Vorgelegewelle (96) verbindbar ist.

6. Antriebsvorrichtung mindestens einem der vorangehenden Ansprüche, **dadurch gekennzeichnet, dass** der erste Variator (70) über den oder durch den Antrieb (52) und ein siebtes Schaltelement (504) mit der ersten Eingangsseite (72) verbindbar ist.

7. Antriebsvorrichtung nach mindestens einem der vorangehenden Ansprüche, **dadurch gekennzeichnet, dass** der erste Variator (70) als ein erster Elektromotor (500) und der zweite Variator (74) als ein zweiter Elektromotor (502) ausgebildet sind, oder der erste und zweite Variator (70, 74) als Hydrostat (700, 702) ausgebildet sind.

8. Antriebsvorrichtung nach mindestens einem der vorangehenden Ansprüche, **dadurch gekennzeichnet, dass** die Antriebsvorrichtung (20) einen Motor (62) umfasst, und/oder der Motor (62) über den oder durch den Antrieb (52) mit der ersten Eingangsseite (72) und dem ersten Variator (70) verbunden ist, und/oder der Motor (62) über den oder durch den Antrieb (52) mit der fünften und sechsten Eingangsseite (126, 128) und dem ersten Variator (70) verbunden ist.

9. Antriebsvorrichtung nach mindestens einem der vorangehenden Ansprüche, **dadurch gekennzeichnet, dass** die erste und/oder zweite und/oder dritte und/oder vierte Übersetzungseinheit (56, 58, 124, 600) einen Durchgang (116) für den Antrieb (52) aufweisen.

10. Antriebsvorrichtung nach mindestens einem der vorangehenden Ansprüche, **dadurch gekennzeichnet, dass** der Motor (62) und/oder der erste Variator (70) mit einem ersten Leistungsausgang (46) verbindbar oder verbunden ist.

11. Getriebegehäuseanordnung mit einer Antriebsvorrichtung nach einem der Ansprüche 1 bis 10, **dadurch gekennzeichnet, dass** die Getriebegehäuseanordnung (900) ein erstes Gehäusemodul (902) mit der ersten Übersetzungseinheit (56) und ein zweites Gehäusemodul (904) mit der zweiten Übersetzungseinheit (58) umfasst, und das erste und zweite Gehäusemodul (56, 58) entlang des Antriebs (52) angeordnet sind.

12. Getriebegehäuseanordnung nach Anspruch 11, **dadurch gekennzeichnet, dass** die Getriebegehäuseanordnung (900) ein drittes Gehäusemodul (906) mit der dritten Übersetzungseinheit (124) umfasst, und das erste und zweite und dritte Gehäusemodul (56, 58, 124) entlang des Antriebs (52) angeordnet sind.

13. Getriebegehäuseanordnung nach Anspruch 11 oder 12, **dadurch gekennzeichnet, dass** die Getriebegehäuseanordnung (900) ein viertes Gehäusemodul (908) mit der vierten Übersetzungseinheit (600) umfasst, und das erste und zweite und dritte und vierte Gehäusemodul (56, 58, 124, 600) entlang des Antriebs (52) angeordnet sind.

14. Arbeitsmaschine mit einer Antriebsvorrichtung (20) nach Anspruch 1 bis 10 oder mit einer Getriebegehäuseanordnung (900) nach Anspruch 11 bis 13.

15. Arbeitsmaschine nach Anspruch 14, **dadurch gekennzeichnet, dass** die Arbeitsmaschine (10) zwei Rahmenelemente (990, 992, 994) umfasst, wobei die Antriebsvorrichtung (20), insbesondere die Getriebegehäuseanordnung (900), zumindest teilweise an den Rahmenelementen (990, 992, 994) angeordnet ist.
